**Europäisches Patentamt**

**European Patent Office**

**Office européen des brevets**

(19)

(11) **EP 1 178 436 A2**

(12) **EUROPEAN PATENT APPLICATION**

(43) Date of publication:
06.02.2002 Bulletin 2002/06

(51) Int Cl.7: **G06T 7/00**

(21) Application number: 01120401.3

(22) Date of filing: 07.04.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **12.04.1999 JP 13902199**
**20.01.2000 JP 2000014170**

(62) Document number(s) of the earlier application(s) in accordance with Art. 76 EPC:
**00302988.1 / 1 045 341**

(71) Applicant: **FUJITSU LIMITED**
**Kawasaki-shi, Kanagawa 211-8588 (JP)**

(72) Inventors:
• **Kawakami, Susumu**
**Nakahara, Kawasakishi,**
**Kanagawa 211-8588 (JP)**
• **Matsuoka, Masahiro**
**Nakahara, Kawasakishi,**
**Kanagawa 211-8588 (JP)**
• **Okamoto, Hiroaki**
**Nakahara, Kawasakishi,**
**Kanagawa 211-8588 (JP)**
• **Hosogi, Shinya**
**Nakahara, Kawasakishi,**
**Kanagawa 211-8588 (JP)**

(74) Representative: **Fenlon, Christine Lesley et al**
**Haseltine Lake & Co., Imperial House, 15-19 Kingsway**
**London WC2B 6UD (GB)**

Remarks:
This application was filed on 27 - 08 - 2001 as a divisional application to the application mentioned under INID code 62.

(54) **Image measurement method, image measurement apparatus and image measurement program storage medium**

(57) Image measurement apparatus comprises a parameter setting unit for setting up in a voting space parameter coordinates defined by a physical quantity indexing a superposing time in which a measuring plane, including an arbitrary measuring point appearing on an image obtained through viewing a predetermined measurement space from a predetermined observation point therein, is superposed on the observation point, and an azimuth $n_s$ of the measuring plane, in a moving continuous state wherein it is expected that a movement of the said measuring point is continued in a direction identical to a moving direction relative to the observation point between two different measuring times on the measuring point and at a velocity identical to a moving velocity between said two measuring times; a motion parallax operating unit for determining a motion parallax $\tau$, between two measuring positions $P_0$ and $P_1$ at the two measuring times on the measuring point in accordance with a measuring position $P_0$ at one measuring time of said two measuring times on said measuring point, a position $P_{inf}$ of the measuring point after an infinite time elapses in the moving continuous state, and the coordinates in the voting space; a response intensity operating unit for determining a response intensity associated with the motion parallax $\tau$ of the measuring point in accordance with two images obtained through viewing the measurement space from the observation point at the two measuring times; and a voting unit for voting the response intensity determined in said response intensity operating unit for the coordinates in the voting space. The motion parallax operating unit, response intensity operating unit, and voting unit perform operations a plurality of number of times on a plurality of measuring points in the measurement space, while a value of the parameter is altered in said parameter setting unit.

# Fig.111(A)

| SCAN UNIT FOR PIXEL No.i | ~502 | SCAN UNIT FOR ELEMENT No.j | ~503 |

504 ~ $_iP_0$ OUTPUT UNIT    506 ~ $_nt_{cj}$ OUTPUT UNIT    $n_{sj}$ OUTPUT UNIT ~505

$_iP_0$    $_nt_{cj}$    $n_{sj}$

501

$P_{inf}$ SET UNIT
($P_{inf}$=v)

$P_{inf}$ →

$_{ij}\tau$ TABLE PRODUCING UNIT ~507

# Fig.111(B)

552    553

SCAN UNIT FOR PIXEL No.i    SCAN UNIT FOR ELEMENT No.j

557    558

554    i    i    555    j

CYLINDRICAL
ARRANGEMENT
VOTING UNIT

UNIT FOR CUTTING
AND BRINGING DOWN
IMAGE ON LOCAL AREA
TAKING $_iP_0$ AS CENTER

$_{ij}\tau$ TABLE

$_{ij}\tau$    556

551

CAMERA

IMAGE ON LOCAL
AREA AT TIME $t_0$

IMAGE ON LOCAL
AREA AT TIME $t_1$

MOTION PARALLAX
DETECTION UNIT

INTENSITY

VOTING

$_nt_c$

$_nt_{cj}$

$n_{sj}$

PEAK EXTRACTION UNIT

$n_{s0}$

$_nt_{c0}$

**Description**

BACKGROUND OF THE INVENTION

Field of the Invention

The present invention relates to an image measurement method of measuring positions and azimuths of a point and a surface, which appear on an image, in space, an image measurement apparatus for implementing the measurement method, and an image measurement program storage medium storing an image measurement program for implementing the image measurement.

Description of the Related Art

In order to move a mobile robot, a motorcar, an airplane, etc. to meet surroundings, there is a need to measure surroundings on a three-dimensional basis from a dynamic picture image on a camera and the like. Now, let us consider as to how a person performs a three-dimensional measurement through a visual sensation (exactly to say, a movement vision) in the event that a person lands an airplane and a person walks.

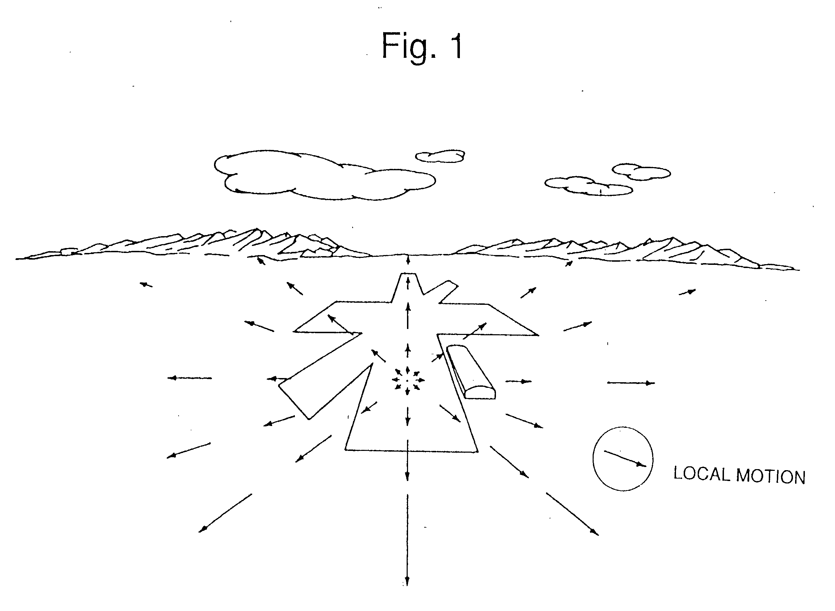

Fig. 1 shows an optical flow pattern which is reflected in the retinas of a pilot. The pilot exactly lands an airplane in accordance with this pattern through perceiving a slope (three-dimensional azimuth) of a runway and information as to such a matter that "continuous traveling of the airplane brings about an arrival at the runway after what second". That is, the pilot measures a three-dimensional azimuth of a plane (the runway) and a "time up to crossing the plane" to land the airplane.

Next, let us consider a case where we walk a passage. When a person walks in a direction that the person runs against a wall of the passage, the optical flow pattern as mentioned above is reflected in the retinas of the person. A time up to going across the wall, that is, a time up to running against the wall, is measured from the pattern, and the person moves in a direction to avoid the wall in accordance with a three-dimensional azimuth, which is simultaneously measured with the time up to running against the wall. On the other hand, in the event that the person walks in parallel to the wall, it is measured that the person does not run against to the wall always, in other words, the person runs against the wall after the infinite time elapses, and thus the person continues to walk in that direction. In this manner, the person can exactly avoid the wall and walk even if it is a curved passage. Also in the event that a person walks in an office, in a similar fashion, the person can avoid an "object constituted of a plane", such as a white board, a desk, a locker. Further, in the event that a person drives a motor car, the person performs driving on a high way, putting a car into the garage, and the like through performing the similar "three-dimensional measurement on a plane".

In this manner, our visual sensation makes it possible to perform an exact movement through a measurement of three-dimensional geometric information (a three-dimensional azimuth on a plane, and a time up to crossing the plane) of an object constituting of a plane (there are a lot of such objects). Also with respect to a curved object, it is possible to spatially recognize the curved object through a measurement of three-dimensional geometric information of a "group of planes contacting to the curved object".

If such "three-dimensional geometric information on a plane" can be measured from an image, it is possible to move a mobile robot, a motorcar, an airplane, etc. so as to meet surroundings or so as to avoid the obstacles.

With respect to the respective velocity elements of the optical flow pattern shown in Fig. 1, that is, a motion (a local motion) on a local area, there is reported a technology of measuring those elements from a dynamic picture image (Japanese Patent Laid Open Gazettes Hei. 05-165956, Hei. 06-165957, Hei. 06-044364, and Hei. 09-081369; "A method of performing a two-dimensional correlation and a convolution along the $\rho$ coordinates on the Hough plane on a one-dimensional basis" by Kawakami, S. and Okamoto, H., SINNGAKUGIHOU, vol. IE96-19, pp. 31-38, 1996; and "A cell model for the detection of local image motion on the magnocellular pathway of the visual cortex, Kawakami, S. and Okamoto, H., Vision Research, vol. 36, pp. 117-147, 1996).

However, there is no report as to a method of measuring "three-dimensional geometric information on a plane (a three-dimensional azimuth on a plane, a time up to crossing the plane, and a shortest distance to the plane)" through unifying the optical flow pattern.

Further, there is reported a technology of measuring three-dimensional geometric information (a three-dimensional azimuth on those elements, the shortest distance on those elements, etc.) as to a straight line and a column in a space from a dynamic picture image (Japanese Patent Publications Hei. 03-52106, Hei. 06-14356, Hei. 06-14335, and Hei. 06-10603, and Japanese Patent Laid Open Gazette Hei. 02-816037; "A measurement of three-dimensional azimuth and distance of a line segment by a spherical mapping" by Inamoto, Y., et al., a society for the study of COMPUTER VISION, vol. 45-2, pp. 1-8, 1986; "Implementation of monocular stereoscopic vision with bird-mimicry" by Science Asahi, June, pp. 28-33, 1987; Measurement in three dimensions by motion stereo and spherical mapping by Morita, T., et al., CVPR, pp. 422-428, 1989; Motion stereo vision system" by Inamoto, Y., Proceeding of '91 ISART, pp.

239-246, 1991; and Section 4.2.2.1, "Report of Sho. 60 Utility Nuclear Electric Power Generation Institution Robot Development Contract Research (Advanced Robot Technology Research Association)").

However, there is no report as to a method of measuring three-dimensional geometric information on a plane.

SUMMARY OF THE INVENTION

In view of the foregoing, it is an object of the present invention to provide a technology of measuring three-dimensional geometric information on a plane and position information on a point from an image such as the optical flow pattern. Incidentally, as will be described later, a measuring of the three-dimensional geometric information includes a measurement of the shortest distance to a plane.

It is another object of the present invention to provide a technology of measuring three-dimensional geometric information on a plane from a stereo image.

To achieve the above-mentioned objects, the present invention provides, of image measurement methods, a first image measurement method comprising :

a first step of setting up coordinates in a voting space in form of a parameter, said coordinates being defined by a physical quantity indexing a superposing time in which a measuring plane, including an arbitrary measuring point appearing on an image obtained through viewing a predetermined measurement space from a predetermined observation point inside the measurement space, is superposed on the observation point, and an azimuth $n_s$ of the measuring plane, in a moving continuous state wherein it is expected that a movement of the measuring point appearing on an image obtained through viewing the measurement space from the observation point inside the measurement space, said measuring point being relative with respect to the observation point, is continued in a direction identical to a moving direction relative with respect to the observation point between mutually different two measuring times on the measuring point and at a velocity identical to a moving velocity between said two measuring times;

a second step of determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ of the measuring point after an infinite time elapses in the moving continuous state, and the coordinates in the voting space, which is set up in the first step;

a third step of determining a response intensity associated with the motion parallax $\tau$ of the measuring point in accordance with two images obtained through viewing the measurement space from the observation point at the two measuring times; and

a fourth step of voting the response intensity determined in the third step for the coordinates in the voting space, which is set up in the first step,

wherein the second step to the fourth step, of the first to fourth steps, are effected by a plurality of number of times on a plurality of measuring points in the measurement space, while a value of the parameter is altered in the first step.

To achieve the above-mentioned objects, the present invention provides, of image measurement methods, a second image measurement method comprising:

a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second step of setting up coordinates in a voting space according to the first parameter in form of a second parameter, said coordinates being defined by a physical quantity indexing a superposing time in which a measuring plane including the measuring point is superposed on the observation point, and an azimuth $n_s$ of the measuring plane;

a third step of determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ set up in the first step, and the coordinates in the voting space, which is set up in the second step;

a fourth step of determining a response intensity associated with the motion parallax $\tau$ of the measuring point in

4

accordance with two images obtained through viewing the measurement space from the observation point at the two measuring times; and

a fifth step of voting the response intensity determined in the fourth step for the coordinates in the voting space according to the first parameter, said coordinates being set up in the second step,

wherein the third step to the fifth step, of the first to fifth steps, are effected by a plurality of number of times on a plurality of measuring points in the measurement space, while values of the parameters are altered in the first step and the second step.

To achieve the above-mentioned objects, the present invention provides, of image measurement methods, a third image measurement method comprising:

a first step of setting up coordinates in a voting space in form of a parameter, said coordinates being defined by a physical quantity indexing a shortest distance between a predetermined observation point inside a predetermined measurement space for observation of the measurement space and a measuring plane, including an arbitrary measuring point appearing on an image obtained through viewing the measurement space from the observation point inside the measurement space, at one measuring time of mutually different two measuring times, and an azimuth $n_s$ of the measuring plane;

a second step of determining a motion parallax $\tau$, which is a positional difference between two measuring positions $p_0$ and $p_1$ at the two measuring times on the measuring point, in accordance with a measuring position $p_0$ atone measuring time of the two measuring times on the measuring point, a position $p_{inf}$ of the measuring point after an infinite time elapses in a moving continuous state wherein it is expected that a movement of the measuring point is continued in a direction identical to a moving direction relative with respect to the observation point between mutually different two measuring times and at a velocity identical to a moving velocity between said two measuring times, and the coordinates in the voting space, which is set up in the first step;

a third step of determining a response intensity associated with the motion parallax $\tau$ of the measuring point in accordance with two images obtained through viewing the measurement space from the observation point at the two measuring times; and

a fourth step of voting the response intensity determined in the third step for the coordinates in the voting space, which is set up in the first step,

wherein the second step to the fourth step, of the first to fourth steps, are effected by a plurality of number of times on a plurality of measuring points in the measurement space, while a value of the parameter is altered in the first step.

To achieve the above-mentioned objects, the present invention provides, of image measurement methods, a fourth image measurement method comprising:

a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second step of setting up coordinates in a voting space according to the first parameter in form of a second parameter, said coordinates being defined by a physical quantity indexing a shortest distance from the observation point to a measuring plane including the measuring point at one measuring time of the two measuring times, and an azimuth $n_s$ of the measuring plane;

a third step of determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ set up in the first step, and the coordinates in the voting space, which is set up in the second step;

a fourth step of determining a response intensity associated with the motion parallax $\tau$ of the measuring point in accordance with two images obtained through viewing the measurement space from the observation point at the two measuring times; and

a fifth step of voting the response intensity determined in the fourth step for the coordinates in the voting space according to the first parameter, said coordinates being set up in the second step,

wherein the third step to the fifth step, of the first to fifth steps, are effected by a plurality of number of times on a plurality of measuring points in the measurement space, while values of the parameters are altered in the first step and the second step.

To achieve the above-mentioned objects, the present invention provides, of image measurement methods, a fifth image measurement method comprising:

a first step of setting up in form of a parameter a motion parallax $\tau$, which is a positional difference between two measuring positions $p_0$ and $p_1$ at mutually different two measuring times, of an arbitrary measuring point appearing on an image obtained through viewing a predetermined measurement space from a predetermined observation point inside the measurement space;

a second step of determining coordinates in a voting space, said coordinates being defined by a physical quantity indexing a superposing time in which a measuring plane, including the measuring point, is superposed on the observation point, and an azimuth $n_s$ of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times, in accordance with a measuring position $p_0$ at one measuring time of said two measuring times on said measuring point, a position $p_{inf}$ of the measuring point after an infinite time elapses in the moving continuous state, and the motion parallax $\tau$ set up in the first step;

a third step of determining a response intensity associated with the motion parallax $\tau$ of the measuring point, which is set up in the first step, in accordance with two images obtained through viewing the measurement space from the observation point at the two measuring times; and

a fourth step of voting the response intensity determined in the third step for the coordinates in the voting space, said coordinates being set up in the second step,

wherein the second step to the fourth step, of the first to fourth steps, are effected by a plurality of number of times on a plurality of measuring points in the measurement space, while a value of the parameter is altered in the first step.

To achieve the above-mentioned objects, the present invention provides, of image measurement methods, a sixth image measurement method comprising:

a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second step of setting up in form of a second parameter a motion parallax $\tau$, which is a positional difference between two measuring positions $p_0$ and $p_1$ at the two measuring times on the measuring point;

a third step of determining coordinates in a voting space according to the first parameter, said coordinates being defined by a physical quantity indexing a superposing time in which a measuring plane, including the measuring point, is superposed on the observation point, and an azimuth $n_s$ of the measuring plane, in the moving continuous state, in accordance with a measuring position $p_0$ at one measuring time of said two measuring times on the measuring point, a position $p_{inf}$ set up in the first step, and the motion parallax $\tau$ set up in the second step;

a fourth step of determining a response intensity associated with the motion parallax $\tau$ of the measuring point, which is set up in the second step, in accordance with two images obtained through viewing the measurement space from the observation point at the two measuring times; and

a fifth step of voting the response intensity determined in the fourth step for the coordinates in the voting space according to the first parameter, said coordinates being set up in the third step,

wherein the third step to the fifth step, of the first to fifth steps, are effected by a plurality of number of times on a plurality of measuring points in the measurement space, while values of the parameters are altered in the first step and the second step.

To achieve the above-mentioned objects, the present invention provides, of image measurement methods, a seventh image measurement method comprising : :

a first step of setting up in form of a parameter a motion parallax $\tau$, which is a positional difference between two measuring positions $p_0$ and $p_1$ at mutually different two measuring times on the measuring point, of an arbitrary measuring point appearing on an image obtained through viewing a predetermined measurement space from a predetermined observation point inside the measurement space;

a second step of determining coordinates in a voting space, said coordinates being defined by a physical quantity indexing a shortest distance from the observation point to a measuring plane including the measuring point at one measuring time of the two measuring times, and an azimuth $n_s$ of the measuring plane, in accordance with a measuring position $p_0$ at one measuring time of said two measuring times on said measuring point, a position $p_{inf}$ of the measuring point after an infinite time elapses in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times, and the motion parallax $\tau$ set up in the first step;

a third step of determining a response intensity associated with the motion parallax $\tau$ of the measuring point, which is set up in the first step, in accordance with two images obtained through viewing the measurement space from the observation point at the two measuring times; and

a fourth step of voting the response intensity determined in the third step for the coordinates in the voting space, said coordinates being set up in the second step,

wherein the second step to the fourth step, of the first to fourth steps, are effected by a plurality of number of times on a plurality of measuring points in the measurement space, while a value of the parameter is altered in the first step.

To achieve the above-mentioned objects, the present invention provides, of image measurement methods, an eighth image measurement method comprising:

a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second step of setting up in form of a second parameter a motion parallax $\tau$, which is a positional difference between two measuring positions $p_0$ and $p_1$ at the two measuring times on the measuring point;

a third step of determining coordinates in a voting space according to the first parameter, said coordinates being defined by a physical quantity indexing a shortest distance from the observation point to a measuring plane including the measuring point at one measuring time of the two measuring times, and an azimuth $n_s$ of the measuring plane, in the moving continuous state, in accordance with a measuring position $p_0$ at one measuring time of said two measuring times on the measuring point, a position $p_{inf}$ set up in the first step, and the motion parallax $\tau$ set up in the second step;

a fourth step of determining a response intensity associated with the motion parallax $\tau$ of the measuring point, which is set up in the second step, in accordance with two images obtained through viewing the measurement space from the observation point at the two measuring times; and

a fifth step of voting the response intensity determined in the fourth step for the coordinates in the voting space according to the first parameter, said coordinates being set up in the third step,

wherein the third step to the fifth step, of the first to fifth steps, are effected by a plurality of number of times on a plurality of measuring points in the measurement space, while values of the parameters are altered in the first step and the second step.

To achieve the above-mentioned objects, the present invention provides, of image measurement methods, a ninth image measurement method comprising:

a first step of determining a response intensity associated with a motion parallax, which is a positional difference between two measuring positions at mutually different two measuring times, of an arbitrary measuring point in a predetermined measurement space, in accordance with two images obtained through viewing the measurement space from a predetermined observation point at mutually different two measuring times; and

a second step of voting the response intensity determined in the first step for coordinates associated with the measuring point and the motion parallax in a voting space, said coordinates being defined by a physical quantity indexing a superposing time in which a measuring plane, including the measuring point, is superposed on the observation point, and an azimuth of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times;

wherein the first step and the second step are effected by a plurality of number of times on a plurality of measuring points in the measurement space.

In the ninth image measurement method, it is acceptable that said image measurement method further comprises a third step of determining an azimuth of a measuring plane including a plurality of measuring points joining a voting for a maximal point and/or a physical quantity indexing a superposing time in which the measuring plane is superposed on the observation point in such a manner that a maximal point wherein a value by said voting in the voting space offers a maximal value is determined.

To achieve the above-mentioned objects, the present invention provides, of image measurement methods, a tenth image measurement method comprising : :

a first step of setting up in form of a parameter a moving direction of an arbitrary measuring point appearing on an image obtained through viewing a predetermined measurement space from a predetermined observation point inside the measurement space, said moving direction being relative with respect to the observation point between mutually different two measuring times;

a second step of determining a response intensity associated with a motion parallax, which is a positional difference between two measuring positions at the two measuring times on the measuring point, in accordance with two images obtained through viewing the measurement space from the observation point at the two measuring times; and

a third step of voting the response intensity determined in the second step for coordinates associated with the measuring point and the motion parallax in a voting space according to the parameter set up in the first step, said coordinates being defined by a physical quantity indexing a superposing time in which a measuring plane, including the measuring point, is superposed on the observation point, and an azimuth of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times;

wherein the second step and the third step, of the first to third steps, are effected by a plurality of number of times on a plurality of measuring points in the measurement space, while a value of the parameter is altered in the first step.

In the tenth image measurement method, it is acceptable that said image measurement method further comprises a fourth step of determining a true moving direction relative to the observation point on the measuring point, and of determining an azimuth of a measuring plane including a plurality of measuring points joining a voting for a maximal point determined on a voting space associated with the true moving direction, and/or a physical quantity indexing a superposing time in which the measuring plane is superposed on the observation point, in such a manner that a maximal point wherein a value by a voting is determined on each voting space, and the voting space associated with the true moving direction is selected in accordance with information as to the maximal value on the maximal point.

To achieve the above-mentioned objects, the present invention provides, of image measurement methods, a eleventh image measurement method comprising :

a first step of determining a response intensity associated with a motion parallax, which is a positional difference between two measuring positions at mutually different two measuring times, of an arbitrary measuring point in a predetermined measurement space, in accordance with two images obtained through viewing the measurement space from a predetermined observation point at mutually different two measuring times; and

a second step of voting the response intensity determined in the first step for coordinates associated with the measuring point and the motion parallax in a voting space, said coordinates being defined by a physical quantity indexing a shortest distance from the observation point to a measuring plane, including the measuring point, at one measuring time of the two measuring times, and an azimuth of the measuring plane;

wherein the first step and the second step are effected by a plurality of number of times on a plurality of measuring points in the measurement space.

In the eleventh image measurement method, it is acceptable that said image measurement method further comprises a third step of determining an azimuth of a measuring plane including a plurality of measuring points joining a voting for a maximal point and/or a physical quantity indexing a shortest distance from the observation point to the measuring plane at one measuring time of the two measuring times in such a manner that a maximal point wherein a value by said voting offers a maximal value is determined in the voting space.

To achieve the above-mentioned objects, the present invention provides, of image measurement methods, a twelfth image measurement method comprising:

a first step of setting up in form of a parameter a moving direction of an arbitrary measuring point appearing on an image obtained through viewing a predetermined measurement space from a predetermined observation point inside the measurement space, said moving direction being relative with respect to the observation point between mutually different two measuring times;

a second step of determining a response intensity associated with a motion parallax, which is a positional difference between two measuring positions at the two measuring times on the measuring point, in accordance with two images obtained through viewing the measurement space from the observation point at the two measuring times; and

a third step of voting the response intensity determined in the second step for coordinates associated with the measuring point and the motion parallax in a voting space according to the parameter set up in the first step, said coordinates being defined by a physical quantity indexing a shortest distance from the observation point to the measuring plane at one measuring time of the two measuring times, including the measuring point, and an azimuth of the measuring plane;

wherein the second'step and the third step, of the first to third steps, are effected by a plurality of number of times on a plurality of measuring points in the measurement space, while a value of the parameter is altered in the first step.

In the twelfth image measurement method, it is acceptable that said image measurement method further comprises a fourth step of determining a true moving direction, and of determining an azimuth of a measuring plane including a plurality of measuring points joining a voting for a maximal point determined on a voting space associated with the true moving direction, and/or a shortest distance from the observation point to the measuring plane at one measuring time of the two measuring times, in such a manner that a maximal point wherein a value by said voting offers a maximal value is determined on each voting space, and a voting space associated with the true moving direction relative to the observation point on the measuring point is selected in accordance with information as to the maximal value on the maximal point.

An image measuring method of the present invention may be defined by alternative expressions as set forth below.

(1) An image measurement method of determining a three-dimensional azimuth $n_s$ of a plane and/or a normalized time $_n t_c$ up to crossing the plane, using a compound ratio $\{p_{inf} p_0 p_1 p_c\}$, which is determined by four positions $p_{inf}$, $p_0$, $p_1$, $p_c$, where $p_0$ and $p_1$ denote measuring positions at mutually different two measuring times, that is, the present time and the subsequent time, on an arbitrary measuring point appearing on an image, respectively, $p_{inf}$ denotes a position of the measuring point after an infinite time elapses, and $p_c$ denotes a position of the measuring point at a "time in which a plane including the measuring point crosses a camera center". Here, the normalized time $_n t_c$, which is expressed by the following equation, is a time wherein time $t_c$ is normalized by a time difference $\Delta t$,

$$_n t_c = t_c / \Delta t \qquad (a)$$

where $t_c$ denotes a time up to crossing the plane, and $\Delta t$ denotes a time between said two measuring times, that is, the present time and the subsequent time.

(2) An image measurement method according to paragraph (1), wherein the normalized time $_n t_c$ up to crossing the plane is determined in accordance with the following equation

$$_n t_c = \{p_{inf} p_0 p_1 p_c\} \qquad (b)$$

(2-1) An image measurement method according to paragraph (1), wherein with respect to a plurality of measuring points on an image, the position $P_c$ of the measuring point at a "time in which a plane including the measuring points crosses a camera center" is subjected to a polar transformation (or a duality transformation) to determine a three-dimensional azimuth $n_s$ of a plane in form of a cross point of the polar line thus obtained.

(2-2) An image measurement method according to paragraph (1), wherein the normalized time $_n t_c$ and the "positions $p_0$, $p_1$, $p_{inf}$ at three times" are determined, and the position $p_c$ of is computed using the formula (b).

This method is referred to as a compound ratio transformation, since the compound ratio $\{p_{inf}p_0p_1p_c\}$ is used.

(3) An image measurement method according to paragraph (1), wherein with respect to a plurality of measuring points on an image, the position $p_c$ of the measuring point at a "time in which a plane including the measuring points crosses a camera center" is determined through the polar transformation of the paragraph (2-1) to determine a three-dimensional azimuth $n_s$ of a plane in form of a cross point of the polar line subjected to the polar transformation as to those points.

(4) An image measurement method according to paragraph (3), wherein the following steps are executed to determine a three-dimensional azimuth $n_{s0}$ of a plane and/or a normalized time $_nt_{c0}$ up to crossing the plane.

Step 1: A normalized time parameter $_nt_c$ is arbitrarily set up, and the compound transformation in the paragraph (2-2) for the position $p_c$ is executed as to a plurality of measuring points to compute the position $p_c$.

Step 2: The positions are subjected to the polar transformation to draw the respective corresponding polar lines. The intensity of the polar line implies "brightness of the position $p_0$ on the image" , and the intensity is added in a place wherein a plurality of polar lines are intersected one another.

Step 3: Steps 1 and 2 are executed while the normalized time parameter $_nt_c$ is altered to determine a parameter value $_nt_{c0}$ in which a plurality of polar lines drawn in the step 2 intersect at one point. As the parameter value, the "normalized time $_nt_{c0}$ up to crossing the plane" is obtained. Further, as the coordinates of the cross point, the azimuth $n_{s0}$ of the plane is obtained.

(5) An image measurement method according to paragraph (4), wherein the polar line in the step 2 is drawn on a sphere in form of a large circle.

(5-1) An image measurement method according to paragraph (5), wherein the large circle in paragraph (5) is drawn through projection into the inner part of a circle on a plane.

(6) An image measurement method according to paragraph (4), wherein the polar line in the step 2 is drawn on a plane in form of a straight line.

(7) An image measurement method according to paragraphs (3) or (4), wherein a three-dimensional azimuth $n_s$ of a plane and/or a normalized time $_nt_c$ up to crossing the plane are determined in accordance with the following steps, without determining a moving direction $v$ (that is, the position $P_{inf}$ after an infinite time elapses).

Step 1: Arbitrarily set up a moving direction parameter $v$.

Step 2: Define a direction of the moving direction parameter $v$ as the "position $P_{inf}$ after an infinite time elapses".

Step 3: Execute paragraphs (3) or (4).

Step 4: Steps 1 to 3 are executed while the moving direction parameter $v$ is altered to determine a parameter value $v_0$ in which a plurality of polar lines drawn in the step 3 intersect at one point. This parameter value thus determined is a true moving direction $v_0$ . As the coordinates of the cross point, the azimuth $n_s$ of the plane and/or the normalized time $_nt_c$ up to crossing the plane is obtained.

(8) An image measurement method of determining a three-dimensional azimuth $n_s$ of a plane and/or a normalization shortest distance $_nd_s$ up to the plane, using formula (b) and formula (c), where $p_0$ and $p_1$ denote measuring positions at mutually different two measuring times, that is, the present time and the subsequent time, on an arbitrary measuring point appearing on an image, respectively, $p_{inf}$ denotes a position of the measuring point after an infinite time elapses, and $p_c$ denotes a position of the measuring point at a "time in which a plane including the measuring point crosses a camera center". Here, the normalization shortest distance $_nd_s$ , which is expressed by formula (d), is a distance wherein a distance $d_s$ is normalized by a distance $\Delta x$,

$$_nd_s={}_nt_c\,(n_s \cdot v) \tag{c}$$

$$_nd_s= d_s/\Delta x \tag{d}$$

where $d_s$ denotes a shortest distance up to the plane, and $\Delta x$ denotes a moving distance of a camera (or the plane) between the present time and the subsequent time. In formula (c), $v$ denotes a moving direction of the camera or the plane.

(9) An image measurement method according to paragraph (8), wherein the following steps are executed to determine a three-dimensional azimuth $n_{s0}$ of a plane and/or a normalization shortest distance ${}_nd_{s0}$ up to crossing the plane.

Step 1: A normalization shortest distance parameter ${}_nd_s$ is arbitrarily set up.

Step 2: An angle r between the moving direction v and the three-dimensional azimuth $n_s$ is arbitrarily set up, that is, the inner product $(n_s \cdot v)$ is arbitrarily set up in form of cos (r), and the normalized time parameter ${}_nt_c$ is computed in form of ${}_nd_s$ / cos (r) using formula (c).

Step 3: The compound transformation in the paragraph (2-2) for the position $p_c$ is executed as to a plurality of measuring points to compute the position $p_c$.

Step 4: Determine a point offering an angle r with respect to the moving direction on a polar line in which the positions are subjected to the polar transformation.

Step 5: Compute the points in step 4, while the angle r is altered, to draw a curve consisting of the points given in form of a group. The intensity of the curve implies "brightness of the position $p_0$ on the image", and the intensity is added in a place wherein a plurality of curves are intersected one another.

Step 6: Steps 1 to 5 are executed while the normalization shortest distance parameter ${}_nd_s$ is altered to determine a parameter value ${}_nd_{s0}$ in which a plurality of curves drawn in the step 5 intersect at one point. As the parameter value, the "normalization shortest distance ${}_nd_{s0}$ up to the plane" is obtained. Further, as the coordinates of the cross point, the azimuth $n_{s0}$ of the plane is obtained.

(10) An image measurement method according to paragraph (8), wherein the following steps are executed to determine a three-dimensional azimuth $n_{s0}$ of a plane and/or a normalization shortest distance ${}_nd_{s0}$ up to crossing the plane.

Step 1: A normalization shortest distance parameter ${}_nd_s$ is arbitrarily set up to compute parameter R as to the respective points on an image in accordance with formula (e) using a "simple ratio $(p_{inf}p_0\ p_1)$, which is determined by three positions $p_{inf}$, $p_0$, $p_1$ of a measuring point".

$$R= \cos^{-1} ({}_nd_s/ (p_{inf}p_0p_1) )\qquad\qquad(e)$$

Step 2: Draw a small circle R taking the "position $p_0$ at the present time" as the center. The intensity of the small circle implies "brightness of the position $p_0$ on the image", and the intensity is added in a place wherein a plurality of small circles are intersected one another.

Step 3: Steps 1 and 2 are executed while the normalization shortest distance parameter ${}_nd_s$ is altered to determine a parameter value ${}_nd_{s0}$ in which a plurality of small circles drawn in the step 2 intersect at one point. As the parameter value, the "normalization shortest distance ${}_nd_{s0}$ up to the plane" is obtained. Further, as the coordinates of the cross point, the azimuth $n_{s0}$ of the plane is obtained.

(11) An image measurement method according to paragraphs (9) and (10), wherein the curve in step 5 in paragraph (9) and the small circle in step 2 in paragraph (10) are drawn on a sphere.

(11-1) An image measurement method according to paragraph (11), wherein the curve or small circle in paragraph (11) is drawn through projection into the inner part of a circle on a plane.

(12) An image measurement method according to paragraph (9) and (10), wherein the curve in the step 5 and the small circle in step 2 in paragraph (10) are drawn on a plane through projection onto a plane.

(13) An image measurement method according to paragraphs (8), (9) or (10), wherein a three-dimensional azimuth $n_s$ of a plane and/or a normalization shortest distance ${}_nd_s$ up to crossing the plane are determined in accordance with the following steps, without determining a moving direction v (that is, the position $P_{inf}$ after an infinite time elapses).

Step 1: Arbitrarily set up a moving direction parameter v.

Step 2: Define a direction of the moving direction parameter v as the "position $P_{inf}$ after an infinite time elapses".

Step 3: Execute paragraphs (8), (9) or (10).

Step 4: Steps 1 to 3 are executed while the moving direction parameter v is altered to determine a parameter value $v_0$ in which curves (or small circles) drawn in the step 3 intersect at one point. This parameter value thus determined is a true moving direction $v_0$. As the coordinates of the cross point, the azimuth $n_s$ of the plane and/or the normalization shortest distance $_nd_s$ up to the plane is obtained.

(14) An image measurement method of determining a normalized distance $_nd_0$ between a camera center and a position of a point in a space in accordance with formula (f), using a simple ratio $(p_{inf}p_0 p_1)$, which is determined by three positions $p_{inf}$, $p_0$, $p_1$ of a measuring point, where $p_0$ and $p_1$ denote measuring positions at mutually different two measuring times, that is, the present time and the subsequent time, on an arbitrary measuring point appearing on an image, respectively, and $p_{inf}$ denotes a position of the measuring point after an infinite time elapses. Here, the normalized distance $_nd_0$, which is expressed by formula (g), is a distance wherein a distance $d_0$ is normalized by a distance $\Delta x$,

$$_nd_0 = (p_{inf}p_0p_1) \tag{f}$$

$$_nd_0 = d_0/\Delta x \tag{g}$$

where $d_0$ denotes a distance up to the point, and $\Delta x$ denotes a moving distance of a camera (or the plane) between the present time and the subsequent time.

(15) An image measurement method according to step 1 of paragraph (10), wherein a parameter R is computed in accordance with the following formula (h) using a "normalized point distance $_nd_0$ ".

$$R = \cos^{-1} (_nd_s/_nd_0) \tag{h}$$

(16) An image measurement method according to paragraphs (1) to (15), wherein the position at the subsequent time is replaced by a "positional difference (motion parallax) between the position at the present time and the position at the subsequent time".

(17) An image measurement method according to paragraphs (1) to (7), of determining a three-dimensional azimuth $n_s$ of a plane and/or a normalized distance $_nd_c$ up to crossing the plane in accordance with a stereo image, wherein the position $p_0$ at the present time, the position $p_1$ at the subsequent time, the position $p_{inf}$ after an infinite time elapses, the moving direction v, and the normalized time $_nt_c$ up to crossing the plane are replaced by a position $p_R$ on an image of a right camera, a position $p_L$ on an image of a left camera, a position $p_{axis}$ on an optical axis coupling the right camera to the left camera, an optical axis direction $a_{xis}$, and the "normalized distance $_nd_c$ up to crossing the plane in the optical axis direction", respectively. Here, the normalized distance $_nd_c$ is a distance wherein the distance $d_c$ up to crossing the plane in the optical axis direction is normalized by a distance $\Delta X_{LR}$ between the right camera and the left camera. It is acceptable that the right camera and the left camera are exchanged one another.

(18) An image measurement method according to paragraphs (8) to (13) and (15), of determining a three-dimensional azimuth $n_s$ of a plane and/or a normalization shortest distance $_nd_s$ up to the plane in accordance with a stereo image, wherein the position $p_0$ at the present time, the position $p_1$ at the subsequent time, the position $p_{inf}$ after an infinite time elapses, the moving direction v, and the normalization shortest distance $_nd_s$ up to the plane are replaced by a position $p_R$ on an image of a right camera, a position $p_L$ on an image of a left camera, a position $p_{axis}$ on an optical axis coupling the right camera to the left camera, an optical axis direction $a_{xis}$, and the "normalization shortest distance $_nd_{s, stero}$ up to the plane on the stereo image", respectively. Here, the normalization shortest distance $_nd_{s, stero}$ is a distance wherein the shortest distance $d_s$ up to the plane is normalized by a distance $\Delta X_{LR}$ between the right camera and the left camera. It is acceptable that the right camera and the left camera are exchanged one another.

(19) An image measurement method according to paragraph (14), of determining the "normalized distance $_nd_0$ up to the position of a point in a space" in accordance with a stereo image, wherein the position $p_0$ at the present time, the position $p_1$ at the subsequent time, and the position $p_{inf}$ after an infinite time elapses are replaced by a position $p_R$ on an image of a right camera, a position $p_L$ on an image of a left camera, and a "position $p_{axis}$ on an optical axis coupling the right camera to the left camera", respectively. Here, the normalized distance $_nd_0$ is a distance wherein the distance $d_0$ up to the point is normalized by a distance $\Delta X_{LR}$ between the right camera and the left camera. It is acceptable that the right camera and the left camera are exchanged one another.

(20) An image measurement method according to paragraphs (17) to (19), wherein the position $p_L$ on the image of the left camera is replaced by a "positional difference (binocular parallax) between the position on the image of the right camera and the position on the image of the left camera".

(21) An image measurement method according to paragraphs (1) to (20), wherein an image obtained through a planar camera is adopted as an input image.

(22) An image measurement method according to paragraphs (1) to (20), wherein an image obtained through a spherical camera is adopted as an input image.

(23) An image measurement method according to paragraph (10), wherein the "positional difference (motion parallax) between the position at the present time and the position at the subsequent time" is determined from an image on the planar camera, and the motion parallax thus determined is projected onto a sphere.

(24) An image measurement method according to paragraph (13), wherein the "positional difference (binocular parallax) between the position on the image of the right camera and the position on the image of the left camera" is determined from an image on the planar camera, and the binocular parallax thus determined is projected onto a sphere.

(25) A method of controlling a moving machine such as a robot, a hobby machine, a motor car and an airplane on the basis of the "three-dimensional azimuth $n_s$ of a plane" and/or the "normalized time $_n t_c$ up to crossing the plane" measured in accordance with an image measurement method related to paragraph (3) of paragraphs (21), (22) and (23).

(26) A method of "depth-separating a plurality of objects and surrounds, which are overlapped in sight on an image", on the basis of the "three-dimensional azimuth $n_s$ of a plane" and/or the "normalization shortest distance $_n d_s$ up to the plane" (or the "normalized time $_n t_c$ up to crossing the plane") measured in accordance with an image measurement method related to paragraph (8) (paragraph (3)) of paragraphs (21), (22) and (23).

(27) A method of "depth-separating a plurality of objects and surrounds, which are overlapped in sight on an image", on the basis of the "three-dimensional azimuth $n_s$ of a plane" and/or the "normalization shortest distance $_n d_s$ up to the plane" (or the "normalized distance $_n d_c$ up to crossing the plane in the optical axis direction") measured in accordance with an image measurement method related to paragraph (18) or paragraph (17) of paragraphs (21), (22) and (23).

(I) Forward Direction Method

(I-1) Normalized time
An image measurement method according to paragraph (4) of paragraph (16), wherein a response intensity obtained by a method (or an apparatus) of detecting a motion parallax is voted.

(I-2) Normalized time + v unknown
An image measurement method according to paragraphs (7) and (4) of paragraph (16), wherein a response intensity obtained by a method (or an apparatus) of detecting a motion parallax is voted.

(I-3) Normalization Shortest Distance
An image measurement method according to paragraph (10) of paragraph (16), wherein a response intensity obtained by a method (or an apparatus) of detecting a motion parallax is voted.

(I-4) Normalization Shortest Distance + v unknown
An image measurement method according to paragraphs (13) and (10) of paragraph (16), wherein a response intensity obtained by a method (or an apparatus) of detecting a motion parallax is voted.

(I-5) Stereo + Normalized distance
An image measurement method according to paragraphs (17) and (4) of paragraph (20), wherein a response intensity obtained by a method (or an apparatus) of detecting a binocular parallax is voted.

(I-6) Stereo + Normalized distance + $a_{xis}$ unknown
An image measurement method according to paragraphs (17), (7) and (4) of paragraph (20), wherein a response intensity obtained by a method (or an apparatus) of detecting a binocular parallax is voted.

(I-7) Stereo + Normalization Shortest Distance
An image measurement method according to paragraphs (18) and (10) of paragraph (20), wherein a response intensity obtained by a method (or an apparatus) of detecting a binocular parallax is voted.

(I-8) Stereo + Normalization Shortest Distance + axis unknown
An image measurement method according to paragraphs (18), (13) and (10) of paragraph (20), wherein a response intensity obtained by a method (or an apparatus) of detecting a binocular parallax is voted.

(I-9) Normalization Shortest Distance
An image measurement method according to paragraph (9) of paragraph (16), wherein a response intensity obtained by a method (or an apparatus) of detecting a motion parallax is voted.

(I-10) Normalization Shortest Distance + v unknown
An image measurement method according to paragraphs (13) and (9) of paragraph (16), wherein a response intensity obtained by a method (or an apparatus) of detecting a motion parallax is voted.

(I-11) Stereo + Normalization Shortest Distance

An image measurement method according to paragraphs (18) and (9) of paragraph (20), wherein a response intensity obtained by a method (or an apparatus) of detecting a binocular parallax is voted.

(I-12) Stereo + Normalization Shortest Distance + $a_{xis}$ unknown

An image measurement method according to paragraphs (18), (13) and (9) of paragraph (20), wherein a response intensity obtained by a method (or an apparatus) of detecting a binocular parallax is voted.

(II) Reverse Direction Method

(II-1) Normalized time

Step 1: Consider number i of an arbitrary pixel $_ip_0$ on an image at the present time.
Step 2: Consider number j of an arbitrary element $(n_{sj}, {}_nt_{cj})$ on a three-degree-of-freedom arrangement (two degree of freedom on an azimuth vector $n_s$ of a plane, and one degree of freedom on a normalized time $_nt_c$ ).
Step 3: Compute a "motion parallax $_{ij}\tau$ on a pixel $_ip_0$ " associated with the numbers i and j.
Step 4: Compute from an input image a response intensity on the motion parallax $_{ij}\tau$ in accordance with a method (or an apparatus) of detecting a motion parallax.
Step 5: Vote the response intensity for the element $(n_{sj}, {}_nt_{cj})$ on the three-degree-of-freedom arrangement.
Step 6: Repeat the above steps 1-5 on pixels i and elements j of a predetermined range.

Detect an element, which offers a maximal response, of the three-degree-of-freedom arrangement thus voted, so that an "azimuth of a plane and a normalized time" can be detected from the address $(n_{s0}, {}_nt_{c0})$.

(II-2) Normalized time + v unknown

An image measurement method according to paragraph (II-1), wherein a three-dimensional azimuth $n_s$ of a plane and/or a normalized time $_nt_c$ up to crossing the plane are determined in accordance with the following steps, without determining a moving direction v (that is, the position $P_{inf}$ after an infinite time elapses).

Step 1: Arbitrarily set up a moving direction parameter v.
Step 2: Execute paragraph (II-1).
Step 3: Steps 1 and 2 are executed while the moving direction parameter v is altered.

Determine a parameter value $v_0$, which offers a maximum response, of the three-degree-of-freedom arrangement thus voted, so that a true moving direction $v_0$ can be detected in form of the parameter value. Further, it is possible to detect an "azimuth of a plane and a normalized time" from the address $(n_{s0}, {}_nt_{c0})$, which offers a maximal response, of the three-degree-of-freedom arrangement (step 2).

(II-3) Normalization Shortest Distance

Step 1: Consider number i of an arbitrary pixel $_ip_0$ on an image at the present time.
Step 2: Consider number j of an arbitrary element $(n_{sj}, {}_nd_{sj})$ on a three-degree-of-freedom arrangement (two degree of freedom on an azimuth vector $n_s$ of a plane, and one degree of freedom on a normalization shortest distance $_nd_s$).
Step 3: Compute a "motion parallax $_{ij}\tau$ on a pixel $_ip_0$ " associated with the numbers i and j.
Step 4: Compute from an input image a response intensity on the motion parallax $_{ij}\tau$ in accordance with a method (or an apparatus) of detecting a motion parallax.
Step 5: Vote the response intensity for the element $(n_{sj}, {}_nd_{sj})$ on the three-degree-of-freedom arrangement.
Step 6: Repeat the above steps 1-5 on pixels i and elements j of a predetermined range.

Detect an element, which offers a maximal response, of the three-degree-of-freedom arrangement thus voted, so that an "azimuth of a plane and a normalized time" can be detected from the address $(n_{s0}, {}_nd_{s0})$.

(II-4) Normalization Shortest Distance + v unknown

An image measurement method according to paragraph (II-3), wherein a three-dimensional azimuth $n_s$ of a plane and/or a normalization shortest distance $_nd_s$ are determined in accordance with the following steps, without determining a moving direction v (that is, the position $P_{inf}$ after an infinite time elapses).

Step 1: Arbitrarily set up a moving direction parameter v.
Step 2: Execute paragraph (II-3).

Step 3: Steps 1 and 2 are executed while the moving direction parameter v is altered.

Determine a parameter value $v_0$ , which offers a maximum response, of the three-degree-of-freedom arrangement thus voted, so that a true moving direction $v_0$ can be detected in form of the parameter value. Further, it is possible to detect an "azimuth of a plane and a normalization shortest distance" from the address $(n_{s0}, {_n}d_{s0})$, which offers a maximal response, of the three-degree-of-freedom arrangement (step 2).

(II-5) Stereo + Normalized distance

Step 1: Consider number i of an arbitrary pixel $_i p_R$ on an image of the right camera.
Step 2: Consider number j of an arbitrary element $(n_{sj}, {_n}d_{cj})$ on a three-degree-of-freedom arrangement (two degree of freedom on an azimuth vector $n_s$ of a plane, and one degree of freedom on a normalized distance $_n d_c$ ).
Step 3: Compute a "binocular parallax $_{ij}\sigma$ on a pixel $_i p_R$ " associated with the numbers i and j.
Step 4: Compute from an input image a response intensity on the binocular parallax $_{ij}\sigma$ in accordance with a method (or an apparatus) of detecting a binocular parallax .
Step 5: Vote the response intensity for the element $(n_{sj}, {_n}d_{cj})$ on the three-degree-of-freedom arrangement.
Step 6: Repeat the above steps 1-5 on pixels i and elements j of a predetermined range.

Detect an element, which offers a maximal response, of the three-degree-of-freedom arrangement thus voted, so that an "azimuth of a plane and a normalized distance" can be detected from the address $(n_{s0}, {_n}d_{c0})$.

(II-6) Stereo + Normalized distance + $a_{xis}$ unknown

An image measurement method according to paragraph (II-5), wherein a three-dimensional azimuth $n_s$ of a plane and/or a normalized distance $_n d_c$ are determined in accordance with the following steps, without determining an optical axis direction $a_{xis}$ (that is, the position $P_{axis}$ on an optical axis coupling the right camera to the left camera).

Step 1: Arbitrarily set up an optical axis direction parameter $a_{xis}$.
Step 2: Execute paragraph (II-5).
Step 3: Steps 1 and 2 are executed while the parameter $a_{xis}$ is altered.

Determine a parameter value $a_{xis0}$, which offers a maximum response, of the three-degree-of-freedom arrangement thus voted, so that a true optical axis direction $a_{xis0}$ can be detected in form of the parameter value. Further, it is possible to detect an "azimuth of a plane and a normalized distance" from the address $(n_{s0}, {_n}d_{c0})$ , which offers a maximal response, of the three-degree-of-freedom arrangement (step 2).

(II-7) Stereo + Normalization Shortest Distance

Step 1: Consider number i of an arbitrary pixel $_i p_R$ on an image of the right camera.
Step 2: Consider number j of an arbitrary element $(n_{sj}, {_n}d_{sj})$ on a three-degree-of-freedom arrangement (two degree of freedom on an azimuth vector $n_s$ of a plane, and one degree of freedom on a normalized distance $_n d_s$ ).
Step 3: Compute a "binocular parallax $_{ij}\sigma$ on a pixel $_i p_R$ " associated with the numbers i and j.
Step 4: Compute from an input image a response intensity on the binocular parallax $_{ij}\sigma$ in accordance with a method (or an apparatus) of detecting a binocular parallax .
Step 5: Vote the response intensity for the element $(n_{sj}, {_n}d_{sj})$ on the three-degree-of-freedom arrangement.
Step 6: Repeat the above steps 1-5 on pixels i and elements j of a predetermined range.

Detect an element, which offers a maximal response, of the three-degree-of-freedom arrangement thus voted, so that an "azimuth of a plane and a normalized distance" can be detected from the address $(n_{s0}, {_n}d_{s0})$.

(II-8) Stereo + Normalization Shortest Distance + $a_{xis}$ unknown

An image measurement method according to paragraph (II-7), wherein a three-dimensional azimuth $n_s$ of a plane and/or a normalization shortest distance $_n d_s$ are determined in accordance with the following steps, without determining an optical axis direction $a_{xis}$ (that is; the position $P_{axis}$ on an optical axis coupling the right camera to the left camera).

Step 1: Arbitrarily set up an optical axis direction parameter $a_{xis}$.
Step 2: Execute paragraph (II-7).
Step 3: Steps 1 and 2 are executed while the parameter $a_{xis}$ is altered.

Determine a parameter value $a_{xis0}$, which offers a maximum response, of the three-degree-of-freedom arrangement thus voted, so that a true optical axis direction $a_{xis0}$ can be detected in form of the parameter value. Further, it is possible to detect an "azimuth of a plane and a normalized distance" from the address $(n_{s0}, {}_nd_{s0})$, which offers a maximal response, of the three-degree-of-freedom arrangement (step 2).

(III) Composite Algorithm

(III-1) Normalized time

Step 1: Consider number i of an arbitrary pixel $_ip_0$ on an image at the present time.
Step 2: Consider number k of an arbitrary motion parallax $_k\tau$.
Step 3: Determine an "element group $\{ (n_{sj}, {}_nt_{cj}) \}$ on a three-degree-of-freedom arrangement (two degree of freedom on an azimuth vector $n_s$ of a plane, and one degree of freedom on a normalized time $_nt_c$) " associated with the numbers i and k.
Step 4: Compute from an input image a response intensity on the motion parallax $_k\tau$ in accordance with a method (or an apparatus) of detecting a motion parallax.
Step 5: Vote the response intensity for the element group $\{ (n_{sj}, {}_nt_{cj}) \}$.
Step 6: Repeat the above steps 1-5 on i and k of a predetermined range.

Detect an element, which offers a maximal response, of the three-degree-of-freedom arrangement thus voted, so that an "azimuth of a plane and a normalized time" can be detected from the address $(n_{s0}, {}_nt_{c0})$.
(III-2) Normalized time + v unknown
An image measurement method according to paragraph (III-1), wherein a three-dimensional azimuth $n_s$ of a plane and/or a normalized time $_nt_c$ up to crossing the plane are determined in accordance with the following steps, without determining a moving direction v (that is, the position $P_{inf}$ after an infinite time elapses).

Step 1: Arbitrarily set up a moving direction parameter v.
Step 2: Execute paragraph (III-1).
Step 3: Steps 1 and 2 are executed while the moving direction parameter v is altered.

Determine a parameter value $v_0$, which offers a maximum response, of the three-degree-of-freedom arrangement thus voted, so that a true moving direction $v_0$ can be detected in form of the parameter value. Further, it is possible to detect an "azimuth of a plane and a normalized time" from the address $(n_{s0}, {}_nt_{c0})$, which offers a maximal response, of the three-degree-of-freedom arrangement (step 2).
(III-3) Normalization Shortest Distance

Step 1: Consider number i of an arbitrary pixel $_ip_0$ on an image at the present time.
Step 2: Consider number k of an arbitrary motion parallax $_k\tau$.
Step 3: Determine an "element group $\{ (n_{sj}, {}_nd_{sj}) \}$ on a three-degree-of-freedom arrangement (two degree of freedom on an azimuth vector $n_s$ of a plane, and one degree of freedom on a normalization shortest distance $_nd_s$) " associated with the numbers i and k.
Step 4: Compute from an input image a response intensity on the motion parallax $_k\tau$ in accordance with a method (or an apparatus) of detecting a motion parallax.
Step 5: Vote the response intensity for the element group $\{ (n_{sj}, {}_nd_{sj}) \}$ .
Step 6: Repeat the above steps 1-5 on i and k of a predetermined range.

Detect an element, which offers a maximal response, of the three-degree-of-freedom arrangement thus voted, so that an "azimuth of a plane and a normalization shortest distance" can be detected from the address $(n_{s0}, {}_nd_{s0})$.
(III-4) Normalization Shortest Distance + v unknown
An image measurement method according to paragraph (III-3), wherein a three-dimensional azimuth $n_s$ of a plane and/or a normalization shortest distance $_nd_s$ are determined in accordance with the following steps, without determining a moving direction v (that is, the position $P_{inf}$ after an infinite time elapses).

Step 1: Arbitrarily set up a moving direction parameter v.
Step 2: Execute paragraph (III-3).
Step 3: Steps 1 and 2 are executed while the moving direction parameter v is altered.

Determine a parameter value $v_0$, which offers a maximum response, of the three-degree-of-freedom arrangement thus voted, so that a true moving direction $v_0$ can be detected in form of the parameter value. Further, it is possible to detect an "azimuth of a plane and a normalization shortest distance" from the address $(n_{s0}, {_n}d_{s0})$, which offers a maximal response, of the three-degree-of-freedom arrangement (step 2).

(III-5) Stereo + Normalized distance

Step 1: Consider number i of an arbitrary pixel ${_i}p_R$ on an image of the right camera.
Step 2: Consider number k of an arbitrary binocular parallax ${_k}\sigma$.
Step 3: Determine an "element group $\{(n_{sj}, {_n}d_{cj})\}$ on a three-degree-of-freedom arrangement (two degree of freedom on an azimuth vector $n_s$ of a plane, and one degree of freedom on a normalized distance ${_n}d_c$) " associated with the numbers i and k.
Step 4: Compute from an input image a response intensity on the binocular parallax ${_k}\sigma$ in accordance with a method (or an apparatus) of detecting a binocular parallax.
Step 5: Vote the response intensity for the element group $\{(n_{sj}, {_n}d_{cj})\}$.
Step 6: Repeat the above steps 1-5 on i and k of a predetermined range.

Detect an element, which offers a maximal response, of the three-degree-of-freedom arrangement thus voted, so that an "azimuth of a plane and a normalized distance" can be detected from the address $(n_{s0}, {_n}d_{c0})$ .

(III-6) Stereo + Normalized distance + $a_{xis}$ unknown

An image measurement method according to paragraph (III-5), wherein a three-dimensional azimuth $n_s$ of a plane and/or a normalized distance ${_n}d_c$ are determined in accordance with the following steps, without determining an optical axis direction $a_{xis}$ (that is, the position $P_{axis}$ on an optical axis coupling the right camera to the left camera).

Step 1: Arbitrarily set up an optical axis direction parameter $a_{xis}$ .
Step 2: Execute paragraph (III-5).
Step 3: Steps 1 and 2 are executed while the parameter $a_{xis}$ is altered.

Determine a parameter value $a_{xis0}$, which offers a maximum response, of the three-degree-of-freedom arrangement thus voted, so that a true optical axis direction $a_{xis0}$ can be detected in form of the parameter value. Further, it is possible to detect an "azimuth of a plane and a normalized distance" from the address $(n_{s0}, {_n}d_{c0})$, which offers a maximal response, of the three-degree-of-freedom arrangement (step 2).

(III-7) Stereo + Normalization Shortest Distance

Step 1: Consider number i of an arbitrary pixel ${_i}p_k$ on an image of the right camera.
Step 2: Consider number k of an arbitrary binocular parallax ${_k}\sigma$.
Step 3: Determine an "element group $\{(n_{sj}, {_n}d_{sj})\}$ on a three-degree-of-freedom arrangement (two degree of freedom on an azimuth vector $n_s$ of a plane, and one degree of freedom on a normalization shortest distance ${_n}d_s$ ) " associated with the numbers i and k.
Step 4: Compute from an input image a response intensity on the binocular parallax ${_k}\sigma$ in accordance with a method (or an apparatus) of detecting a binocular parallax.
Step 5: Vote the response intensity for the element group $\{(n_{sj}, {_n}d_{sj})\}$.
Step 6: Repeat the above steps 1-5 on i and k of a predetermined range.

Detect an element, which offers a maximal response, of the three-degree-of-freedom arrangement thus voted, so that an "azimuth of a plane and a normalization shortest distance" can be detected from the address $(n_{s0}, {_n}d_{s0})$ .

(III-8) Stereo + Normalization Shortest Distance + $a_{xis}$ unknown

An image measurement method according to paragraph (III-7), wherein a three-dimensional azimuth $n_s$ of a plane and/or a normalized distance ${_n}d_s$ are determined in accordance with the following steps, without determining an optical axis direction $a_{xis}$ (that is, the position $P_{axis}$ on an optical axis coupling the right camera to the left camera).

Step 1: Arbitrarily set up an optical axis direction parameter $a_{xis}$ .
Step 2: Execute paragraph (III-7).
Step 3: Steps 1 and 2 are executed while the parameter $a_{xis}$ is altered.

Determine a parameter value $a_{xis0}$, which offers a maximum response, of the three-degree-of-freedom arrangement thus voted, so that a true optical axis direction $a_{xis0}$ can be detected in form of the parameter value. Further, it is possible to detect an "azimuth of a plane and a normalized distance" from the address $(n_{s0},\ _nd_{s0})$, which offers a maximal response, of the three-degree-of-freedom arrangement (step 2).

(IV) Generalization

(IV-1) Normalized time

A method of voting a response intensity obtained by a method (or an apparatus) of detecting a motion parallax for a three-degree-of-freedom arrangement (two degree of freedom on an azimuth vector $n_s$ of a plane, and one degree of freedom on a normalized time $_nt_c$ ). Detect an element, which offers a maximal response, of the three-degree-of-freedom arrangement thus voted, so that an "azimuth of a plane and a normalized time" can be detected from the address $(n_{s0},\ _nt_{c0})$ .

Incidentally, in the present invention in its entirety, it is acceptable that "voting a response intensity obtained by a method (or an apparatus) of detecting a parallax" is replaced by "voting a quantity related to luminance of an input image". Further, it is acceptable that "a method (or an apparatus) of detecting a parallax" is replaced by "a method (or an apparatus) of detecting a velocity on an image".

(IV-2) Normalized time + v unknown

Step 1: Arbitrarily set up a moving direction parameter v.
Step 2: Execute paragraph (IV-1).
Step 3: Steps 1 and 2 are executed while the moving direction parameter v is altered.

Determine a parameter value $v_0$, which offers a maximum response, of the three-degree-of-freedom arrangement thus voted, so that a true moving direction $v_0$ can be detected in form of the parameter value. Further, it is possible to detect an "azimuth of a plane and a normalized time" from the address $(n_{s0},\ _nt_{c0})$, which offers a maximal response, of the three-degree-of-freedom arrangement (step 2).

(IV-3) Normalization Shortest Distance

A method of voting a response intensity obtained by a method (or an apparatus) of detecting a motion parallax for a three-degree-of-freedom arrangement (two degree of freedom on an azimuth vector $n_s$ of a plane, and one degree of freedom on a normalization shortest distance $_nd_s$ ). Detect an element, which offers a maximal response, of the three-degree-of-freedom arrangement thus voted, so that an "azimuth of a plane and a normalization shortest distance" can be detected from the address $(n_{s0},\ _nd_{s0})$.

(IV-4) Normalization Shortest Distance + v unknown

Step 1: Arbitrarily set up a moving direction parameter v.
Step 2: Execute paragraph (IV-3).
Step 3: Steps 1 and 2 are executed while the moving direction parameter v is altered.

Determine a parameter value $v_0$, which offers a maximum response, of the three-degree-of-freedom arrangement thus voted, so that a true moving direction $v_0$ can be detected in form of the parameter value. Further, it is possible to detect an "azimuth of a plane and a normalization shortest distance" from the address $(n_{s0},\ _nd_{s0})$, which offers a maximal response, of the three-degree-of-freedom arrangement (step 2).

(IV-5) Stereo + Normalized distance

A method of voting a response intensity obtained by a method (or an apparatus) of detecting a binocular parallax for a three-degree-of-freedom arrangement (two degree of freedom on an azimuth vector $n_s$ of a plane, and one degree of freedom on a normalized distance $_nd_c$ ). Detect an element, which offers a maximal response, of the three-degree-of-freedom arrangement thus voted, so that an "azimuth of a plane and a normalized distance" can be detected from the address $(n_{s0},\ _nd_{c0})$ .

(IV-6) Stereo + Normalized distance + $a_{xis}$ unknown

Step 1: Arbitrarily set up an optical axis direction parameter $a_{xis}$ .
Step 2: Execute paragraph (IV-5).
Step 3: Steps 1 and 2 are executed while the parameter $a_{xis}$ is altered.

Determine a parameter value $a_{xis0}$ , which offers a maximum response, of the three-degree-of-freedom arrangement thus voted, so that a true optical axis direction $a_{xis0}$ can be detected in form of the parameter value. Further, it is possible to detect an "azimuth of a plane and a normalized distance" from the address $(n_{s0},\ _nd_{c0})$, which offers a maximal response, of the three-degree-of-freedom arrangement (step 2).

(IV-7) Stereo + Normalization Shortest Distance

A method of voting a response intensity obtained by a method (or an apparatus) of detecting a binocular parallax for a three-degree-of-freedom arrangement (two degree of freedom on an azimuth vector $n_s$ of a plane, and one degree of freedom on a normalization shortest distance $_nd_s$ ). Detect an element, which offers a maximal response, of the three-degree-of-freedom arrangement thus voted, so that an "azimuth of a plane and a normalization shortest distance" can be detected from the address ($n_{s0}$, $_nd_{s0}$).

(IV-8) Stereo + Normalization Shortest Distance + $a_{xis}$ unknown

Step 1: Arbitrarily set up an optical axis direction parameter $a_{xis}$.

Step 2: Execute paragraph (IV-7).

Step 3: Steps 1 and 2 are executed while the parameter $a_{xis}$ is altered.

Determine a parameter value $a_{xis0}$, which offers a maximum response, of the three-degree-of-freedom arrangement thus voted, so that a true optical axis direction $a_{xis0}$ can be detected in form of the parameter value. Further, it is possible to detect an "azimuth of a plane and a normalized distance" from the address ($n_{s0}$, $_nd_{s0}$), which offers a maximal response, of the three-degree-of-freedom arrangement (step 2).

To achieve the above-mentioned objects, the present invention provides, of image measurement apparatuses, a first image measurement apparatus comprising :

a parameter setting unit for setting up coordinates in a voting space in form of a parameter, said coordinates being defined by a physical quantity indexing a superposing time in which a measuring plane, including an arbitrary measuring point appearing on an image obtained through viewing a predetermined measurement space from a predetermined observation point inside the measurement space, is superposed on the observation point, and an azimuth $n_s$ of the measuring plane, in a moving continuous state wherein it is expected that a movement of the measuring point appearing on an image obtained through viewing the measurement space from the observation point inside the measurement space, said measuring point being relative with respect to the observation point, is continued in a direction identical to a moving direction relative with respect to the observation point between mutually different two measuring times on the measuring point and at a velocity identical to a moving velocity between said two measuring times;

a motion parallax operating unit for determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ of the measuring point after an infinite time elapses in the moving continuous state, and the coordinates in the voting space, which is set up in said parameter setting unit;

a response intensity operating unit for determining a response intensity associated with the motion parallax $\tau$ of the measuring point in accordance with two images obtained through viewing the measurement space from the observation point at the two measuring times; and

a voting unit for voting the response intensity determined in said response intensity operating unit for the coordinates in the voting space, which is set up in said parameter setting unit,

wherein said motion parallax operating unit, said response intensity operating unit, and said voting unit perform operations by a plurality of number of times on a plurality of measuring points in the measurement space, while a value of the parameter is altered in said parameter setting unit.

To achieve the above-mentioned objects, the present invention provides, of image measurement apparatuses, a second image measurement apparatus comprising :

a first parameter setting unit for setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second parameter setting unit for setting up coordinates in a voting space according to the first parameter in form of a second parameter, said coordinates being defined by a physical quantity indexing a superposing time in which a measuring plane including the measuring point is superposed on the observation point, and an azimuth $n_s$ of the measuring plane;

a motion parallax operating unit for determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ set up in said first parameter setting unit, and the coordinates in the voting space, which is set up in said second parameter setting unit;

a response intensity operating unit for determining a response intensity associated with the motion parallax $\tau$ of the measuring point in accordance with two images obtained through viewing the measurement space from the observation point at the two measuring times; and

a voting unit for voting the response intensity determined in said response intensity operating unit for the coordinates in the voting space according to the first parameter, said coordinates being set up in the second parameter setting unit,

wherein said motion parallax operating unit, said response intensity operating unit, and said voting unit perform operations by a plurality of number of times on a plurality of measuring points in the measurement space, while values of the parameters are altered in the first parameter setting unit and said second parameter setting unit.

To achieve the above-mentioned objects, the present invention provides, of image measurement apparatuses, a third image measurement apparatus comprising :

a parameter setting unit for setting up coordinates in a voting space in form of a parameter, said coordinates being defined by a physical quantity indexing a shortest distance between a predetermined observation point inside a predetermined measurement space for observation of the measurement space and a measuring plane, including an arbitrary measuring point appearing on an image obtained through viewing the measurement space from the observation point inside the measurement space, at one measuring time of mutually different two measuring times, and an azimuth $n_s$ of the measuring plane;

a motion parallax operating unit for determining a motion parallax $\tau$, which is a positional difference between two measuring positions $p_0$ and $p_1$ at the two measuring times on the measuring point, in accordance with a measuring position $p_0$ at one measuring time of the two measuring times on the measuring point, a position $p_{inf}$ of the measuring point after an infinite time elapses in a moving continuous state wherein it is expected that a movement of the measuring point is continued in a direction identical to a moving direction relative with respect to the observation point between mutually different two measuring times and at a velocity identical to a moving velocity between said two measuring times, and the coordinates in the voting space, which is set up in said parameter setting unit;;

a response intensity operating unit for determining a response intensity associated with the motion parallax $\tau$ of the measuring point in accordance with two images obtained through viewing the measurement space from the observation point at the two measuring times; and

a voting unit for voting the response intensity determined in said response intensity operating unit for the coordinates in the voting space, which is set up in said parameter setting unit;,

wherein said motion parallax operating unit, said response intensity operating unit, and said voting unit perform operations by a plurality of number of times on a plurality of measuring points in the measurement space, while a value of the parameter is altered in said parameter setting unit .

To achieve the above-mentioned objects, the present invention provides, of image measurement apparatuses, a fourth image measurement apparatus comprising :

a first parameter setting unit for setting up in form of a first parameter a moving direction $v$ of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction $v$ and at a velocity identical to a moving velocity between the two measuring times;

a second parameter setting unit for setting up coordinates in a voting space according to the first parameter in form of a second parameter, said coordinates being defined by a physical quantity indexing a shortest distance from the observation point to a measuring plane including the measuring point at one measuring time of the two measuring times, and an azimuth $n_s$ of the measuring plane;

a motion parallax operating unit for determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ set up in said first parameter setting unit, and the coordinates in the voting space, which is set up in said second parameter setting unit;

a response intensity operating unit for determining a response intensity associated with the motion parallax $\tau$ of the measuring point in accordance with two images obtained through viewing the measurement space from the observation point at the two measuring times; and

a voting unit for voting the response intensity determined in said response intensity operating unit for the coordinates in the voting space according to the first parameter, said coordinates being set up in said second parameter setting unit,

wherein said motion parallax operating unit, said response intensity operating unit, and said voting unit perform operations by a plurality of number of times on a plurality of measuring points in the measurement space, while values of the parameters are altered in said first parameter setting unit and said second parameter setting unit.

To achieve the above-mentioned objects, the present invention provides, of image measurement apparatuses, a fifth image measurement apparatus comprising :

a parameter setting unit for setting up in form of a parameter a motion parallax $\tau$, which is a positional difference between two measuring positions $p_0$ and $p_1$ at mutually different two measuring times, of an arbitrary measuring point appearing on an image obtained through viewing a predetermined measurement space from a predetermined observation point inside the measurement space;

a coordinates operating unit for determining coordinates in a voting space, said coordinates being defined by a physical quantity indexing a superposing time in which a measuring plane, including the measuring point, is superposed on the observation point, and an azimuth $n_s$ of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times, in accordance with a measuring position $p_0$ at one-measuring time of said two measuring times on said measuring point, a position $p_{inf}$ of the measuring point after an infinite time elapses in the moving continuous state, and the motion parallax $\tau$ set up in said parameter setting unit;

a response intensity operating unit for determining a response intensity associated with the motion parallax $\tau$ of the measuring point, which is set up in said parameter setting unit;, in accordance with two images obtained through viewing the measurement space from the observation point at the two measuring times; and

a voting unit for voting the response intensity determined in said response intensity operating unit for the coordinates in the voting space, said coordinates being set up in said coordinates operating unit,

wherein said coordinates operating unit, said response intensity operating unit, and said voting unit perform operations by a plurality of number of times on a plurality of measuring points in the measurement space, while a value of the parameter is altered in said parameter setting unit .

To achieve the above-mentioned objects, the present invention provides, of image measurement apparatuses, a sixth image measurement apparatus comprising :

a first parameter setting unit for setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second parameter setting unit for setting up in form of a second parameter a motion parallax $\tau$, which is a positional difference between two measuring positions $p_0$ and $p_1$ at the two measuring times on the measuring point;

a coordinates operating unit for determining coordinates in a voting space according to the first parameter, said coordinates being defined by a physical quantity indexing a superposing time in which a measuring plane, including the measuring point, is superposed on the observation point, and an azimuth $n_s$ of the measuring plane, in the moving continuous state, in accordance with a measuring position $p_0$ at one measuring time of said two measuring times on the measuring point, a position $p_{inf}$ set up in said first parameter setting unit, and the motion parallax $\tau$ set up in said second parameter setting unit;

a response intensity operating unit for determining a response intensity associated with the motion parallax $\tau$ of the measuring point, which is set up in said second parameter setting unit, in accordance with two images obtained through viewing the measurement space from the observation point at the two measuring times; and

a voting unit for voting the response intensity determined in said response intensity operating unit for the coordinates in the voting space according to the first parameter, said coordinates being set up in the coordinates operating unit,

wherein said coordinates operating unit, said response intensity operating unit, and said voting unit perform operations by a plurality of number of times on a plurality of measuring points in the measurement space, while values of the parameters are altered in the first parameter setting unit and said second parameter setting unit.

To achieve the above-mentioned objects, the present invention provides, of image measurement apparatuses, a seventh image measurement apparatus comprising:

a parameter setting unit for setting up in form of a parameter a motion parallax $\tau$, which is a positional difference between two measuring positions $p_0$ and $p_1$ at mutually different two measuring times on the measuring point, of an arbitrary measuring point appearing on an image obtained through viewing a predetermined measurement space from a predetermined observation point inside the measurement space;

a coordinates operating unit for determining coordinates in a voting space, said coordinates being defined by a physical quantity indexing a shortest distance from the observation point to a measuring plane including the measuring point at one measuring time of the two measuring times, and an azimuth $n_s$ of the measuring plane, in accordance with a measuring position $p_0$ at one measuring time of said two measuring times on said measuring point, a position $p_{inf}$ of the measuring point after an infinite time elapses in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times, and the motion parallax $\tau$ set up in the first parameter setting unit;

a response intensity operating unit for determining a response intensity associated with the motion parallax $\tau$ of the measuring point, which is set up in said parameter setting unit, in accordance with two images obtained through viewing the measurement space from the observation point at the two measuring times; and

a voting unit for voting the response intensity determined in said response intensity operating unit for the coordinates in the voting space, said coordinates being set up in said coordinates operating unit,

wherein said coordinates parallax operating unit, said response intensity operating unit, and said voting unit perform operations by a plurality of number of times on a plurality of measuring points in the measurement space, while a value of the parameter is altered in said parameter setting unit .

To achieve the above-mentioned objects, the present invention provides, of image measurement apparatuses, an eighth image measurement apparatus comprising :

a first parameter setting unit for setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second parameter setting unit for setting up in form of a second parameter a motion parallax $\tau$, which is a positional difference between two measuring positions $p_0$ and $p_1$ at the two measuring times on the measuring point;

a coordinates operating unit for determining coordinates in a voting space according to the first parameter, said coordinates being defined by a physical quantity indexing a shortest distance from the observation point to a measuring plane including the measuring point at one measuring time of the two measuring times, and an azimuth $n_s$ of the measuring plane, in the moving continuous state, in accordance with a measuring position $p_0$ at one measuring time of said two measuring times on the measuring point, a position $P_{inf}$ set up in said first parameter setting unit, and the motion parallax $\tau$ set up in said second parameter setting unit;

a response intensity operating unit for determining a response intensity associated with the motion parallax $\tau$ of the measuring point, which is set up in said second parameter setting unit, in accordance with two images obtained through viewing the measurement space from the observation point at the two measuring times; and

a voting unit for voting the response intensity determined in said response intensity operating unit for the coordinates in the voting space according to the first parameter, said coordinates being set up in said coordinates operating unit,

wherein said coordinates operating unit, and said voting unit perform operations by a plurality of number of times on a plurality of measuring points in the measurement space, while values of the parameters are altered in the first parameter setting unit and said second parameter setting unit.

To achieve the above-mentioned objects, the present invention provides, of image measurement apparatuses, a ninth image measurement apparatus comprising :

a response intensity operating unit for determining a response intensity associated with a motion parallax, which is a positional difference between two measuring positions at mutually different two measuring times, of an arbitrary measuring point in a predetermined measurement space, in accordance with two images obtained through viewing the measurement space from a predetermined observation point at mutually different two measuring times; and a voting unit for of voting the response intensity determined in said response intensity operating unit for coordinates associated with the measuring point and the motion parallax in a voting space, said coordinates being defined by a physical quantity indexing a superposing time in which a measuring plane, including the measuring point, is superposed on the observation point, and an azimuth of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times;

wherein said response intensity operating unit and said voting unit perform operation by a plurality of number of times on a plurality of measuring points in the measurement space.

In the ninth image measurement apparatus as mentioned above, it is acceptable that said image measurement apparatus further comprises a detection unit for determining an azimuth of a measuring plane including a plurality of measuring points joining a voting for a maximal point and/or a physical quantity indexing a superposing time in which the measuring plane is superposed on the observation point in such a manner that a maximal point wherein a value by said voting in the voting space offers a maximal value is determined.

To achieve the above-mentioned objects, the present invention provides, of image measurement apparatuses, a tenth image measurement apparatus comprising :

a parameter setting unit for setting up in form of a parameter a moving direction of an arbitrary measuring point appearing on an image obtained through viewing a predetermined measurement space from a predetermined observation point inside the measurement space, said moving direction being relative with respect to the observation point between mutually different two measuring times; a response intensity operating unit for determining a response intensity associated with a motion parallax, which is a positional difference between two measuring positions at the two measuring times on the measuring point, in accordance with two images obtained through viewing the measurement space from the observation point at the two measuring times; and a voting unit of voting the response intensity determined in said response intensity operating unit for coordinates associated with the measuring point and the motion parallax in a voting space according to the parameter set up in the parameter setting unit, said coordinates being defined by a physical quantity indexing a superposing time in which a measuring plane, including the measuring point, is superposed on the observation point, and an azimuth of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times;

wherein said response intensity operating unit and said voting unit perform operations by a plurality of number of times on a plurality of measuring points in the measurement space, while a value of the parameter is altered in said parameter setting unit.

In the tenth image measurement apparatus as mentioned above, it is acceptable that said image measurement apparatus further comprises a detection unit of determining a true moving direction relative to the observation point on the measuring point, and of determining an azimuth of a measuring plane including a plurality of measuring points joining a voting for a maximal point determined on a voting space associated with the true moving direction, and/or a physical quantity indexing a superposing time in which the measuring plane is superposed on the observation point, in such a manner that a maximal point wherein a value by a voting is determined on each voting space, and the voting space associated with the true moving direction is selected in accordance with information as to the maximal value on the maximal point.

To achieve the above-mentioned objects, the present invention provides, of image measurement apparatuses, an eleventh image measurement apparatus comprising:

a response intensity operating unit for determining a response intensity associated with a motion parallax, which is a positional difference between two measuring positions at mutually different two measuring times, of an arbitrary measuring point in a predetermined measurement space, in accordance with two images obtained through viewing the measurement space from a predetermined observation point at mutually different two measuring times; and a voting unit for voting the response intensity determined in said response intensity operating unit for coordinates associated with the measuring point and the motion parallax in a voting space, said coordinates being defined by a physical quantity indexing a shortest distance from the observation point to a measuring plane, including the measuring point, at one measuring time of the two measuring times, and an azimuth of the measuring plane;

wherein said response intensity operating unit and said voting unit perform operations by a plurality of number of times on a plurality of measuring points in the measurement space.

In the eleventh image measurement apparatus as mentioned above, it is acceptable that said measurement apparatus further comprises a detection unit for determining an azimuth of a measuring plane including a plurality of measuring points joining a voting for a maximal point and/or a physical quantity indexing a shortest distance from the observation point to the measuring plane at one measuring time of the two measuring times in such a manner that a maximal point wherein a value by said voting offers a maximal value is determined in the voting space.

To achieve the above-mentioned objects, the present invention provides, of image measurement apparatuses, a twelfth image measurement apparatus comprising :

a parameter setting unit for setting up in form of a parameter a moving direction of an arbitrary measuring point appearing on an image obtained through viewing a predetermined measurement space from a predetermined observation point inside the measurement space, said moving direction being relative with respect to the observation point between mutually different two measuring times;
a response intensity operating unit for determining a response intensity associated with a motion parallax, which is a positional difference between two measuring positions at the two measuring times on the measuring point, in accordance with two images obtained through viewing the measurement space from the observation point at the two measuring times; and
a voting unit for voting the response intensity determined in said response intensity operating unit for coordinates associated with the measuring point and the motion parallax in a voting space according to the parameter set up in said parameter setting unit, said coordinates being defined by a physical quantity indexing a shortest distance from the observation point to the measuring plane at one measuring time of the two measuring times, including the measuring point, and an azimuth of the measuring plane;

wherein said response intensity operating unit and said voting unit perform operations by a plurality of number of times on a plurality of measuring points in the measurement space, while a value of the parameter is altered in said parameter setting unit .

In the twelfth image measurement apparatus as mentioned above, it is acceptable that said image measurement apparatus further comprises a detection unit for determining a true moving direction, and determining an azimuth of a measuring plane including a plurality of measuring points joining a voting for a maximal point determined on a voting space associated with the true moving direction, and/or a shortest distance from the observation point to the measuring plane at one measuring time of the two measuring times, in such a manner that a maximal point wherein a value by said voting offers a maximal value is determined on each voting space, and a voting space associated with the true moving direction relative to the observation point on the measuring point is selected in accordance with information as to the maximal value on the maximal point.

To achieve the above-mentioned objects, the present invention provides, of image measurement program storage media, a first image measurement program storage medium storing an image measurement program comprising:

a first step of setting up coordinates in a voting space in form of a parameter, said coordinates being defined by a physical quantity indexing a superposing time in which a measuring plane, including an arbitrary measuring point appearing on an image obtained through viewing a predetermined measurement space from a predetermined observation point inside the measurement space, is superposed on the observation point, and an azimuth $n_s$ of the measuring plane, in a moving continuous state wherein it is expected that a movement of the measuring point appearing on an image obtained through viewing the measurement space from the observation point inside the measurement space, said measuring point being relative with respect to the observation point, is continued in a direction identical to a moving direction relative with respect to the observation point between mutually different two measuring times on the measuring point and at a velocity identical to a moving velocity between said two measuring times;

a second step of determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ of the measuring point after an infinite time elapses in the moving continuous state, and the coordinates in the voting space, which is set up in the first step;

a third step of determining a response intensity associated with the motion parallax $\tau$ of the measuring point in accordance with two images obtained through viewing the measurement space from the observation point at the two measuring times; and

a fourth step of voting the response intensity determined in the third step for the coordinates in the voting space, which is set up in the first step,

wherein the second step to the fourth step, of the first to fourth steps, are effected by a plurality of number of times on a plurality of measuring points in the measurement space, while a value of the parameter is altered in the first step.

To achieve the above-mentioned objects, the present invention provides, of image measurement program storage media, a second image measurement program storage medium storing an image measurement program comprising:

a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second step of setting up coordinates in a voting space according to the first parameter in form of a second parameter, said coordinates being defined by a physical quantity indexing a superposing time in which a measuring plane including the measuring point is superposed on the observation point, and an azimuth $n_s$ of the measuring plane;

a third step of determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ set up in the first step, and the coordinates in the voting space, which is set up in the second step;

a fourth step of determining a response intensity associated with the motion parallax $\tau$ of the measuring point in accordance with two images obtained through viewing the measurement space from the observation point at the two measuring times; and

a fifth step of voting the response intensity determined in the fourth step for the coordinates in the voting space according to the first parameter, said coordinates being set up in the second step,

wherein the third step to the fifth step, of the first to fifth steps, are effected by a plurality of number of times on a plurality of measuring points in the measurement space, while values of the parameters are altered in the first step and the second step.

To achieve the above-mentioned objects, the present invention provides, of image measurement program storage media, a third image measurement program storage medium storing an image measurement program comprising:

a first step of setting up coordinates in a voting space in form of a parameter, said coordinates being defined by a physical quantity indexing a shortest distance between a predetermined observation point inside a predetermined measurement space for observation of the measurement space and a measuring plane, including an arbitrary measuring point appearing on an image obtained through viewing the measurement space from the observation point inside the measurement space, at one measuring time of mutually different two measuring times, and an azimuth $n_s$ of the measuring plane;

a second step of determining a motion parallax $\tau$, which is a positional difference between two measuring positions $p_0$ and $p_1$ at the two measuring times on the measuring point, in accordance with a measuring position $p_0$ at one measuring time of the two measuring times on the measuring point, a position $p_{inf}$ of the measuring point after an infinite time elapses in a moving continuous state wherein it is expected that a movement of the measuring point is continued in a direction identical to a moving direction relative with respect to the observation point between mutually different two measuring times and at a velocity identical to a moving velocity between said two measuring times, and the coordinates in the voting space, which is set up in the first step;

a third step of determining a response intensity associated with the motion parallax $\tau$ of the measuring point in accordance with two images obtained through viewing the measurement space from the observation point at the two measuring times; and

a fourth step of voting the response intensity determined in the third step for the coordinates in the voting space, which is set up in the first step,

wherein the second step to the fourth step, of the first to fourth steps, are effected by a plurality of number of times on a plurality of measuring points in the measurement space, while a value of the parameter is altered in the first step.

To achieve the above-mentioned objects, the present invention provides, of image measurement program storage media, a fourth image measurement program storage medium storing an image measurement program comprising:

a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second step of setting up coordinates in a voting space according to the first parameter in form of a second parameter, said coordinates being defined by a physical quantity indexing a shortest distance from the observation point to a measuring plane including the measuring point at one measuring time of the two measuring times, and an azimuth $n_s$ of the measuring plane;

a third step of determining a motion parallax $\tau$, which is a positional difference between two measuring positions $P_0$ and $p_1$ at the two measuring times on the measuring point, in accordance with a measuring position $p_0$ at one measuring time of said two measuring times on said measuring point, a position $p_{inf}$ set up in the first step, and the coordinates in the voting space, which is set up in the second step;

a fourth step of determining a response intensity associated with the motion parallax $\tau$ of the measuring point in accordance with two images obtained through viewing the measurement space from the observation point at the two measuring times; and

a fifth step of voting the response intensity determined in the fourth step for the coordinates in the voting space according to the first parameter, said coordinates being set up in the second step,

wherein the third step to the fifth step, of the first to fifth steps, are effected by a plurality of number of times on a plurality of measuring points in the measurement space, while values of the parameters are altered in the first step and the second step.

To achieve the above-mentioned objects, the present invention provides, of image measurement program storage media, a fifth image measurement program storage medium storing an image measurement program comprising:

a first step of setting up in form of a parameter a motion parallax $\tau$, which is a positional difference between two measuring positions $p_0$ and $p_1$ at mutually different two measuring times, of an arbitrary measuring point appearing on an image obtained through viewing a predetermined measurement space from a predetermined observation point inside the measurement space;

a second step of determining coordinates in a voting space, said coordinates being defined by a physical quantity indexing a superposing time in which a measuring plane, including the measuring point, is superposed on the observation point, and an azimuth $n_s$ of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times, in accordance with a measuring position $p_0$ at one measuring time of said two measuring times on said measuring point, a position $p_{inf}$ of the measuring point after an infinite time elapses in the moving continuous state, and the motion parallax $\tau$ set up in the first step;

a third step of determining a response intensity associated with the motion parallax $\tau$ of the measuring point, which is set up in the first step, in accordance with two images obtained through viewing the measurement space from the observation point at the two measuring times; and

a fourth step of voting the response intensity determined in the third step for the coordinates in the voting space, said coordinates being set up in the second step,

wherein the second step to the fourth step, of the first to fourth steps, are effected by a plurality of number of times on a plurality of measuring points in the measurement space, while a value of the parameter is altered in the first step.

To achieve the above-mentioned objects, the present invention provides, of image measurement program storage media, a sixth image measurement program storage medium storing an image measurement program comprising:

a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second step of setting up in form of a second parameter a motion parallax $\tau$, which is a positional difference between two measuring positions $p_0$ and $p_1$ at the two measuring times on the measuring point;

a third step of determining coordinates in a voting space according to the first parameter, said coordinates being defined by a physical quantity indexing a superposing time in which a measuring plane, including the measuring point, is superposed on the observation point, and an azimuth $n_s$ of the measuring plane, in the moving continuous state, in accordance with a measuring position $p_0$ at one measuring time of said two measuring ,times on the measuring point, a position $p_{inf}$ set up in the first step, and the motion parallax $\tau$ set up in the second step;

a fourth step of determining a response intensity associated with the motion parallax $\tau$ of the measuring point, which is set up in the second step, in accordance with two images obtained through viewing the measurement space from the observation point at the two measuring times; and

a fifth step of voting the response intensity determined in the fourth step for the coordinates in the voting space according to the first parameter, said coordinates being set up in the third step,

wherein the third step to the fifth step, of the first to fifth steps, are effected by a plurality of number of times on a plurality of measuring points in the measurement space, while values of the parameters are altered in the first step and the second step.

To achieve the above-mentioned objects, the present invention provides, of image measurement program storage media, a seventh image measurement program storage medium storing an image measurement program comprising:

a first step of setting up in form of a parameter a motion parallax $\tau$, which is a positional difference between two measuring positions $p_0$ and $p_1$ at mutually different two measuring times on the measuring point, of an arbitrary measuring point appearing on an image obtained through viewing a predetermined measurement space from a predetermined observation point inside the measurement space;

a second step of determining coordinates in a voting space, said coordinates being defined by a physical quantity indexing a shortest distance from the observation point to a measuring plane including the measuring point at one measuring time of the two measuring times, and 'an azimuth $n_s$ of the measuring plane, in accordance with a measuring position $p_0$ at one measuring time of said two measuring times on said measuring point, a position $p_{inf}$ of the measuring point after an infinite time elapses in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times, and the motion parallax $\tau$ set up in the first step;

a third step of determining a response intensity associated with the motion parallax $\tau$ of the measuring point, which is set up in the first step, in accordance with two images obtained through viewing the measurement space from the observation point at the two measuring times; and

a fourth step of voting the response intensity determined in the third step for the coordinates in the voting space, said coordinates being set up in the second step,

wherein the second step to the fourth step, of the first to fourth steps, are effected by a plurality of number of times on a plurality of measuring points in the measurement space, while a value of the parameter is altered in the first step.

To achieve the above-mentioned objects, the present invention provides, of image measurement program storage media, an eighth image measurement program storage medium storing an image measurement program comprising:

a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second step of setting up in form of a second parameter a motion parallax $\tau$, which is a positional difference between two measuring positions $p_0$ and $p_1$ at the two measuring times on the measuring point;

a third step of determining coordinates in a voting space according to the first parameter, said coordinates being defined by a physical quantity indexing a shortest distance from the observation point to a measuring plane including the measuring point at one measuring time of the two measuring times, and an azimuth $n_s$ of the measuring plane, in the moving continuous state, in accordance with a measuring position $p_0$ at one measuring time of said two measuring times on the measuring point, a position $p_{inf}$ set up in the first step, and the motion parallax $\tau$ set up in the second step;

a fourth step of determining a response intensity associated with the motion parallax $\tau$ of the measuring point, which is set up in the second step, in accordance with two images obtained through viewing the measurement space from the observation point at the two measuring times; and

a fifth step of voting the response intensity determined in the fourth step for the coordinates in the voting space according to the first parameter, said coordinates being set up in the third step,

wherein the third step to the fifth step, of the first to fifth steps, are effected by a plurality of number of times on a plurality of measuring points in the measurement space, while values of the parameters are altered in the first step and the second step.

To achieve the above-mentioned objects, the present invention provides, of image measurement program storage media, a ninth image measurement program storage medium storing an image measurement program comprising:

a first step of determining a response intensity associated with a motion parallax, which is a positional difference between two measuring positions at mutually different two measuring times, of an arbitrary measuring point in a predetermined measurement space, in accordance with two images obtained through viewing the measurement space from a predetermined observation point at mutually different two measuring times; and

a second step of voting the response intensity determined in the first step for coordinates associated with the measuring point and the motion parallax in a voting space, said coordinates being defined by a physical quantity indexing a superposing time in which a measuring plane, including the measuring point, is superposed on the observation point, and an azimuth of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times;

wherein the first step and the second step are effected by a plurality of number of times on a plurality of measuring points in the measurement space.

In the ninth image measurement program storage medium as mentioned above, it is acceptable that said image measurement program further comprises a third step of determining an azimuth of a measuring plane including a plurality of measuring points joining a voting for a maximal point and/or a physical quantity indexing a superposing time in which the measuring plane is superposed on the observation point in such a manner that a maximal point wherein a value by said voting in the voting space offers a maximal value is determined.

To achieve the above-mentioned objects, the present invention provides, of image measurement program storage media, a tenth image measurement program storage medium storing an image measurement program comprising:

a first step of setting up in form of a parameter a moving direction of an arbitrary measuring point appearing on an image obtained through viewing a predetermined measurement space from a predetermined observation point inside the measurement space, said moving direction being relative with respect to the observation point between mutually different two measuring times;

a second step of determining a response intensity associated with a motion parallax, which is a positional difference between two measuring positions at the two measuring times on the measuring point, in accordance with two images obtained through viewing the measurement space from the observation point at the two measuring times; and

a third step of voting the response intensity determined in the second step for coordinates associated with the measuring point and the motion parallax in a voting space according to the parameter set up in the first step, said coordinates being defined by a physical quantity indexing a superposing time in which a measuring plane, including the measuring point, is superposed on the observation point, and an azimuth of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times;

wherein the second step and the third step, of the first to third steps, are effected by a plurality of number of times on a plurality of measuring points in the measurement space, while a value of the parameter is altered in the first step.

In the tenth image measurement program storage medium as mentioned above, it is acceptable that said image measurement program further comprises a fourth step of determining a true moving direction relative to the observation point on the measuring point, and of determining an azimuth of a measuring plane including a plurality of measuring points joining a voting for a maximal point determined on a voting space associated with the true moving direction, and/or a physical quantity indexing a superposing time in which the measuring plane is superposed on the observation point, in such a manner that a maximal point wherein a value by a voting is determined on each voting space, and the voting space associated with the true moving direction is selected in accordance with information as to the maximal value on the maximal point.

To achieve the above-mentioned objects, the present invention provides, of image measurement program storage media,an eleventh image measurement program storage medium storing an image measurement program comprising:

a first step of determining a response intensity associated with a motion parallax, which is a positional difference between two measuring positions at mutually different two measuring times, of an arbitrary measuring point in a predetermined measurement space, in accordance with two images obtained through viewing the measurement space from a predetermined observation point at mutually different two measuring times; and

a second step of voting the response intensity determined in the first step for coordinates associated with the measuring point and the motion parallax in a voting space, said coordinates being defined by a physical quantity indexing a shortest distance from the observation point to a measuring plane, including the measuring point, at one measuring time of the two measuring times, and an azimuth of the measuring plane;

wherein the first step and the second step are effected by a plurality of number of times on a plurality of measuring points in the measurement space.

In the eleventh image measurement program storage medium as mentioned above, it is acceptable that said image measurement program further comprises a third step of determining an azimuth of a measuring plane including a plurality of measuring points joining a voting for a maximal point and/or a physical quantity indexing a shortest distance from the observation point to the measuring plane at one measuring time of the two measuring times in such a manner that a maximal point wherein a value by said voting offers a maximal value is determined in the voting space.

To achieve the above-mentioned objects, the present invention provides, of image measurement program storage media, a twelfth image measurement program storage medium storing an image measurement program comprising:

a first step of setting up in form of a parameter a moving direction of an arbitrary measuring point appearing on an image obtained through viewing a predetermined measurement space from a predetermined observation point inside the measurement space, said moving direction being relative with respect to the observation point between mutually different two measuring times;

a second step of determining a response intensity associated with a motion parallax, which is a positional difference between two measuring positions at the two measuring times on the measuring point, in accordance with two images obtained through viewing the measurement space from the observation point at the two measuring times; and

a third step of voting the response intensity determined in the second step for coordinates associated with the measuring point and the motion parallax in a voting space according to the parameter set up in the first step, said coordinates being defined by a physical quantity indexing a shortest distance from the observation point to the measuring plane at one measuring time of the two measuring times, including the measuring point, and an azimuth of the measuring plane;

wherein the second step and the third step, of the first to third steps, are effected by a plurality of number of times on a plurality of measuring points in the measurement space, while a value of the parameter is altered in the first step.

In the twelfth image measurement program storage medium as mentioned above, it is acceptable that said image measurement program further comprises a fourth step of determining a true moving direction, and of determining an azimuth of a measuring plane including a plurality of measuring points joining a voting for a maximal point determined on a voting space associated with the true moving direction, and/or a shortest distance from the observation point to the measuring plane at one measuring time of the two measuring times, in such a manner that a maximal point wherein a value by said voting offers a maximal value is determined on each voting space, and a voting space associated with the true moving direction relative to the observation point on the measuring point is selected in accordance with information as to the maximal value on the maximal point.

BRIEF DESCRIPTION OF THE DRAWINGS

Fig. 1 is an explanatory view useful for understanding an optical flow pattern.

Fig. 2 is a perspective illustration of a computer system which is adopted as one embodiment of an image measurement apparatus of the present invention.

Fig. 3 is a block diagram of the computer system shown in Fig. 2.

Fig. 4 is a view showing a state that a plane is moved.

Fig. 5 is an explanatory view useful for understanding a principle of measuring a three-dimensional azimuth of a plane.

Fig. 6 is a view showing a state that a triangle, which is projected on a sphere shown in Fig. 4, is moved.

Fig. 7 is an explanatory view useful for understanding a principle of measuring a distance up to a point.

Fig. 8 is an explanatory view useful for understanding a principle of measuring a normalized time.

Fig. 9 is an explanatory view useful for understanding a definition of the central angle.

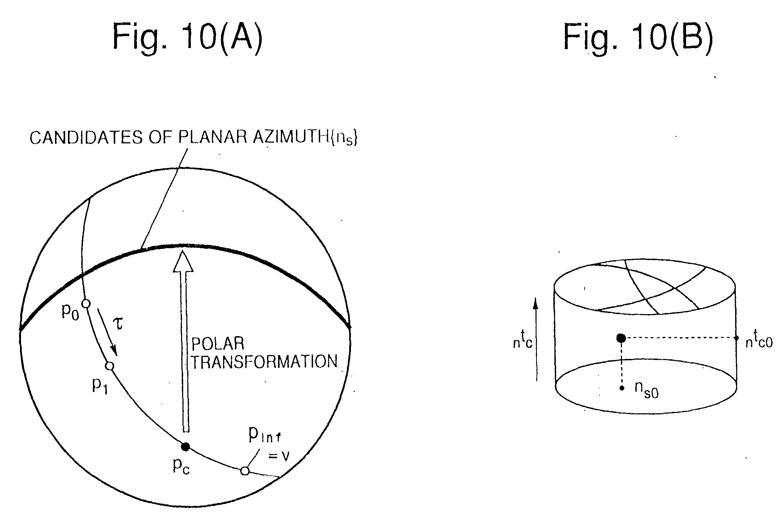

Each of Figs. 10(A) and 10(B) is an explanatory view useful for understanding a principle of measuring a normalized time by a cylindrical arrangement.

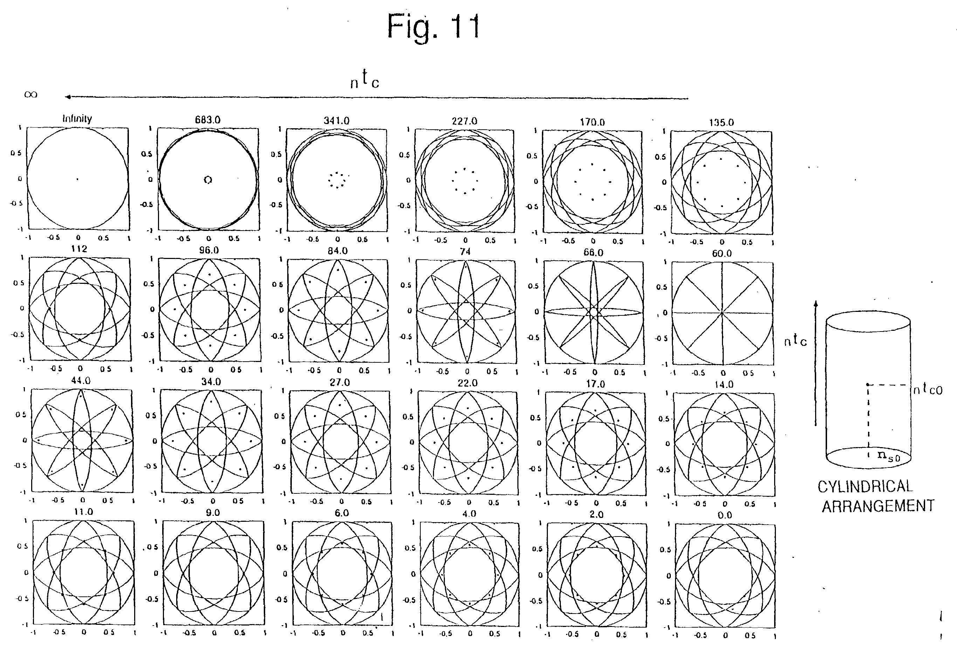

Fig. 11 is an illustration showing a result of a computer simulation as to a measurement of a normalized time.

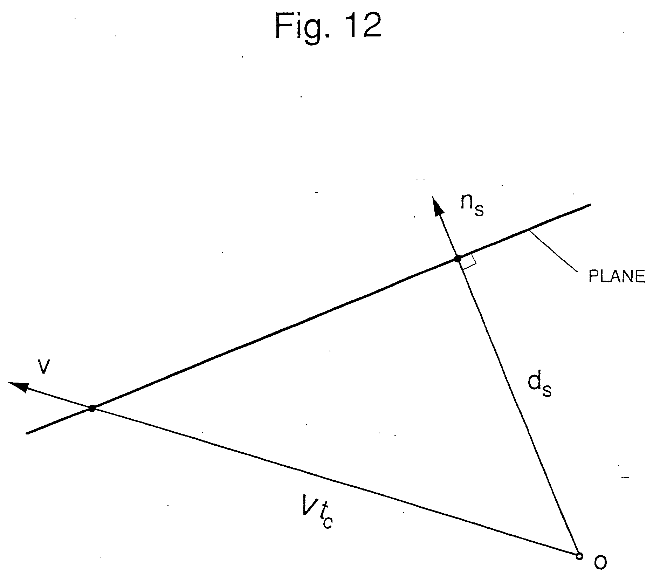

Fig. 12 is an illustration showing a relation between a time up to going across a plane and the shortest distance.

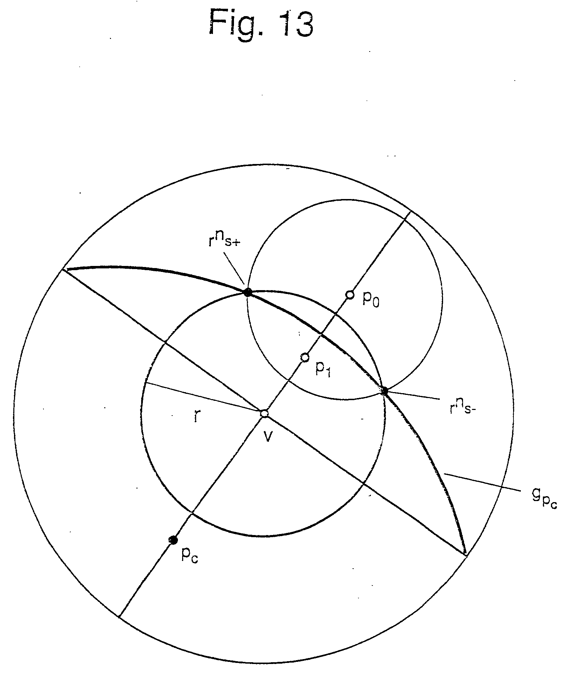

Fig. 13 is an explanatory view useful for understanding a principle of measuring the shortest distance up to a plane.

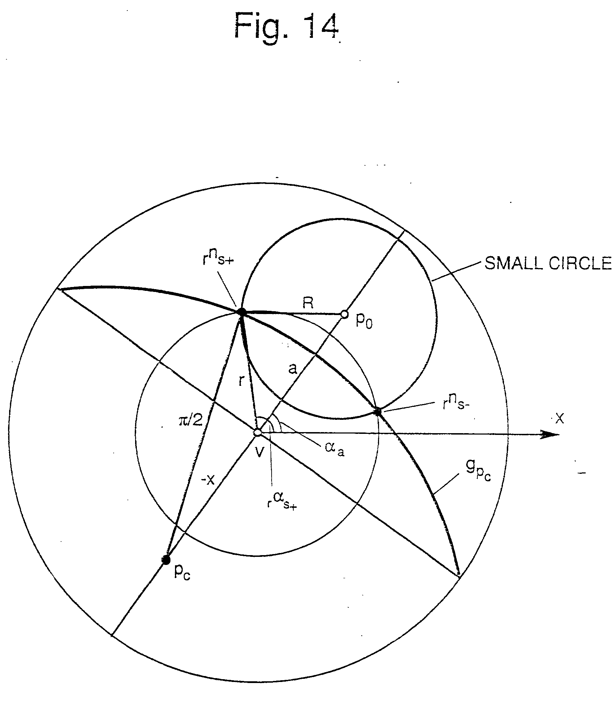

Fig. 14 is a typical illustration for a demonstration of a small circle transformation.

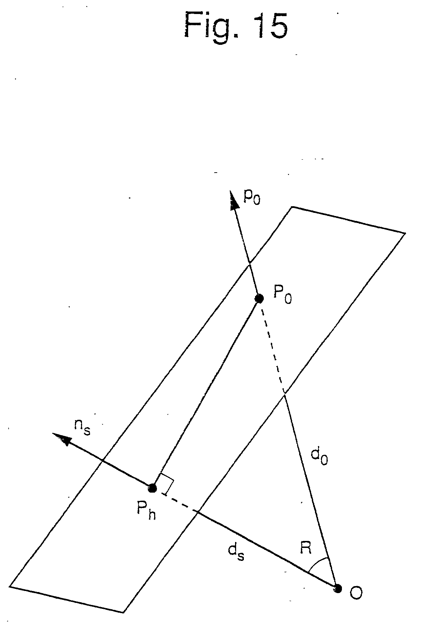

Fig. 15 is an illustration showing a relation between a distance up to a point and the shortest distance up to a plane.

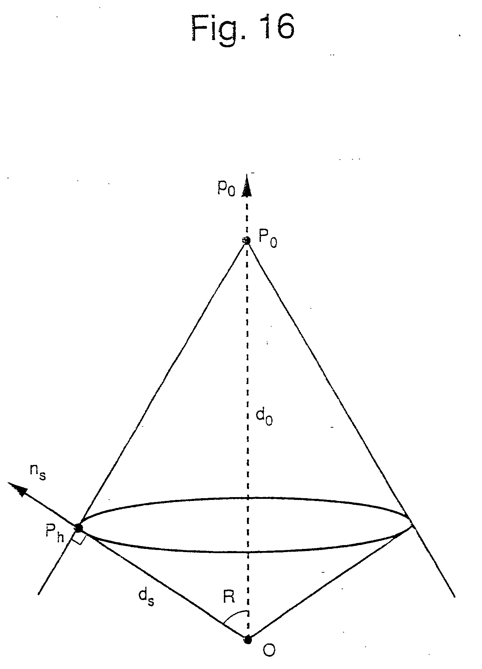

Fig. 16 is an illustration useful for understanding the geometric meaning of the small circle transformation.

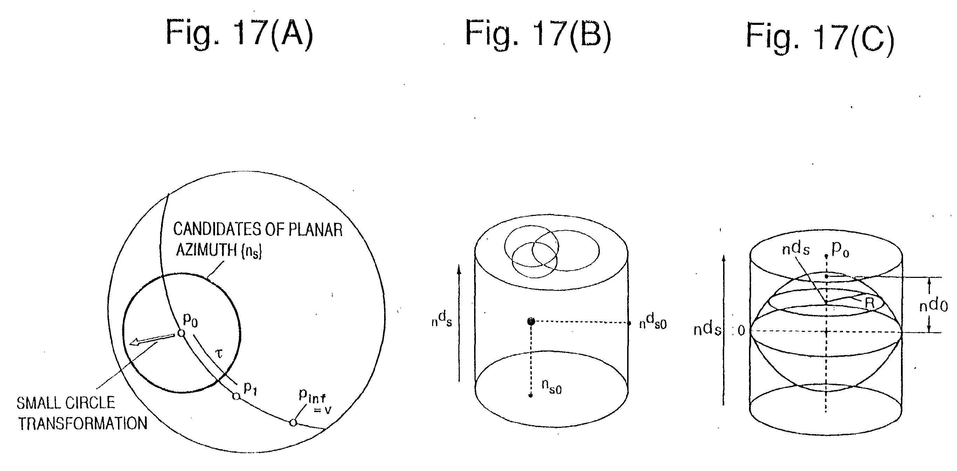

Each of Figs. 17(A), 17(B) and 17(C) is an explanatory view useful for understanding a principle of measuring a normalization shortest distance by a cylindrical arrangement.

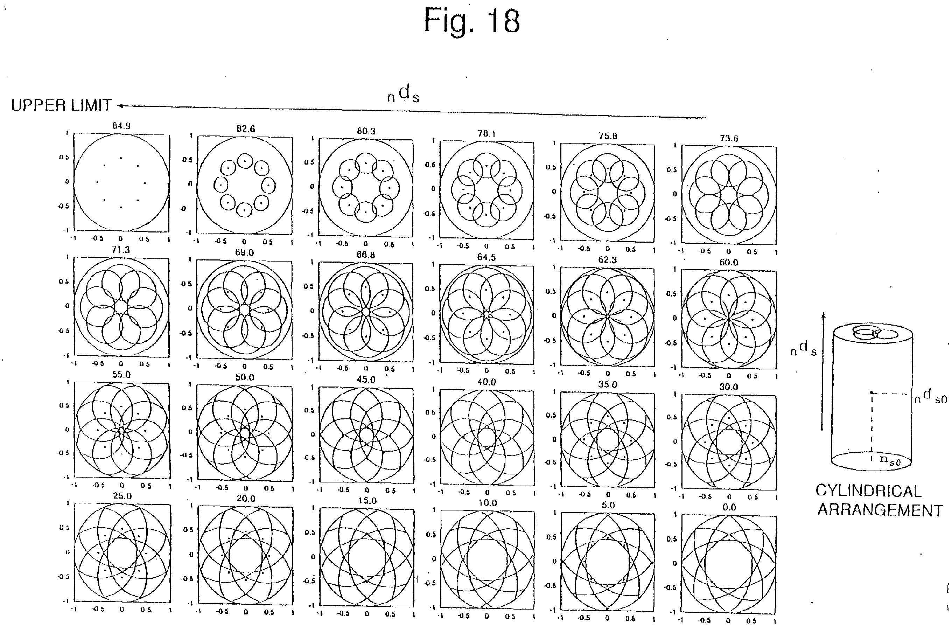

Fig. 18 is an illustration showing a result of a computer simulation as to a measurement of a normalization shortest distance.

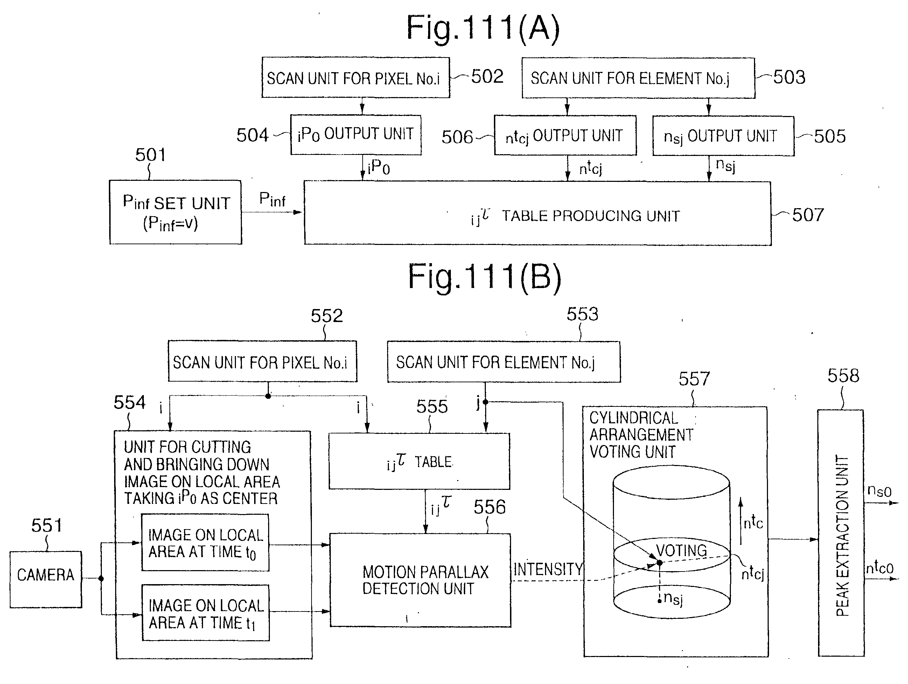

Figures 19 to 110 deleted.

Fig. 111 is a block diagram of an embodiment E-1 of the present invention.

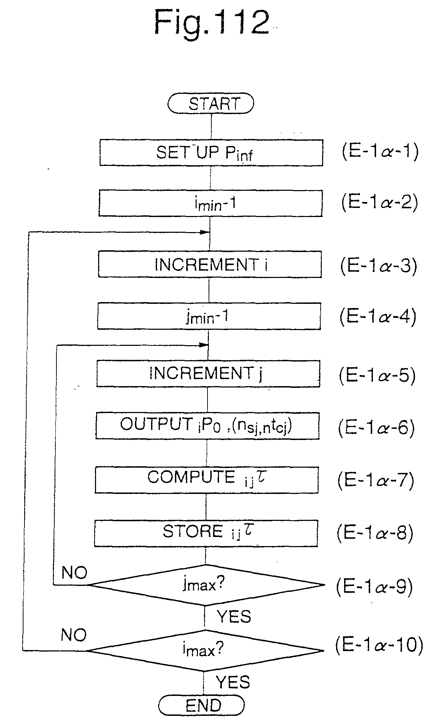

Fig. 112 is a flowchart of the embodiment E-1.

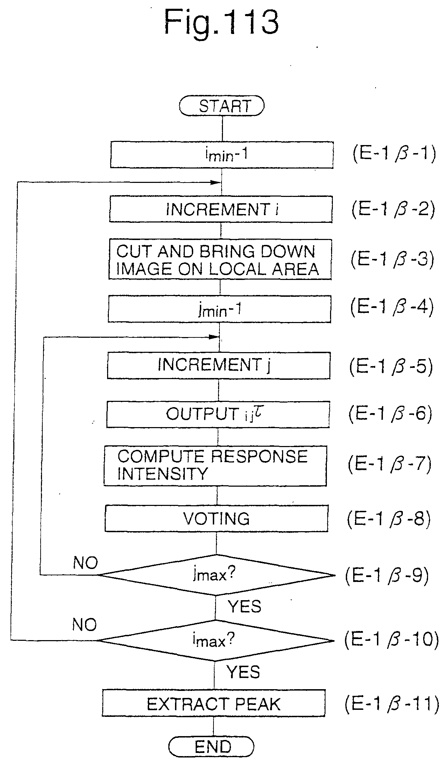

Fig. 113 is a flowchart of the embodiment E-1.

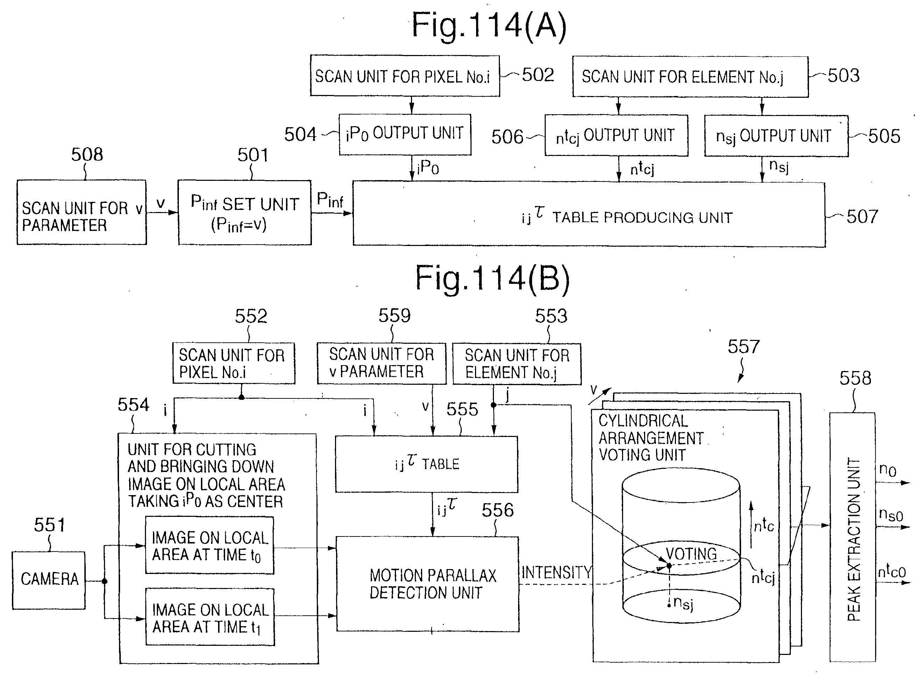

Fig. 114 is a block diagram of an embodiment E-2 of the present invention.

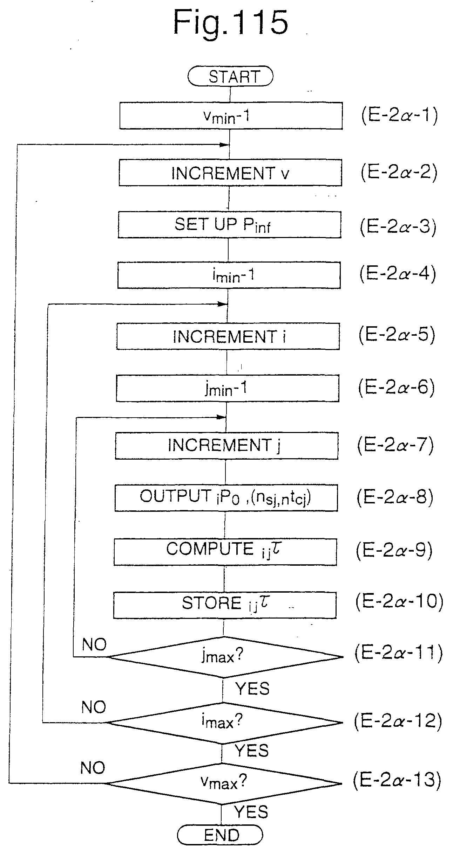

Fig. 115 is a flowchart of the embodiment E-2.

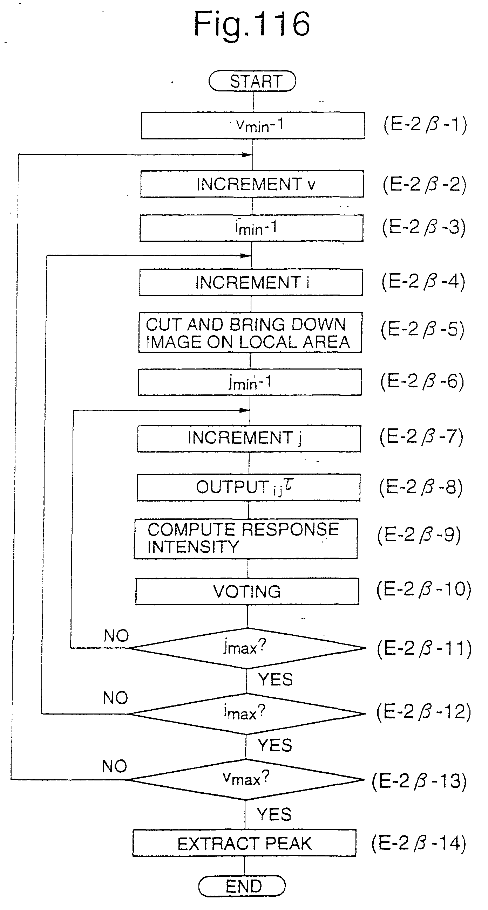

Fig. 116 is a flowchart of the embodiment E-2.

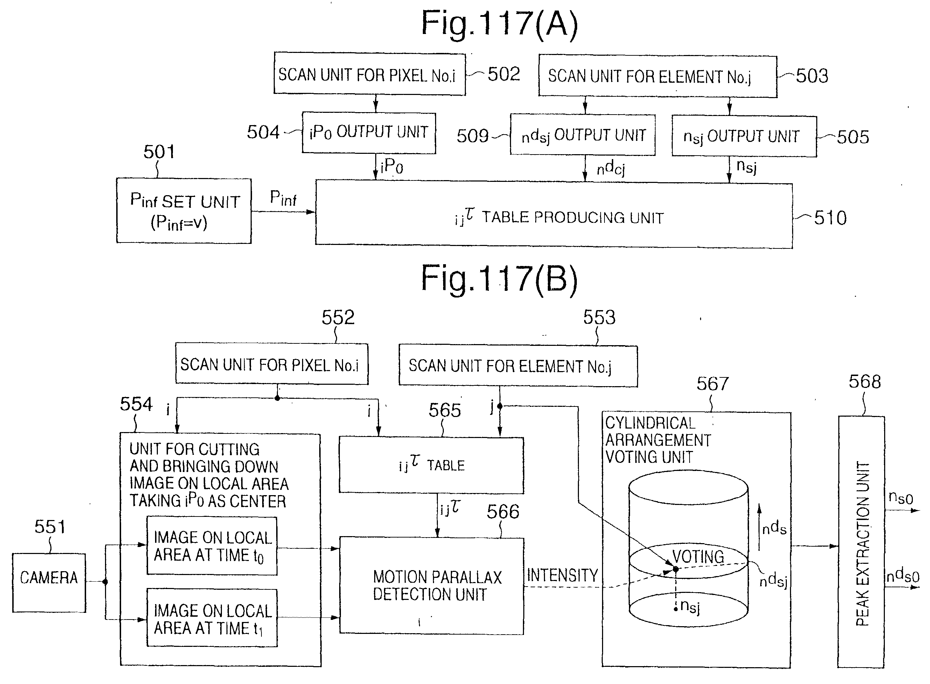

Fig. 117 is a block diagram of an embodiment E-3 of the present invention.

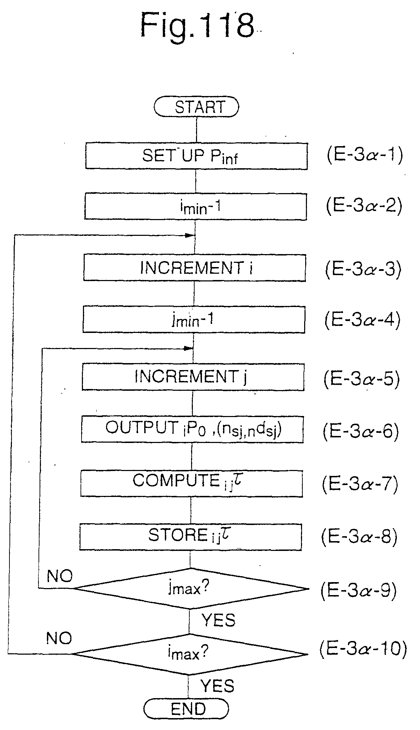

Fig. 118 is a flowchart of the embodiment E-3.

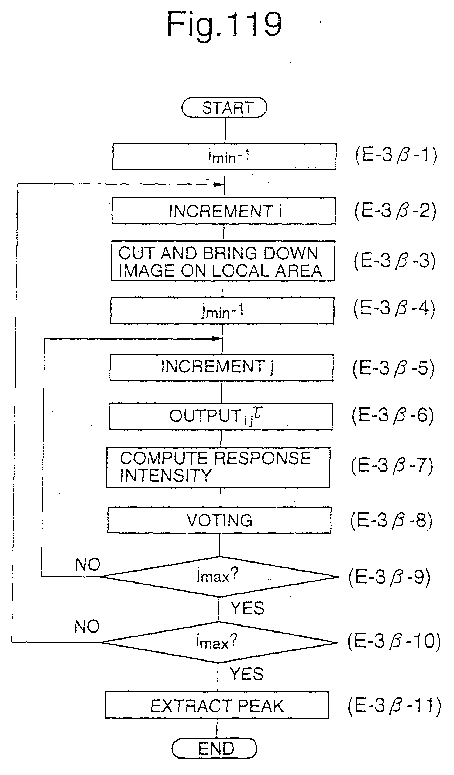

Fig. 119 is a flowchart of the embodiment E-3.

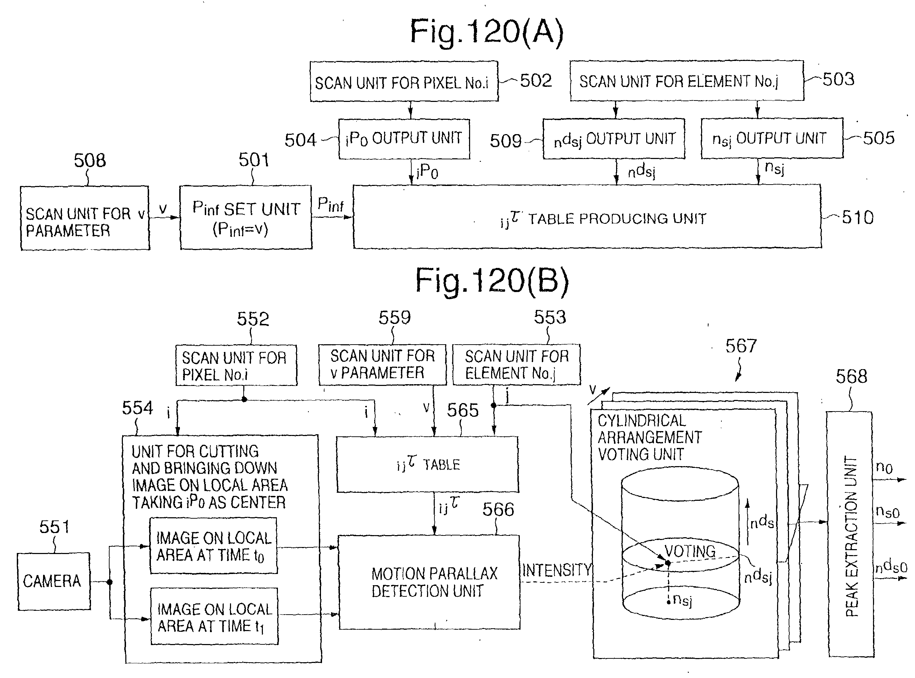

Fig. 120 is a block diagram of an embodiment E-4 of the present invention.

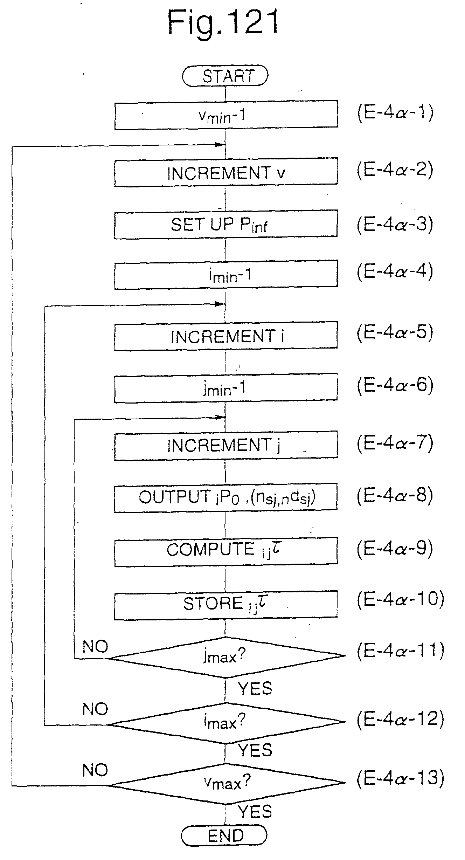

Fig. 121 is a flowchart of the embodiment E-4.

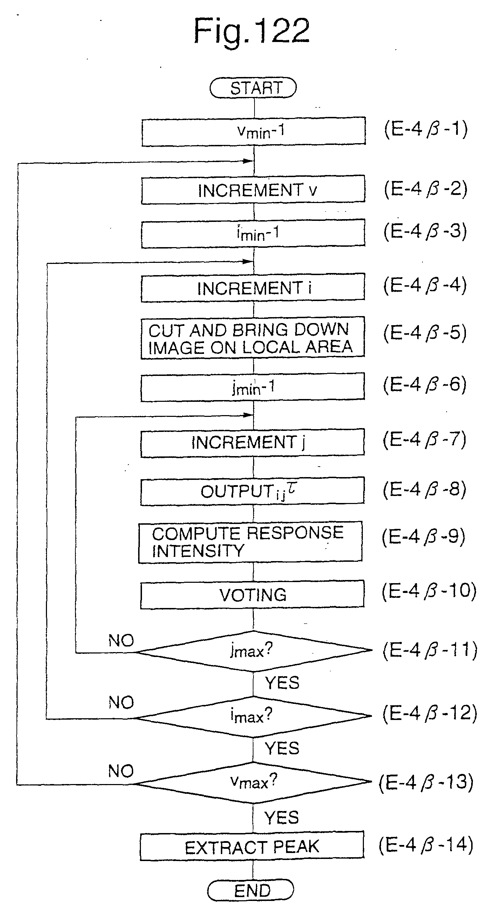

Fig. 122 is a flowchart of the embodiment E-4.

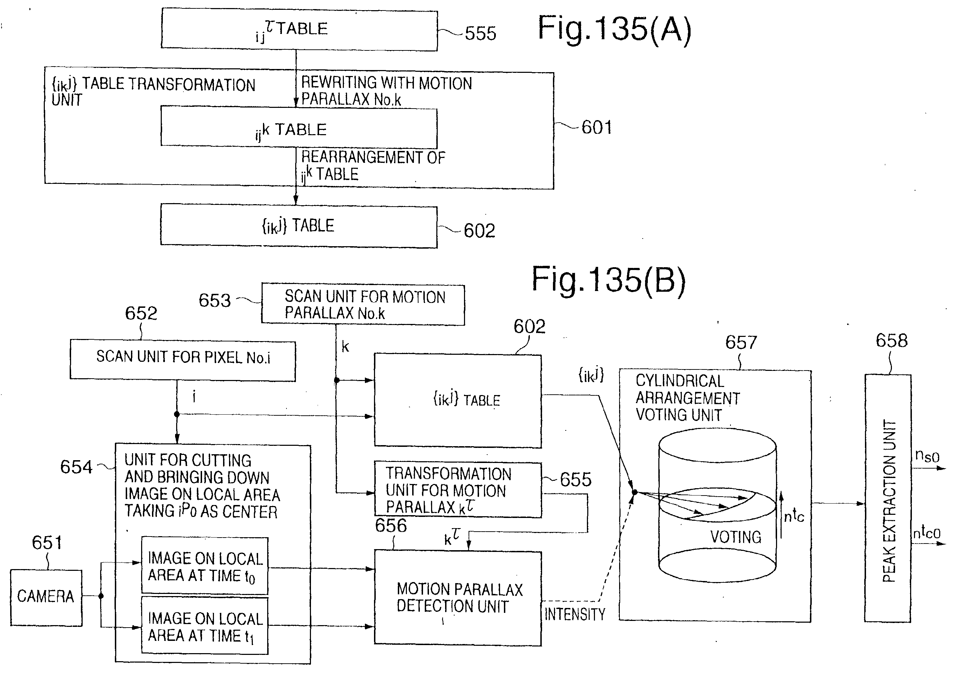

Figures 123 to 134 deleted.

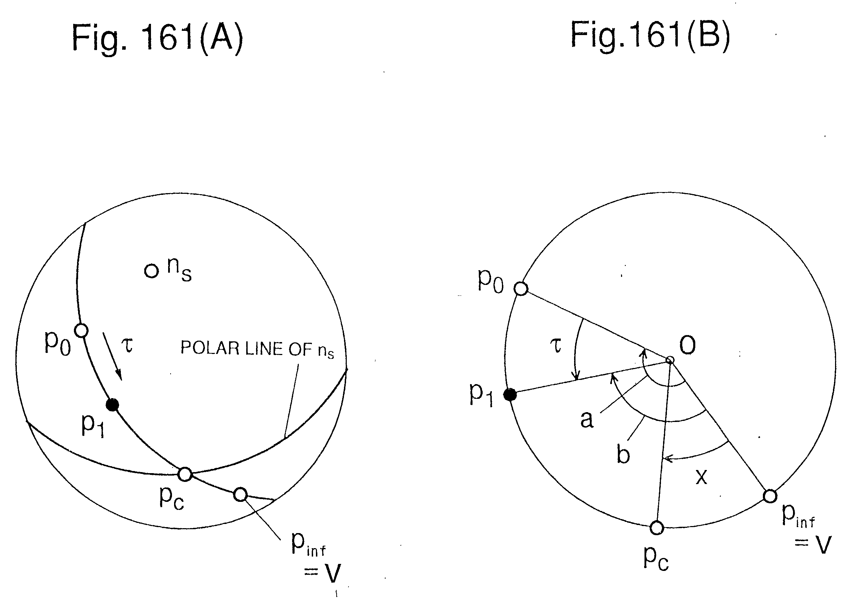

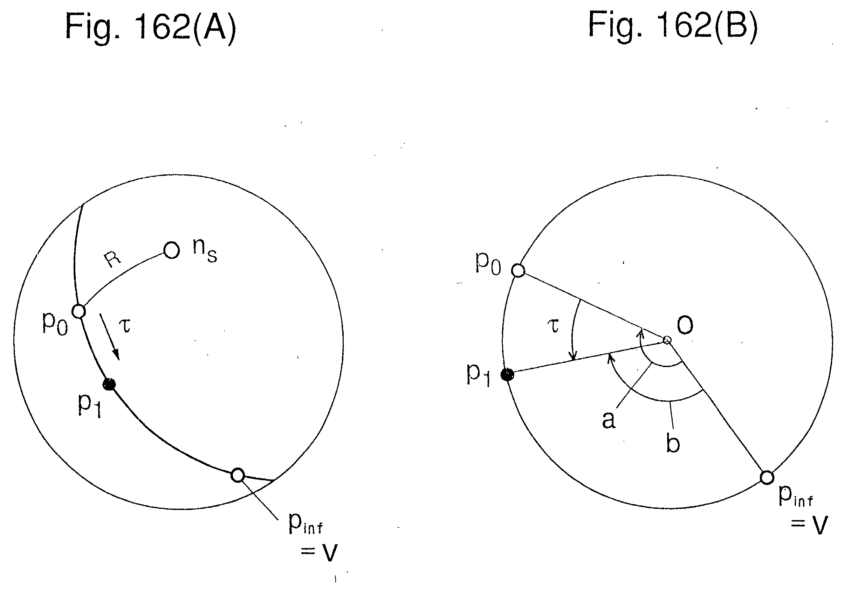

Fig. 135 is a block diagram of an embodiment F-1 of the present invention.

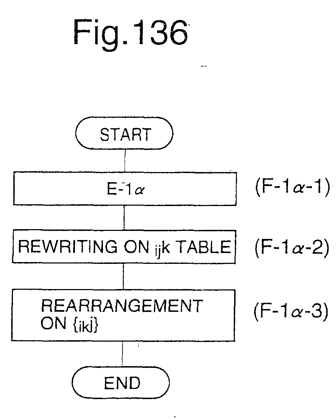

Fig. 136 is a flowchart of the embodiment F-1.

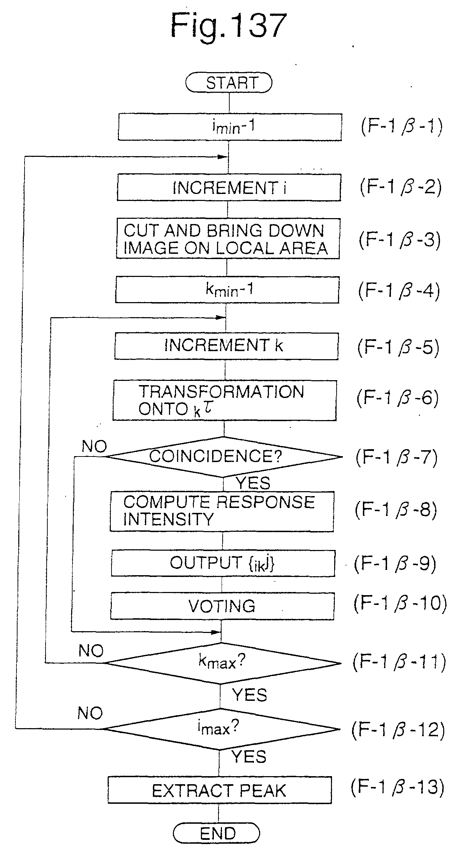

Fig. 137 is a flowchart of the embodiment F-1.

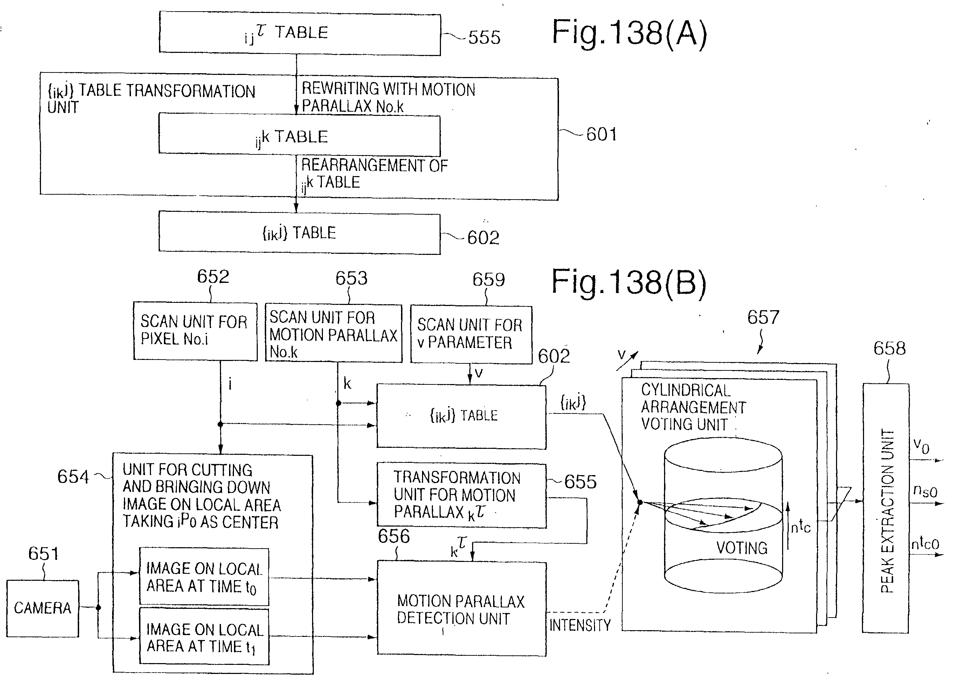

Fig. 138 is a block diagram of an embodiment F-2 of the present invention.

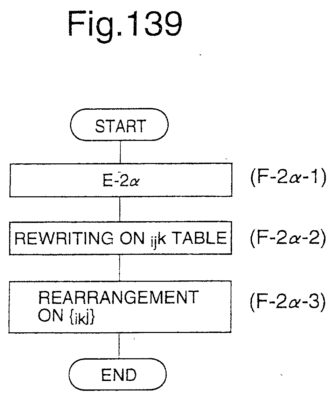

Fig. 139 is a flowchart of the embodiment F-2.

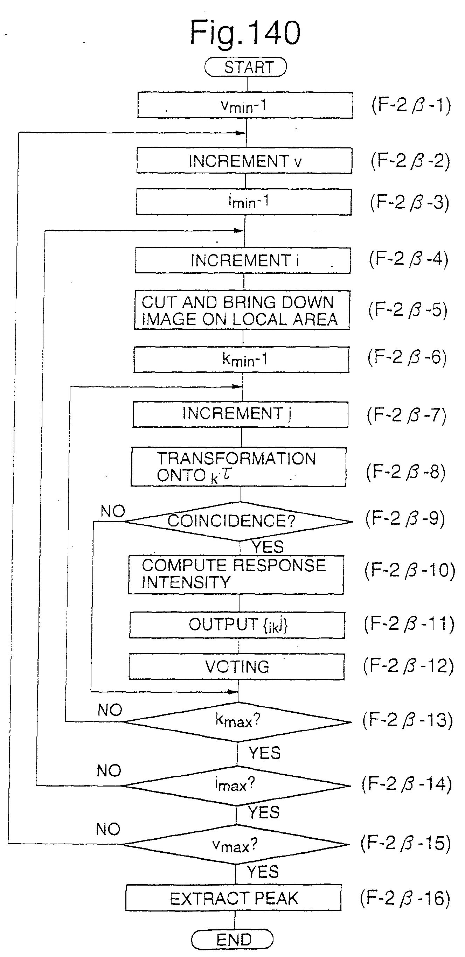

Fig. 140 is a flowchart of the embodiment F-2.

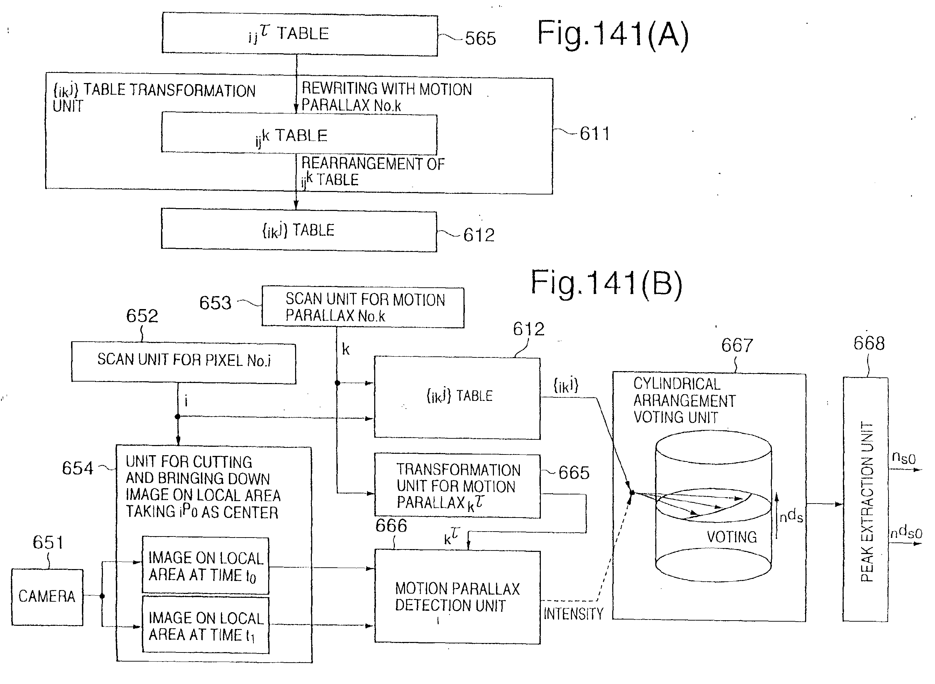

Fig. 141 is a block diagram of an embodiment F-3 of the present invention.

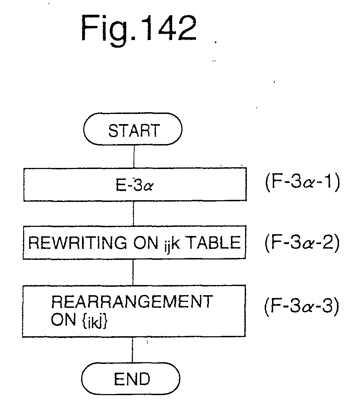

Fig. 142 is a flowchart of the embodiment F-3.

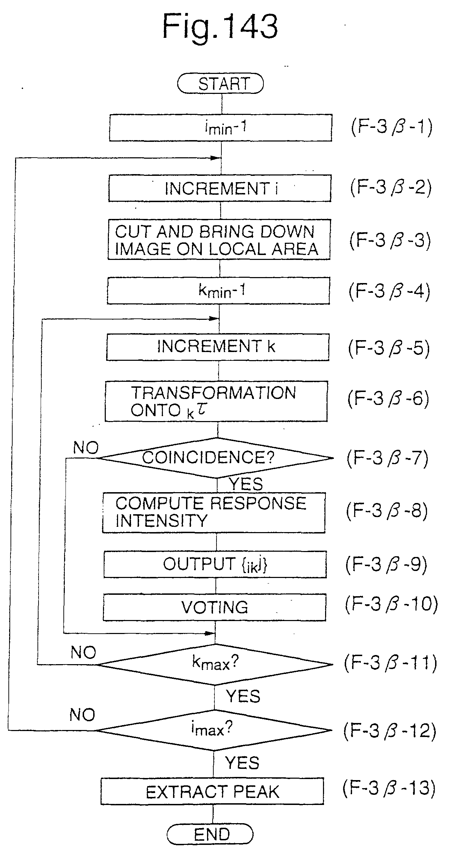

Fig. 143 is a flowchart of the embodiment F-3.

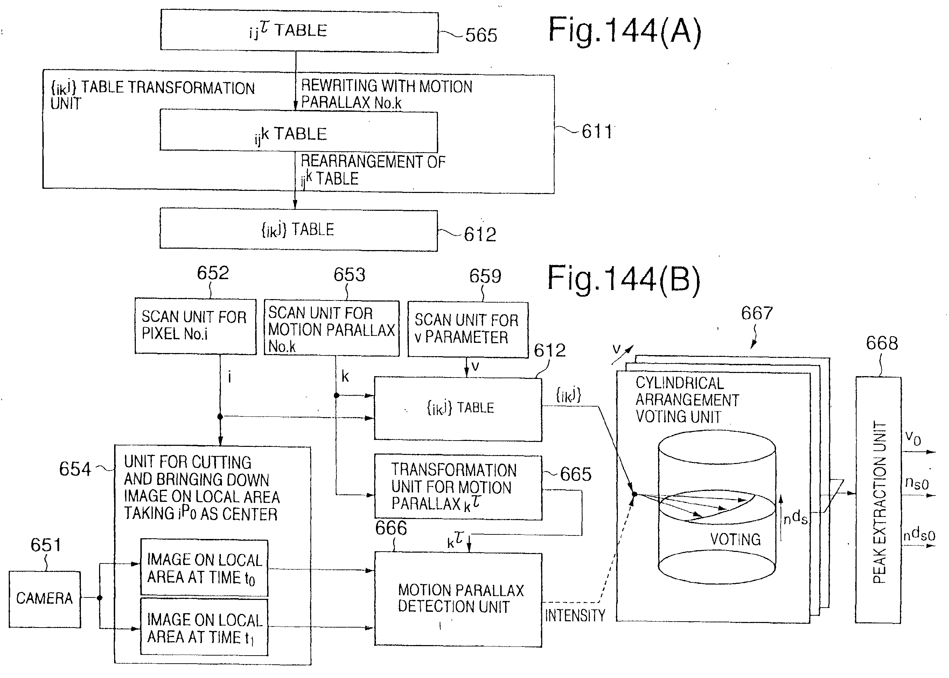

Fig. 144 is a block diagram of an embodiment F-4 of the present invention.

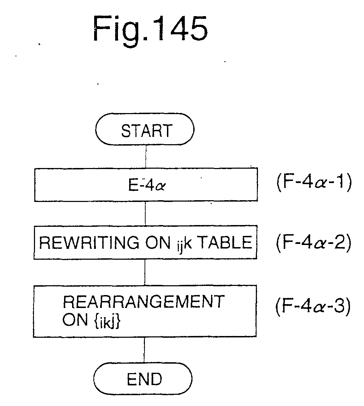

Fig. 145 is a flowchart of the embodiment F-4.

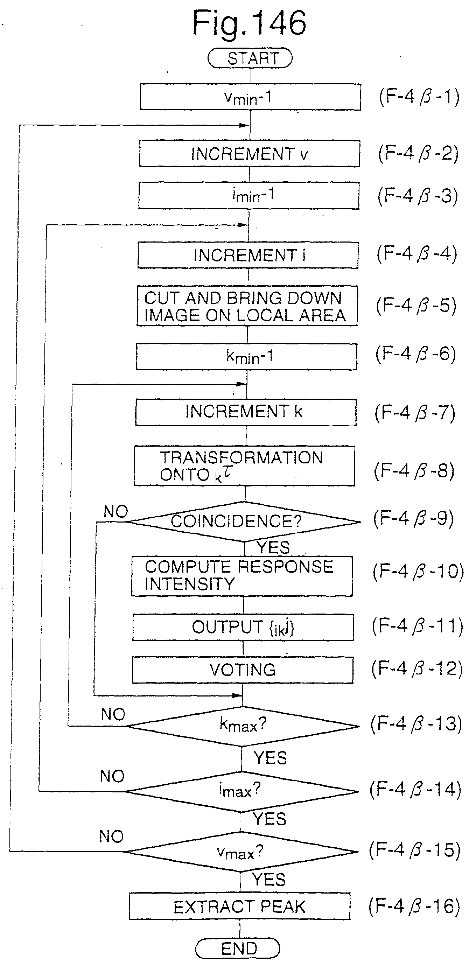

Fig. 146 is a flowchart of the embodiment F-4.

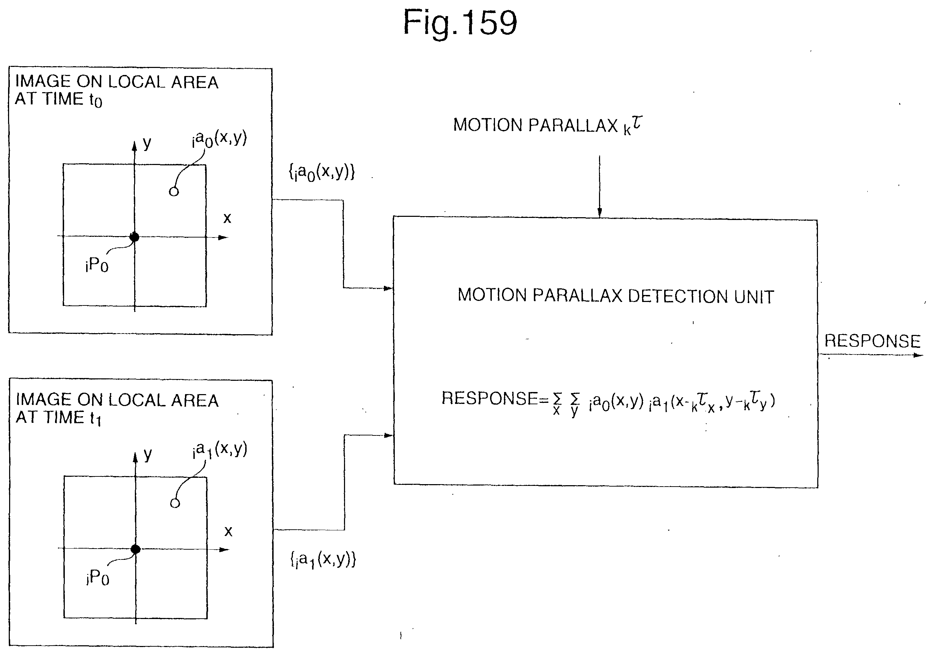

Figures 147 to 158 deleted.
Fig. 159 is a block diagram of a motion parallax detection unit.

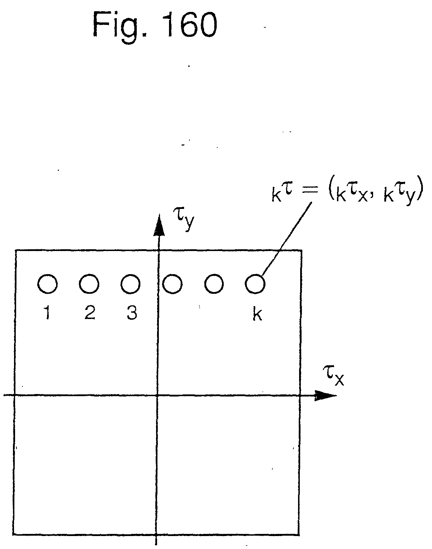

Fig. 160 is an illustration useful for understanding an association between a motion parallax $_k\tau$ and a parallactic vector $(_k\tau_x, _k\tau_y)$ .
Each of Figs. 161(A) and 161(B) is explanatory view useful for understanding a calculation method of a motion parallax $\tau$ by the compound ratio and polar transformations.
Each of Figs. 162(A) and 162(B) is explanatory view useful for understanding a calculation method of a motion parallax $\tau$ by the small circle transformation.

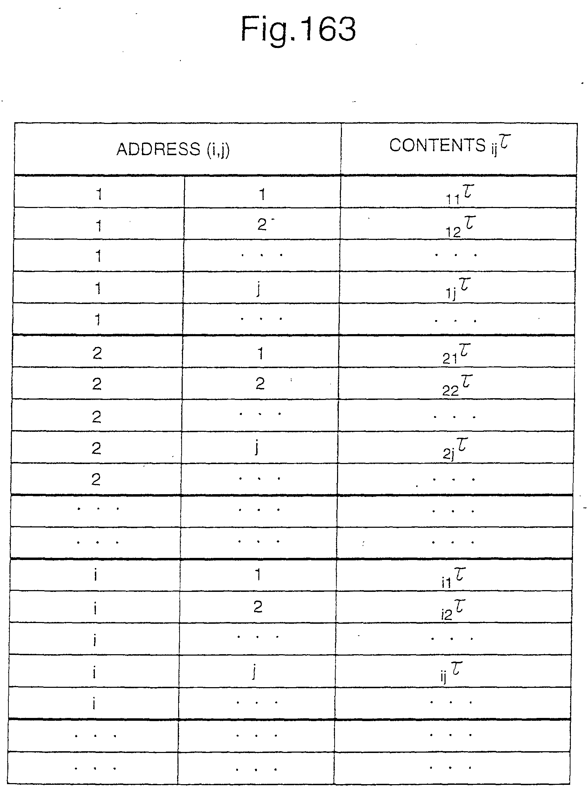

Fig. 163 is a typical illustration of an $_{ij}\tau$ table.

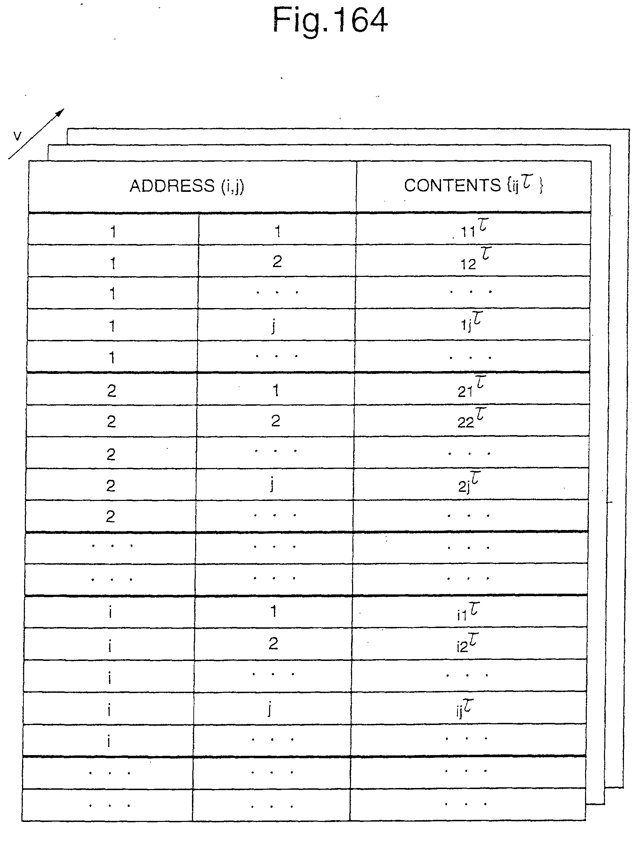

Fig. 164 is a typical illustration of an $_{ij}\tau$ table.

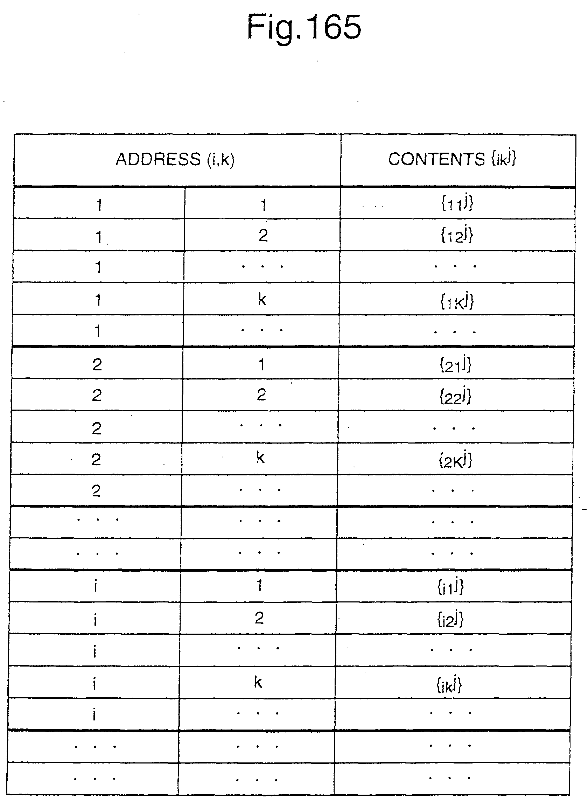

Fig. 165 is a typical illustration of a $\{_{ik}j\}$ table.

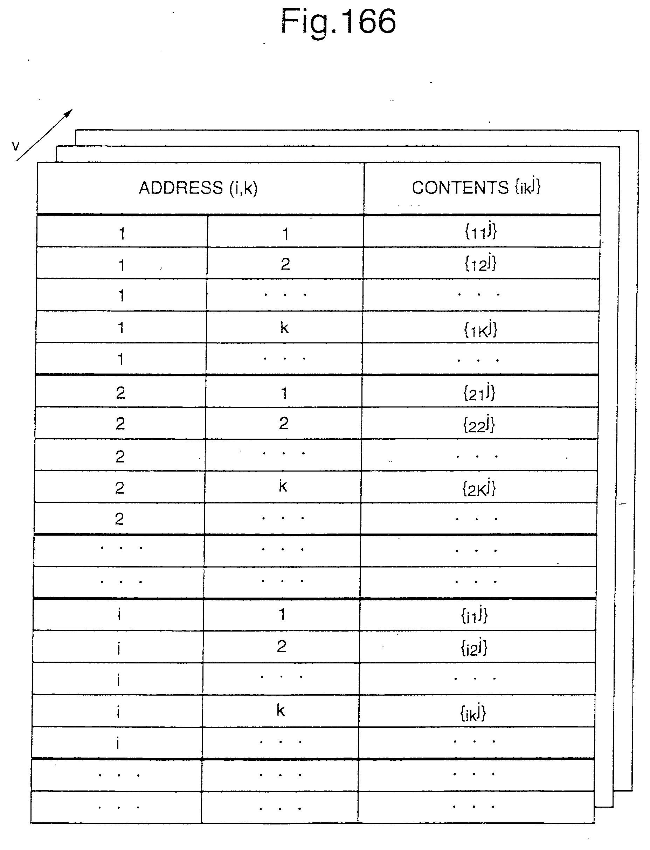

Fig. 166 is a typical illustration of a $\{_{ik}j\}$ table.
Figures 167 to 174 deleted.

DETAILED DESCRIPTION OF PREFERRED EMBODIMENTS

Embodiments of the present invention will be described with reference to the accompanying drawings.

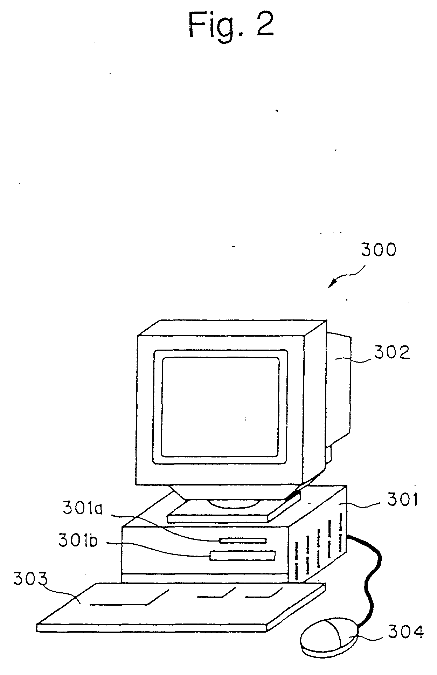

Fig. 2 is a perspective illustration of a computer system which is adopted as one embodiment of an image measurement apparatus of the present invention.

A computer system 300 comprises a main frame 301 incorporating thereinto a CPU, a RAM memory, a magnetic disk, a communication board, an image input board, etc., a CRT display 302 for performing an image display in accordance with an instruction from the main frame 301, a keyboard 303 for inputting a user's instruction and character information into the computer, and a mouse 304 for designating an arbitrary position on a display screen of the CRT display 302 to input an instruction according to an icon displayed on the position. The main frame 301 has on appearances a floppy disk loading slot 301a and an MO (magneto-optic disk) loading slot 301b onto which a floppy disk and an MO (magneto-optic disk) are detachably loaded, respectively. And the main frame 301 also incorporates thereinto a floppy disk driver for driving the loaded floppy disk and an MO (magneto-optic disk) driver for driving the loaded MO.

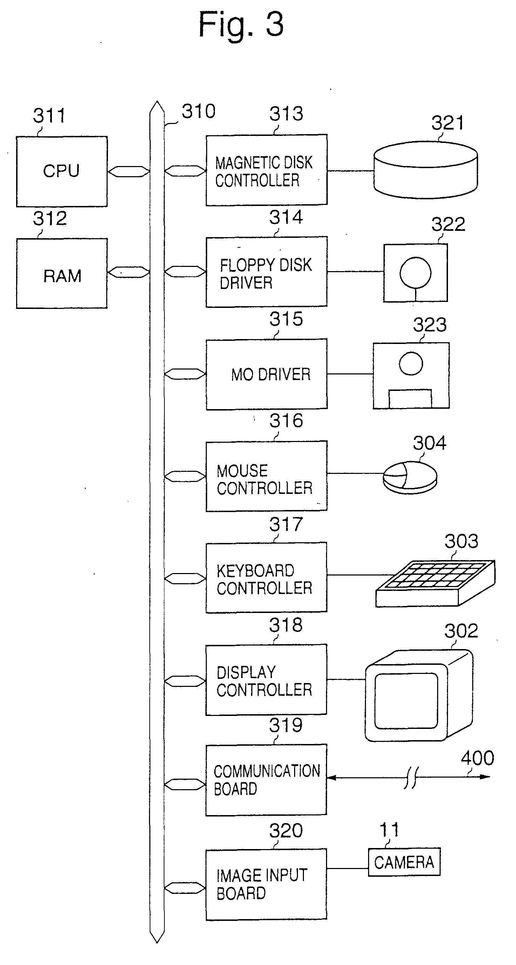

Fig. 3 is a block diagram of the computer system shown in Fig. 2.

The computer system shown in Fig. 3 comprises a central processing unit (CPU) 311, a RAM 312, a magnetic disk controller 313, a floppy disk driver 314, an MO (magneto-optic disk) driver 315, a mouse controller 316, a keyboard controller 317, a display controller 318, a communication board 319, and an image input board 320. Those constituting elements are coupled with a bus 310.

The magnetic disk controller 313 serves to access a magnetic disk 321 incorporated into the main frame 301 (cf. Fig. 2).

The floppy disk driver 314 and the MO driver 315, onto which a floppy disk 322 and an MO (magneto-optic disk) 323 are detachably loaded, respectively, serve to access the floppy disk 322 and the MO 323, respectively.

The mouse controller 316 and the keyboard controller 317 serve to transmit operations of the mouse 304 and the keyboard 303 into the computer.

The display controller 318 causes the CRT display 302 to display an image in accordance with a program operative in the CPU 311.

The communication board 319 is connected through a communication line 400 to a communication network such as a LAN and an internet, and serves to receive image data via the communication network for instance.

The image input board 320 is connected to an external camera 11 (e.g. an electronic still camera, or a video camera), and serves to take in image data obtained through a photography by the camera 11 inside the computer. While Fig. 3 shows only one camera, it is acceptable that two cameras are connected to the image input board 320, so that two sheets of image, which are obtained through a simultaneous photography for the same subject by the two cameras from mutually different directions corresponding to human's binocular parallax for example, can be entered.

A program, which is stored in the floppy disk 322 and the MO 323, or a program, which is transmitted via the communication line 400, is installed in the computer system 300, so that the computer system 300 is operable as an image measurement apparatus according to the present invention which will be described latter. Thus, an embodiment of an image measurement apparatus according to the present invention is implemented in the form of a combination of a hardware of the computer system shown in Figs. 2 and 3 and a program installed in the computer system and to be executed. A program, which causes the computer system to be operative as an image measurement apparatus according to the present invention, corresponds to an image measurement program referred to in the present invention. In the event that the image measurement program is stored in the floppy disk 322 and the MO 323, the floppy disk 322 and the MO 323, which store the image measurement program, correspond to an image measurement program storage medium referred to in the present invention. When the image measurement program is installed in the computer system, the installed image measurement program is stored in the magnetic disk 321. Thus, the magnetic disk 321, which stores the image measurement program, also corresponds to an image measurement program storage medium referred to in the present invention.

Here, functions of the computer system 300 shown in Figs. 2 and 3 as the image measurement apparatus are shown in the various types of function block diagrams, which will be described later, and the contents of the image measurement program operative in the computer system 300 are shown in the various types of flowcharts, which will be described later. The various types of flowcharts, which will be described later, can be understood in the form of "methods", and thus the various types of flowcharts, which will be described later, correspond to the various embodiments of an image measurement method according to the present invention.

Here, the explanation of the embodiments of the present invention is discontinued, and the principle of the image measurement according to the present invention will be described and thereafter the various embodiments of the present invention will be described.

1. A measurement method of a three-dimensional azimuth of a plane and a time up to crossing.

There will be provided hereinafter a method of measuring a three-dimensional azimuth $n_s$ of a plane and a time $t_c$ up to crossing the plane, of the three-dimensional geometric information of the plane.

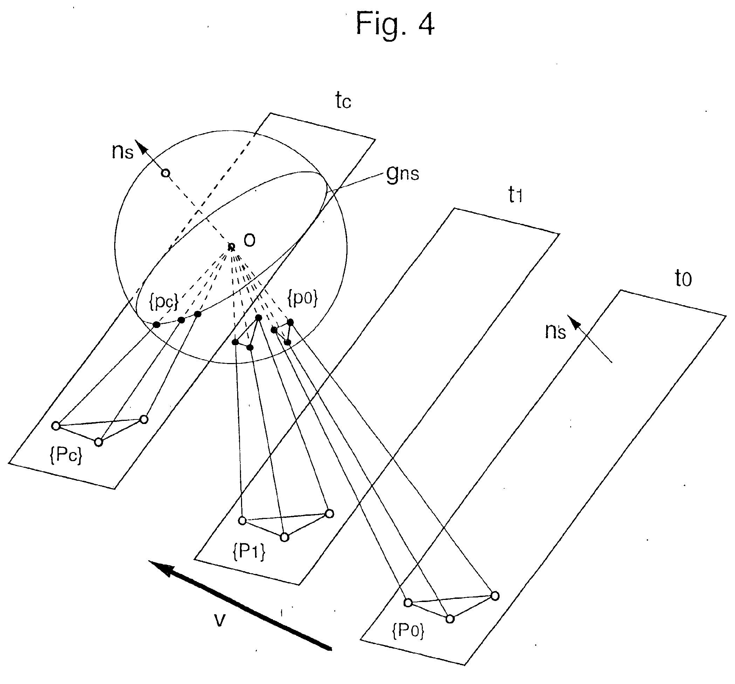

It is assumed that a plane is moved in a direction v. Fig. 4 shows a state that a plane wherein a normal vector is given by $n_s$ (a plane wherein a three-dimensional azimuth is given by $n_s$) is moved from the present time $t_0$ to the subsequent time $t_1$, and the plane goes across a camera center O at time $t_c$. The tops (white circles) of a triangle on the plane at the respective times are projected on a retina of an eyeball (or a spherical camera) in the form of cross points (black circles) between lines coupling the camera center O with the respective tops and a surface of the eyeball (or a spherical camera). Hereinafter, for the purpose of simplification, it is assumed that the diameter of the eyeball (or a spherical camera) is given by 1. Consequently, the vector coupling the camera center O with the black circle offers a "unit vector" of magnitude 1.

1. 1. The principles of measuring a three-dimensional azimuth $n_s$ of a plane

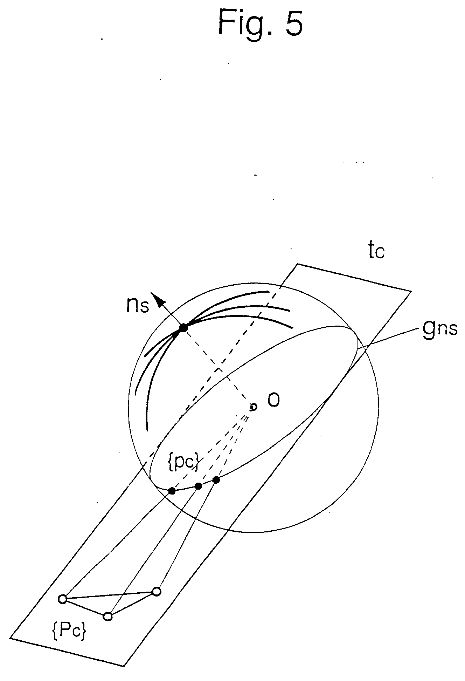

Fig. 5 is an explanatory view useful for understanding a principle of measuring a three-dimensional azimuth of a plane. Fig. 5 shows a state at time $t_c$. At that time, the plane passes through the camera center O. Accordingly, a dot group (white circles) on a plane is projected on a sphere in the form of a "dot group (black circles) on a large circle $g_{ns}$" through a degeneration. This large circle is a line of intersection of the plane with the sphere. Consequently, the vector $p_c$ perpendicularly intersects with the normal vector $n_s$ of the plane. From this relation, the normal vector $n_s$ of the plane can be measured in the form of a "polar transformation" of the vector $p_c$ as follows. That is, when a large circle (the largest circle on the sphere) is drawn on each of the vectors $p_c$ taking it as a center, a group of large circles intersect at one point so that a normal vector (that is, a three-dimensional azimuth) $n_s$ of the plane is measured in the form of the cross point. In this manner, a determination of $p_c$ on a plurality of points makes it possible to determine a three-dimensional azimuth of the plane through the polar transformation. Here, the term of the polar transformation will be explained. The points $p_c$ and the large circles on the sphere are referred to as "poles" and "polar lines", respectively, and an operation of transferring the pole $p_c$ to the polar line (large circle) is referred to as the "polar transformation" or a "duality".

1. 2. The principles of measuring a normalized time $_nt_c$ up to going across a plane

The principle of measuring the normalized time $_nt_c$ will be described. Here, the normalized time is defined as a time wherein time $t_c$ up to crossing a plane is normalized with a time difference $\Delta t$ between the present time $t_0$ and the subsequent time $t_1$, and is expressed by the following equation (1).

$$_{n}t_{c} = t_{c}/\Delta t \tag{1}$$

$$\Delta t = t_{1} - t_{0} \tag{2}$$

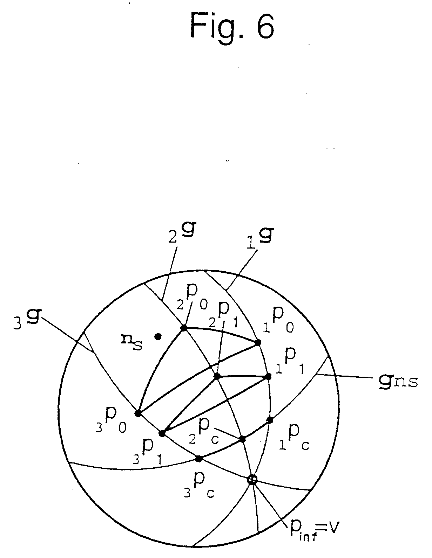

Fig. 6 is a view showing a state that a triangle (black circles), which is projected on a sphere shown in Fig. 4, is moved. A triangle $_{1}p_{0}, {}_{2}p_{0}, {}_{3}p_{0}$ at the present time $t_{0}$ is moved to $_{1}p_{1}, {}_{2}p_{1}, {}_{3}p_{1}$ at the subsequent time $t_{1}$, and is moved, at the time $t_{c}$ crossing a plane, to three points $_{1}p_{c}, {}_{2}p_{c}, {}_{3}p_{c}$ on the "large circle $g_{ns}$ perpendicularly intersecting with the normal vector ns of a plane" through a degeneration, and finally converges in a moving direction v after the infinite time elapses. The three tops are moved on "large circles $_{1}g, {}_{2}g, {}_{3}g$ coupling those with the moving direction v", respectively. It is noted that the moving direction v is involved in a position after the infinite time elapses and thus is also denoted by $P_{inf}$ hereinafter.

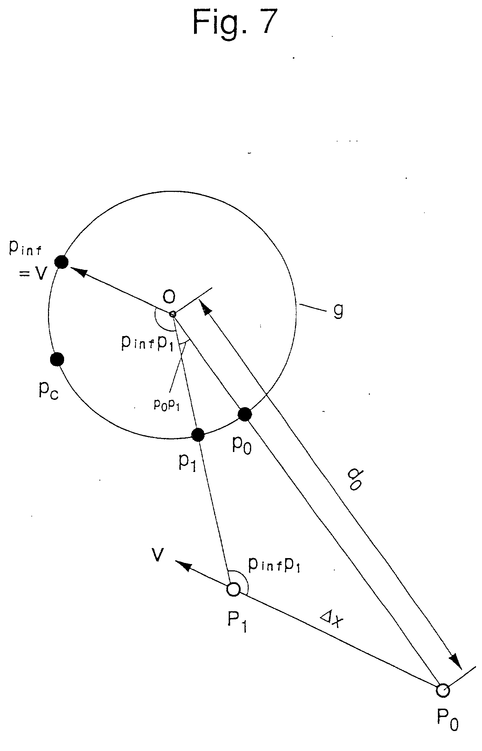

Fig. 7 is an explanatory view useful for understanding a principle of measuring a distance up to a point.

As a preparation for measuring the normalized time $_{n}t_{c}$, it is possible that a position $P_{0}$ at the present time, a position $P_{1}$ at the subsequent time, and a position $P_{inf}$ after the infinite time elapses are determined so that a three-dimensional distance $d_{0}$ of a point at the present time (or a distance from the camera center O to the point $P_{0}$) can be measured. Fig. 7 shows a sectional view wherein a sphere is cut at "one (g) of the large circles each representative of a moving locus" shown in Fig. 6. When a sine theorem is applied to a triangle O $P_{0}$ $P_{1}$, there is a relation as set forth between a distance $d_{0}$ to a point $P_{0}$ and a "moving distance $\Delta x$ from the present time to the subsequent time".

$$\Delta x/\sin (p_{0}p_{1}) = d_{0}/\sin (p_{inf}p_{1}) \tag{3}$$

Where $p_{0}p_{1}$ denotes a central angle from $p_{0}$ to $p_{1}$, and $p_{inf}p_{1}$ denotes a central angle from $p_{inf}$ to $p_{1}$. When the equation (3) is modified, the distance $d_{0}$ to the point $p_{0}$ is expressed by the following equation.

$$d_{0} = \Delta x \sin (p_{inf}p_{1})/\sin p_{0}p_{1} \tag{4}$$

where a "simple ratio (a b c) as to three points a, b, c of the large circle is defined (cf. "Projective Geometry (by Gurevic, G.B., Tokyo Books)", page 6) as follows.

$$(abc) = ac/bc = \sin (ac) /\sin (bc) \tag{5}$$

when the simple ratio is used, the equation (4) is expressed by the equation (6). The adoption of the expression of the simple ratio may avoid the necessity of the adoption of the scheme of the central projection, and thus makes it possible to measure the distance $d_{0}$ from not only the above-mentioned three points $p_{0}, p_{1}, p_{c}$ moving on the large circle of a "spherical camera or an eyeball", but also three points $p_{0}, p_{1}, p_{c}$ moving on a "straight line of an image on a planar camera". That is, it is possible to measure the distance $d_{0}$ of a point on a three-dimensional basis regardless of a camera system for a photography of an image.

$$d_{0} = \Delta x (p_{inf}p_{0}p_{1}) \tag{6}$$

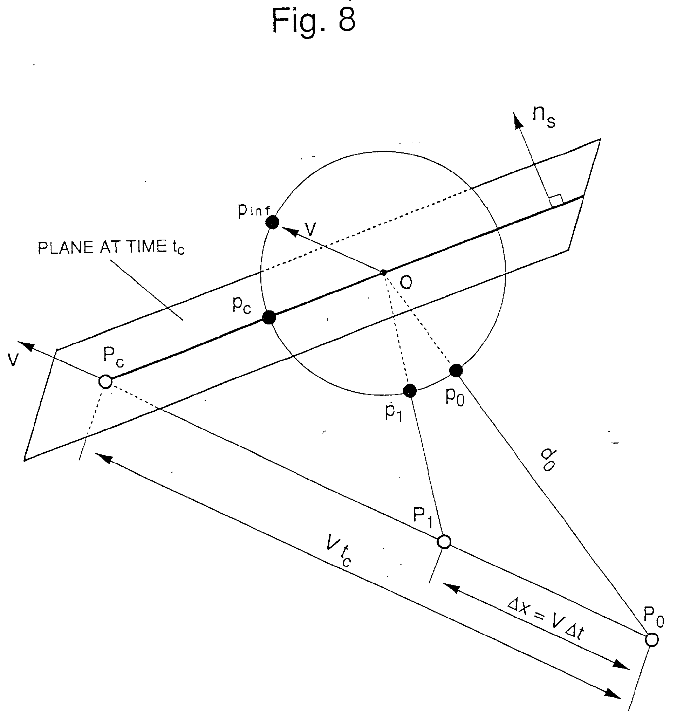

Next, there will be explained the principle of measuring the normalized time $_{n}t_{c}$ on the basis of the above-mentioned preparation. Fig. 8 is an explanatory view useful for understanding a principle of measuring a normalized time. Fig. 8 is equivalent to a figure in which a "plane crossing the camera center O at the time $t_{c}$" is added into Fig. 7. Assuming that a moving velocity is given by V, a relation between the "moving distance $\Delta x$ from the present time to the subsequent time" and the time difference $\Delta t$ between the present time and the subsequent time is expressed by the following equation (7).

$$\Delta x = V \cdot \Delta t \tag{7}$$

When the equation (7) is substituted for the equation (4) and the equation (6), the following equations (8a) and (8b) can be obtained.

$$d_0 = V \, \Delta t \, \sin (p_{inf} p_1) / \sin (p_0 p_1) \qquad (8a)$$

$$= V \, \Delta t \, (p_{inf} p_0 p_1) \qquad (8b)$$

Assuming that time up to crossing the plane is expressed by $t_c$, when a sine theorem is applied to a triangle $O \, P_0 \, P_c$, the distance $d_0$ can be determined in accordance with the following equations (9a) and (9b).

$$d_0 = V \, t_c \, \sin (p_{inf} p_c) / \sin (p_0 p_c) \qquad (9a)$$

$$= V \, t_c \, (p_{inf} p_0 p_c) \qquad (9b)$$

From the ratio of the equations (8a) and (8b) and the equations (9a) and (9b), the normalized time $_n t_c$ up to going across the plane can be determined in accordance with the following equations (10a) and (10b).

$$_n t_c = t_c / \Delta t$$

$$= (\sin (p_{inf} p_1) / \sin (p_0 p_1)) / (\sin (p_{inf} p_c) / \sin (p_0 p_c)) \qquad (10a)$$

$$= (p_{inf} p_0 p_1) / (p_{inf} p_0 p_c) \qquad (10b)$$

Here, the compound ratio {a b c d} as to four points a, b, c, d on the large circle is defined by the following equation (11a) in the form of the "ratio of two simple ratios (a b c) and (a b d)", and is expressed by the relation set forth in the following equation (11b) (cf. "Projective Geometry (by Gurevic, G.B., Tokyo Books)", pages 257 and 119).

$$\{a \, b \, c \, d\} = (a \, b \, c) / (a \, b \, d)$$
$$= (a c / b c) / (a d / b d) \qquad (11a)$$
$$= (\sin (a c) / \sin (b c)) / (\sin (a d) / \sin (b d)) \qquad (11b)$$
$$\{a \, b \, c \, d\} = \{b \, a \, d \, c\} = \{c \, d \, a \, b\} = \{d \, c \, b \, a\} \qquad (11c)$$

When the definition of the compound ratio equation (11a) is used, the equations (10a) and (10b) are expressed by the following equation (12a).

$$_n t_c = \{p_{inf} p_0 p_1 p_c\} \qquad (12a)$$

In this manner, a determination of four points $p_0$, $p_1$, $p_c$, $p_{inf}$ on the moving locus makes it possible to determine the normalized time $_n t_c$ in the form of the compound ratio of the equation (12a).

Here, let us consider the projective geometric meaning of the equation (12a). According to the description at page 86 of "Projective Geometry (by Yanaga and Hirano, Asakura Book Store)", the compound ratio is defined such that "the coordinates $\lambda$ of d by the basic point system a, b, c is referred to as the compound ratio, and is represented by {a b c d}" (also at page 119 of "Projective Geometry (by Gurevic, G.B., Tokyo Books)", there is the similar description). In this definition, 'when the basic point system a, b, c is replaced by the basic point system $p_{inf}$, $p_0$, $p_1$, and the value $\lambda$ of the compound ratio is replaced by $_nt_c$, the definition of the compound ratio is changed to read as "the coordinates $_nt_c$ of $p_c$ by the basic point system $p_{inf}$, $p_0$, $p_1$, is referred to as the compound ratio, and is represented by {$p_{inf}$, $p_0$, $p_1$, $p_c$}". Consequently, the equation (12a) means on a projective geometric basis

"the normalized time $_nt_c$ is coordinates of $p_c$ which is measured by a basic point system wherein the original point, the infinite-point and the unit point are given by $p_0$, $p_{inf}$, $p_1$, respectively". (12b)

The compound ratio of the equation (12a) is the basic invariant of the projective geometry, and is constant for the arbitrary projection and cut. That is, the compound ratio is constant for an "image on an arbitrary camera system" of a spherical camera, a planar camera and the like. Consequently, it is possible to measure in the form of the compound ratio the "normalized time $_nt_c$ up to crossing a plane" from not only the above-mentioned four points $p_0$, $p_1$, $p_c$, $p_{inf}$ moving on the large circle of a "spherical camera or an eyeball", but also four points $p_0$, $p_1$, $p_c$, $p_{inf}$ moving on a "straight line of an image on a planar camera". That is, it is possible to measure the normalized time $_nt_c$ regardless of a camera system for a photography of an image.

1. 3. A method of determining a three-dimensional geometric information of a plane by a compound ratio transformation and a polar transformation.

Let us consider as to whether it is possible to know four positions $p_0$, $p_1$, $p_c$, $p_{inf}$ used in the above-mentioned principle. First, the position $p_0$ at the present time and the position $p_1$ at the subsequent time can be known from an image on a camera. Next, the position at the infinite time can be known since it is equivalent to a moving direction v of the plane (or the camera). Of the above-mentioned four positions, what is impossible to be known directly is the position $p_c$ at the time $t_c$ wherein the plane goes across the camera center.

The position $p_c$ can be estimated by the "compound ratio transformation" which is obtained through a modification of the equation (10a) or the equation (12a). The three-dimensional geometric information (a three-dimensional azimuth $n_{s0}$ and a normalized time $_nt_{c0}$ up to crossing) of a plane can be measured through the "polar transformation" of $p_c$ in accordance with the method of 1.1. These matters will be explained hereinafter.

1. 3. 1 A compound ratio transformation

According to this compound ratio transformation, the normalized time $_nt_c$ and positions $p_0$, $p_1$, $p_{inf}$ at three times are determined, and "the above-mentioned position $p_c$", which is important for determination of the three-dimensional geometric information, is computed. Since four variables $_nt_c$, $p_0$, $p_1$, $p_{inf}$ can be determined in the equation (12a), it is possible to determine the remaining variable $p_c$. This computation is well known as a method of computation for a compound ratio of a projective geometry.

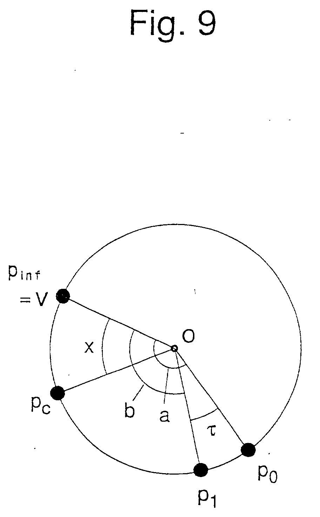

This computation will be given by a mathematical expression. Fig. 9 shows a sectional portion of the sphere extracted from Fig. 8. The positions of $p_0$, $p_1$, $p_c$ are represented by the central angles a, b, x taking $p_{inf}$ as the basic point (it is acceptable that the basic point may be an arbitrary position). The various central angles are as follows.

$$p_{inf}p_0 = a \tag{13}$$

$$p_{inf}p_1 = b$$

$$p_{inf}p_c = x$$

$$p_0p_1 = b-a$$

$$p_0p_c = x - a$$

The above-mentioned compound ratio transformation will be given by the mathematical expression using those central angles. When the right-hand member of the equation (10a), that is, the compound ratio is expressed by the use of the central angles shown in the equation (13), the following equation is obtained.

$$_nt_c = (\sin (b) / \sin (b - a))$$

$$/ (\sin(x) / \sin(x-a)) \tag{14a}$$

When it is modified, the central angle x between $p_c$ and $p_{inf}$ is given by the following equation.

$$x = \tan^{-1} ( (\sin (a) \sin(b))$$

$$/ (\cos (a) \sin (b) -_nt_c \sin (b-a))) \tag{14b}$$

Accordingly, when the normalized time $_nt_c$ and "positions $p_0$, $p_1$, $p_{inf}$ at three times" are given, the position $p_c$ at the time crossing a plane is computed in accordance with the equation (14b). That is, the mathematical expressions for the compound ratio transformation are shown.

In the general dynamic picture image processing and the optical flow, it often happens that "change $p_1$- $p_0$ from the present time (that is, it is the motion parallax $\tau$ and is expressed by the central angle $p_0p_1$)" instead of "the position $p_1$ at the subsequent time" is treated. The respective arrows of the optical flow pattern (Fig. 1) correspond to this change, and the starting point and the terminating point of the arrow correspond to the present time position $p_0$ and the subsequent time position $p_1$ , respectively. In Fig. 9, such a change is represented by the angle $\tau$ . In this case, the mathematical expressions for the compound ratio transformation will be set forth below.

The various central angles are given as follows.

$$p_{inf}p_0 = a$$

$$p_0p_1 = \tau$$

$$p_{inf}p_c = x$$

$$p_{inf}p_1 = a + \tau$$

$$p_0p_c = x - a \tag{15}$$

When the right-hand member of the equation (10a) is expressed using the central angles of the equation (15), the following equation can be obtained.

$$_nt_c = (\sin (a + \tau) / \sin (\tau))$$

$$/ (\sin (x) / \sin (x-a)) \tag{16a}$$

When this is modified, the central angle x between $p_c$ and $p_{inf}$ is given by the following equation.

$$x = \tan^{-1} ((\sin (a) \sin (a + \tau))$$

$$/ (\cos (a) \sin (a + \tau) -_nt_c \sin (\tau))) \tag{16b}$$

Thus, additional mathematical expressions for the compound ratio transformation can be obtained.

1. 3. 2 A method of determining a three-dimensional azimuth of a plane and a normalized time up to going across the plane

There will be explained a method of determining a three-dimensional azimuth $n_s$ of a plane and a normalized time $_nt_c$ up to going across the plane. It is performed in the following four steps.

(1) Set up arbitrarily a normalized time parameter $_nt_c$.
(2) With respect to the respective points of an image, determine the positions $p_0$, $p_1$ at the present time and the subsequent time from the image on a camera, respectively, and determine the position $p_{inf}$ after the infinite time elapses from the moving direction v, and substitute those positions for the equation (14b) or the equation (16b) to perform the compound ratio transformation so that the position $p_c$ is computed.
(3) Determine candidates for the normal vector $n_s$ of a plane in accordance with "the principles of measuring a three-dimensional azimuth ns of a plane" of 1.1. That is, $p_c$ determined in the step (2) is subjected to the polar transformation to draw large circles on a sphere. Here there will be explained the meaning of drawing the large circles. If the normalized time parameter $_nt_c$ given in the step (1) is a true normalized time $_nt_{c0}$, as described in connection with Fig. 5, it is possible to determine the normal vector $n_{s0}$ of a plane in the form of the cross point of the large circles. However, in the step (1), the parameter $_nt_c$ is arbitrarily set up and thus generally the large circles do not intersect with each other at one point. Therefore, the large circles drawn here mean determining candidates for the normal vector $n_s$ of a plane.
Incidentally, intensity of the large circle corresponds to "brightness of position $p_0$ in an image", and in the place wherein a plurality of large circles intersect with each other, intensity of the large circles is added.
(4) The above-mentioned steps (1) to (3) are repeatedly carried out through changing the normalized time parameter $_nt_c$ to determine a parameter value $_nt_{c0}$ wherein a plurality of large circles drawn in the step (3) intersect with each other at one point. Thus, a "normalized time $_nt_{c0}$ up to crossing a plane" is obtained in the form of the parameter value. Further, the azimuth $n_{s0}$ of a plane is obtained in the form of coordinates of the above-mentioned cross point. It is acceptable that a point wherein intensity offers a peak is detected instead of detection of the above-mentioned cross point.

Here, there-will be described a geometric meaning of the position $P_c$ computed through the compound ratio transformation in the step (2). The position $p_c$ is one in which the position at the arbitrarily time $_nt_c\Delta t$ is "predicted". This prediction is apparent from the derivation process of the equation (10a) which is the base for the compound ratio transformation. On the other hand, intuitively, the equation (12b) may be understood as follows:

"In order to predict the position at the arbitrarily time $_nt_c\Delta t$ (that is, the normalized time parameter $_nt_c$), it is effective to determine the position $p_c$ of $_nt_c$ in coordinates in a basic point system wherein the original point, the infinite-point and the unit point are given by $p_0$, $p_{inf}$, $p_1$, respectively"

The time, in which the positions $p_c$ thus predicted are located on the large circles, corresponds to the "time $_nt_{c0}\Delta$ t in which a plane crosses the camera center (that is, the time $t_{c0}$ )", and the "normalized time $_nt_{c0}$ up to crossing a plane" is determined in accordance with that time. The large circles, in which those positions $p_c$ are subjected to the polar transformation, intersect with each other at one point, so that the three-dimensional azimuth $n_{s0}$ of a plane is determined in the form of the coordinates of the cross point (cf. Fig. 5).

1. 3. 3 Geometric meaning of the above-mentioned steps

Geometric meaning of the above-mentioned steps will be explained in conjunction with Figs. 10(A) and 10 (B). As shown in Fig. 10(A), the respective points on an image on a spherical camera move from the position $p_0$ at the present time to the position $p_1$ at the subsequent time, pass through the position $p_c$ at the "time in which a plane crosses the camera center" , and finally after the infinite time elapses, reach the "position $p_{inf}$ equivalent to the moving direction v of a plane (or a camera)" (cf. Fig. 6).

Determination of the position $p_c$ (Meaning of the step (2)): The "positions $p_0$, $p_1$ at the present time and the subsequent time" and the "normalized time parameter $_nt_c$" given by the step (1) are subjected to the compound ratio transformation in accordance with the equation (14b) so that the position $p_c$ at the "time in which a plane crosses the camera center" is determined. This is shown in Fig. 10(A). Incidentally, in the event that the compound ratio transformation according to the equation (16b) is used, a "difference vector $\tau$ from the position $p_0$ at the present time to the position $p_1$ at the subsequent time" is used instead of the position $p_1$ at the subsequent time.

Drawing of a candidate group $\{n_s\}$ of a planer azimuth (Meaning of the step (3)): The position $p_c$ determined as mentioned above is subjected to the polar transformation to draw on a sphere a large circle or a candidate group $\{n_s\}$ of a planer azimuth as shown in Fig. 10(A). If the normalized time parameter $_nt_c$ given in the step (1) is a true normalized time $_nt_{c0}$, it is possible to determine the normal vector $n_{s0}$ of a plane in the form of the cross point of these large circles associated with a plurality of points on the image.

Determination of three-dimensional geometric information in the form of coordinate value of a cylindrical arrangement (Meaning of the step (4)): A sphere shown in Fig. 10(A) is projected onto the plane to transform the image on the sphere into the inside of the "circle". As a projecting method, there are known an isometric solid angle projection, an equidistant projection, an orthogonal projection, etc. ("Problems associated with newest lens design course 23 lens design (1) (by Nakagawa, Photography Industry, 1982)" : Section 4.2.2.1, "Report of Sho. 59 Utility Nuclear Electric Power Generation Institution Robot Development Contract Research (Advanced Robot Technology Research Association)"; Section 4.2.2.1, "Report of Sho. 60 Utility Nuclear Electric Power Generation Institution Robot Development Contract Research (Advanced Robot Technology Research Association)". The circles are accumulated taking the normalized time parameter $_nt_c$ as a vertical axis to form the "cylindrical arrangement" as shown in Fig. 10(B). This feature makes the geometric meaning of the step (1) clear. That is, it means that the "normalized time parameter $_nt_c$ " arbitrarily given by the step (1) designates height coordinates of this cylinder, and in the steps (2) and (3) the sectional circle at that height, or one in which a spherical image shown in Fig. 10(A) is transformed inside the "circle", is drawn. In step (1), the parameter $_nt_c$ is arbitrarily given, and thus, as seen from Fig. 10(B), the large circles do not intersect with each other at one point. However, on the sectional circle, in which it's height is equivalent to the true normalized time $_nt_{c0}$ , the large circles intersect with each other at one point. Thus, it is possible to obtain the normalized time $_nt_{c0}$ of a plane in the form of the "height coordinates" of the cylinder, and also to obtain the three-dimensional azimuth $n_s$ in the form of the "intersection coordinates inside a sectional circle" (Fig. 10(B)).

1. 4 A confirmation by a simulation

It will be shown by a computer simulation that the "algorithm of measuring three-dimensional geometric information of a plane" explained in 1. 3. 2 and 1. 3. 3 is correct (Fig. 11). The simulation was carried out in accordance with a flow of an embodiment A-1.

First, there will be described input data. There is a vertical plane right in front of a spherical camera (or an eyeball), and a distance up to the camera center is 3m. The plane moves in a direction vertical to the plane (that is, a direction parallel with the normal vector $n_{s0}$ of the plane) toward the camera at the velocity 1m/second. There are eight points on the plane. The "positions $p_0$, $p_1$ on the sphere at the present time and the subsequent time" are observed in the form of input image data. A time difference $\Delta t$ between the present time and the subsequent time is 0.05 second. The position $p_{inf}$ at the infinite time is equivalent to a moving direction v and is located at the center of the visual field. From the above, the time $t_c$ until the camera goes across the plane is 3/1 = 3 second, and thus the normalized time $_nt_{c0}$ is 3/0.05 = 60. The normal vector $n_{s0}$ of the plane is located at the center of the visual field.

Fig. 11 is an illustration showing a result of a computer simulation in which three-dimensional geometric information of a plane ($_nt_{c0}$ and $n_{s0}$ ) is determined from the positions $p_0$ , $p_1$ at the present time and the subsequent time and the position $p_{inf}$ after the infinite time elapses in accordance with the above-mentioned algorithm (the compound ratio transformation and the polar transformation). In Fig. 11, there are shown the "sectional circles of cylinders" at the respective normalized time parameters $_nt_c$ explained in connection with 1. 3. 3. Each of the sectional circles is obtained through a projection of the sphere of Fig. 10(A) onto a plane passing through the sphere in accordance with the "equidistant projection (cf. the equation (103c) explained 1. 3. 3". The lower right is of the sectional circle at time $_nt_c$ = 0 corresponding to the present time, and the respective sectional circles are arranged in such an order that the parameter $_nt_c$ is incremented toward $_nt_c$ = infinity corresponding to the infinite time of the upper left. Next, there will be explained the respective sectional circles. In each of the sectional circles, the position $p_c$, which is computed through the "compound ratio transformation" on the basis of the positions $p_0$, $p_1$ and the parameter $_nt_c$, is drawn in the form of a dot. Eight positions $p_c$ associated with eight points on the plane are drawn. Those positions $p_c$ are, as described in 1. 3. 2, to "predict" the positions wherein the respective points are observed at an arbitrarily time $_nt_c\Delta t$. Next, eight large circles, wherein those positions $p_c$ are subjected to the "polar transformation", are drawn.

On the first sectional circle (lower right, $_nt_c$ = 0), those large circles are scattered. As the parameter $_nt_c$ is incremented, the large circles are converged, and on the sectional circle (the second circle from the upper of the right) wherein $_nt_c$ is 60, those large circles intersect with each other at one point. When the parameter $_nt_c$ is further incremented, those large circles are scattered again. In this manner, the large circles intersect with each other at one point only in the height $_nt_c$ = 60. This height $_nt_c$ is equivalent to the value 60 of the above-mentioned "normalized time $_nt_{c0}$ up to going across a plane". The azimuth of intersecting with one point is in the center of the visual field, and is equivalent to the "normal vector $n_{s0}$ of the plane". From the above-mentioned simulation, it has been confirmed that "algorithm of measuring three-dimensional geometric information of a plane" explained in 1. 3. 2 and 1. 3. 3 is correct.

1. 5 A method of measuring a normalized distance $_nd_c$ up to going across a plane in a moving direction

The normalized distance $_nd_c$ is one in which the "distance $d_c$ up to going across a plane in a moving direction" (this distance is $Vt_c$ in Fig. 8) is normalized with the "moving distance $\Delta x$ from the present time to the subsequent time". The normalized distance $_nd_c$ is expressed by the following equation.

$$_n d_c = d_c / \Delta x$$
$$= V t_c / \Delta x \qquad (17a)$$

The equation (7) is substituted for the equation (17a), and the equation (17a) is modified. Thus, the following expression can be obtained.

$$_n d_c = V t_c / (V \Delta t) = t_c / \Delta t$$
$$= {}_n t_c \qquad (17b)$$

This shows that the normalized distance $_nd_c$ is equivalent to the above-mentioned "normalized time $_nt_c$". Therefore, it is possible to measure the normalized distance $_nd_c$ using the method (1. 3. 2) of determining the normalized time $_nt_c$ as it is.

1. 6 A method in which it is acceptable that the moving direction v is unknown

In the above, there is described a method of measuring the three-dimensional azimuth ns of a plane and the normalized time $_nt_c$ up to crossing the plane, under the condition that the moving direction v is known. That is, the "position $P_{inf}$ after the infinite time elapses" is determined from the direction v, then the compound ratio transformation is performed using the position thus determined, and finally the polar transformation is performed, so that the three-dimensional azimuth $n_s$ and the normalized time $_nt_c$ are determined.

Here, there is provided a method capable of measuring "the three-dimensional azimuth $n_s$ and the normalized time $_nt_c$" even if the moving direction v is unknown. According to this method, even if the moving direction on photography as to an image of an internet, a video, a movie, etc., for instance, is unknown, it is possible to measure the "azimuth and time". Further, in the event that a plane moves, generally, the moving direction is unknown. However, even in such a case, it is possible to measure the "azimuth and time" together with the moving direction v. The outline of the method will be described hereinafter. Assuming that there is a possibility that the moving direction v takes any direction, "a compound ratio transformation and a polar transformation" in 1. 3. 2 is performed for each of the moving directions to draw a polar line. When the moving direction, wherein the polar lines intersect with each other at one point, is determined, it is a true moving direction $v_0$, and it is possible to determine a three-dimensional azimuth $n_s$ of a plane and a normalized time $_nt_c$ in the form of the coordinates of the cross point. This is carried out in the following steps.

(1) Set up arbitrarily a moving direction parameter v.
(2) Give a direction of the parameter v in the form of "position $P_{inf}$ after the infinite time elapses".
(3) Execute the steps (1) to (4) in 1. 3. 2 so that polar lines for all the normalized time parameters $_nt_c$ are drawn inside the cylindrical arrangement (Fig. 10(B)).
(4) The above-mentioned steps (1) to (3) are repeatedly carried out through changing the moving direction parameter v to determine a parameter value $v_0$ wherein a plurality of polar lines drawn in the step (3) intersect with each other at one point. This parameter value is a true moving direction $v_0$. Thus, an azimuth $n_{s0}$ of a plane and a normalized time $_nt_{c0}$ up to crossing a plane are obtained in the form of coordinates of the above-mentioned cross point. It is acceptable that a point wherein intensity offers a peak is detected instead of detection of the above-mentioned cross point.

2. A method of measuring the normalization shortest distance up to a plane

There is provided a method of measuring a three-dimensional azimuth $n_s$ of a plane and a normalization shortest distance $_nd_s$ up to a plane. The normalization shortest distance is one in which the shortest distance $d_s$ up to a plane is normalized with the "moving distance $\Delta x$ of a camera (or a plane) from the present time to the subsequent time". The normalization shortest distance is expressed by the following equation (19).

$$_nd_s = d_s/\Delta x \tag{19}$$

Between the normalization shortest distance $_nd_s$ and the "normalized time $_nt_c$ explained in 1", there is a relation as expressed by the following equation (20) where $n_s$ denotes a plane a three-dimensional azimuth of a plane, v denotes a moving direction, and () denotes a scalar product.

$$_nd_s = {}_nt_c \, (n_s \cdot v) \tag{20}$$

The reason will be described using Fig. 12 (Fig. 12 shows a section of a plane wherein a vector $n_s$ of the plane and a moving direction v lie). The "shortest distance $d_s$ up to a plane from the camera center O" is a normal direction component of the "distance $Vt_c$ up to going across a plane in the moving direction". Consequently, the following equation consists.

$$d_s = Vt_c \, (n_s \cdot v) \tag{21}$$

where V denotes a magnitude of a moving velocity

When both members of the equation (21) is normalized with the moving distance $\Delta x$, the following equation is obtained.

$$
\begin{aligned}
_nd_s &= d_s / \Delta x \\
&= (Vt_c / \Delta x) \, (n_s \cdot v) \\
&= (Vt_c / (V\Delta t)) \, (n_s \cdot v) \\
&= {}_nt_c \, (n_s \cdot v)
\end{aligned}
\tag{22}
$$

The equation (22) is equivalent to the equation (20). In the modification as referenced above, the following relation between the "time difference $\Delta t$ between the present time $t_0$ and the subsequent time $t_1$" and the "distance $\Delta x$ moving during that period of time" is used.

$$\Delta x = V\Delta t \tag{23}$$

2. 1 A method of measuring a normalization shortest distance $_nd_s$ up to a plane and a three-dimensional azimuth $n_s$ of a plane

A combination of the "relation between $_nd_s$ and $_nt_c$ (the equation (20))" with the algorithm (the compound ratio transformation and the polar transformation) as mentioned in 1. 3. 2 makes it possible to measure a three-dimensional azimuth $n_s$ of a plane and a normalization shortest distance $_nd_s$ up to a plane.

This will be explained in conjunction with Fig. 13. It is implemented in accordance with the following six steps.

(1) Set up arbitrarily a normalization shortest distance parameter $_nd_s$.
(2) Consider a small circle taking a moving direction v as the center, and set up arbitrarily a radius r of the circle (Fig. 13). Determine "three-dimensional azimuth candidates $n_s$ of a plane" on the small circle in accordance with a step (4). In order to implement this step, there is a need to set up the normalized time parameter $_nt_c$ to a value determined by the following equation.

$$_nt_c = {}_nd_s/\cos (r) \tag{24}$$

The reason why this is to do so is as follows. Since the candidates $n_s$ are located on the "small circle having a radius r taking the moving direction v as the center", there is the relation among $n_s$, v and r, as given by the

following equation.

$$\cos(r) = (n_s \cdot v) \tag{25a}$$

Since there is a need that $n_s$ satisfies the equation (20), the equation (25a) is substituted for equation (20). Thus, following equation is obtained.

$$_nd_s = {}_nt_c \cos(r) \tag{25b}$$

When this is modified, the equation (24) can be obtained.

(3) With respect to the respective points of an image, determine the positions $p_0$, $p_1$ at the present time and the subsequent time from the image on a camera, respectively, and determine the position $p_{inf}$ after the infinite time elapses from the moving direction v, and substitute those positions and the normalized time parameter $_nt_c$ for the equation (14b) or the equation (16b) to perform the compound ratio transformation so that the position $p_c$ is computed.

(4) $p_c$ determined in the step (3) is subjected to the polar transformation to draw a large circle $g_{pc}$ on a sphere. Two cross points $_rn_{s+}$, $_rn_{s-}$ of the large circle and the small circle in the step (2) are the "three-dimensional azimuth candidates of a plane" (Fig. 13). It will be described later that the cross point is expressed by the equation (29).

(5) The above-mentioned steps (2) to (4) are repeatedly carried out through changing the radius r so as to draw a curved line consisting of the two cross points $_rn_{s+}$, $_rn_{s-}$ determined in the step (4) (Fig. 13). This curved line becomes, as will be described in 2. 2, a "small circle taking $p_0$ as the center". If the normalization shortest distance parameter $_nd_s$ given in the step (1) is a true normalization shortest distance $_nd_{s0}$, it is possible to determine the normal vector $n_{s0}$ of a plane in the form of the cross point of the curved lines. However, in the step (1), the parameter $_nd_s$ is arbitrarily set up and thus generally the curved lines do not cross at one point. Therefore, the curved lines drawn here mean determining candidates for the normal vector $n_s$ of a plane. Incidentally, intensity of the curved line corresponds to "brightness of position $p_0$ in an image", and in the place wherein a plurality of curved lines intersect with each other, intensity of the curved lines is added.

(6) The above-mentioned steps (1) to (5) are repeatedly carried out through changing the normalization shortest distance parameter $_nd_s$ to determine a parameter value $_nd_{s0}$ wherein a plurality of curved lines drawn in the step (5) intersect with each other at one point. Thus, a "normalization shortest distance $_nd_{s0}$ from the camera center O to a plane" is obtained in the form of the parameter value. Further, the azimuth $n_{s0}$ of a plane is obtained in the form of coordinates of the above-mentioned cross point. It is acceptable that a point wherein intensity offers a peak is detected instead of detection of the above-mentioned cross point.

2. 2 Another method of measuring a normalization shortest distance $_nd_s$ up to a plane and a three-dimensional azimuth $n_s$ of a plane

First, it is shown that the curved line drawn in the step (5) of 2. 1 is a small circle, and then there will be explained a method of measuring a normalization shortest distance $_nd_{s0}$ up to a plane and a three-dimensional azimuth $n_{s0}$ of a plane.

2. 2. 1 Proof that a curved line becomes a small circle

Fig. 14 shows, for the purpose of proof, one in which various parameters are drawn in Fig. 13. The steps (3) to (5) of 2. 1 are expressed with following mathematical expression using those parameters, and it will be shown that the curved line of the step (5) of 2. 1 is a small circle.

First, the "position $p_c$" described in the step (3) is given by the mathematical expression. That is, the central angle x (Fig. 9) of $p_c$ and $p_{inf}$ is expressed by the following equation through substituting the equation (24) for the equation (16b). Incidentally, while the equation (16b) is used, it is acceptable that the equation (14b), which is equivalent to the equation (16b), is also used for proof.

$$\tan(x) = (\sin(a)\sin(a + \tau))$$

$$/ (\cos(a)\sin(a + \tau)$$

$$- (_n d_s / \cos (r)) \sin (\tau)) \qquad (26)$$

Next, the cross point of the "large circle wherein the position $p_c$ is subjected to the polar transformation" with the "small circle of the step (2)", that is, the three-dimensional azimuth candidates $_r n_{s+}$, $_r n_{s-}$ of a plane are given by the mathematical expression. When the cosine theorem is applied to the triangle $_r n_{s+} \, p_c \, v$, the following equation can be obtained.

$$\cos (\pi/2) = \cos (r) \cos (-x)$$

$$+ \sin (r) \sin (-x) \cos (\pi - (_r \alpha_{s+} - \alpha_a))$$

$$= \cos (r) \cos (x)$$

$$+ \sin (r) \sin (x) \cos (_r \alpha_{s+} - \alpha_a) \qquad (27)$$

$\pi/2$ of the equation (27) is owing to the fact that the azimuth candidate point $_r n_{s+}$ is located on the "polar line of $p_c$". When the equation (26) is substituted for the equation (27) and x is erased, the following equation can be obtained.

$$
\begin{aligned}
\cos (_r \alpha_{s+} - \alpha_a) &= - \cot (r) \cot (x) \\
&= - \cot (r) (\cos (a) \sin (a+\tau) \\
&\quad - (_n d_s / \cos (r)) \sin (\tau)) \\
&\quad / (\sin (a) \sin (a+\tau)) \\
&= - (\cos (r) \cos (a) \sin (a+\tau) \\
&\quad - _n d_s \sin (\tau)) \\
&\quad / (\sin (r) \sin (a) \sin (a+\tau))
\end{aligned}
$$

Further, when this equation is transferred, the following equation can be obtained.

$$\cos (r) \cos (a) + \sin (r) \sin (a) \cos (_r \alpha_{s+} - \alpha_a)$$

$$= _n d_s \sin (\tau) / \sin (a + \tau) \qquad (28)$$

Longitudinal coordinates points $_r \alpha_{s+}$, $_r \alpha_{s-}$ of the azimuth candidates points $_r n_{s+}$, $_r n_{s-}$ of a plane are computed by the following equations through a modification of the equation (28).

$$
\begin{aligned}
_r \alpha_{s+} &= \alpha_a + (_r \alpha_{s+} - \alpha_a) \\
&= \alpha_a + \cos^{-1} (( (_n d_s \sin (\tau) / \sin (a+\tau)) \\
&\quad - \cos (r) \cos (a)) / (\sin (r) \sin (a))) \\
_r \alpha_{s-} &= \alpha_a - (_r \alpha_{s+} - \alpha_a) \\
&= \alpha_a - \cos^{-1} (( (_n d_s \sin (\tau) / \sin (a+\tau)) \\
&\quad - \cos (r) \cos (a)) / (\sin (r) \sin (a)))
\end{aligned}
$$

$$(29)$$

Accordingly, longitudinal coordinates r of the azimuth candidates points $_r n_{s+}$, $_r n_{s-}$ of a plane are expressed in the form of the "radius r of the small circle of the step (2)", and the longitudinal coordinates points $_r \alpha_{s+}$, $_r \alpha_{s-}$ are expressed by the equation (29).

It will be explained on the basis of the above-mentioned preparation that the "curved line consisting of two cross points $_rn_{s+}$, $_rn_{s-}$" is a small circle taking $p_0$ as its center. The small circle of the radius R taking $p_0$ as its center is expressed by the following equation (30), when the cosine theorem is applied to the triangle $_rn_{s+}$ $p_0$ v ("Geometry Dictionary 2 (I. Iwata, Maki Book Shop)", page 72).

$$\cos (r) \cos (a)$$

$$+ \sin (r) \sin (a) \cos (_r\alpha_{s+} - \alpha_a) = \cos (R) \tag{30}$$

When the equation (30) is compared with the equation (28), it is understood that the equation (28), that is, the "curved line consisting of two cross points $_rn_{s+}$, $_rn_{s-}$", is the "small circle taking $p_0$ as its center wherein the radius R is expressed by the following equation".

$$R = \cos^{-1} (_nd_s \sin (\tau) / \sin (a + \tau)) \tag{31}$$

Thus, it is shown that the curved line consisting of two cross points $_rn_{s+}$, $_rn_{s-}$ shown in Fig. 14 (that is, the equation (28)) is the "small circle of the radius R taking $p_0$ as its center". This implies that it is possible to transfer an arbitrary point $p_0$ to the small circle. This transformation is referred to as a "small circle transformation". Here, the equation (31) may be expressed with a position $P_0$ at the present time, a position $P_1$ at the subsequent time, and a position $P_{inf}$ after the infinite time elapses. When $\tau$ and $a + \tau$ are expressed by the central angle of the equation (15), the equation (31) is given by the following equation.

$$R = \cos^{-1} (_nd_s \sin (p_0p_1) / s\,i\,n\, (p_{inf}p_1)) \tag{32}$$

The equation (31) expresses the radius R using motion parallax $\tau$. However, in the event that the position $p_1$ at the subsequent time is known, the radius R is given by the following equation through substituting the equation (13) for the equation (32).

$$R = \cos^{-1} (_nd_s \sin (b-a) / \sin (b)) \tag{33}$$

2. 2. 2 Geometric meaning of the small circle transformation

(1) Geometric meaning of the radius R

When the equation (32) is modified using the equation (4), the following equation can be obtained.

$$R = \cos^{-1} (_nd_s / (d_0/\Delta x)) \tag{34a}$$

Further, the equation (34a) is modified through substituting the equation (19), the following equation can be obtained.

$$R = \cos^{-1} ((d_s / \Delta x) / (d_0 / \Delta x))$$
$$= \cos^{-1} (d_s / d_0) \tag{34b}$$

Next, the geometric meaning of the radius R will be explained in conjunction with Fig. 15. The radius R determined by the equation (34b) indicates a necessary condition for the existence of a plane passing the "point $P_0$ located at the distance $d_0$ from the camera center O" wherein the shortest distance is given by $d_s$. That is, the radius R determined by the equation (34b) indicates that the azimuth $n_s$ has to be inclined from the direction $P_0$ of the point by the "angle R determined by the equation (34b)" for existence of the plane.

There are a lot of such "plane passing the point $P_0$ wherein the shortest distance is given by $d_s$ " taking $p_0$ as a rotary axis. When all the feet of perpendicular of those planes are drawn, there is formed a base of the "right circular cone (length of an edge: $d_s$, dihedral angle: 2R) taking the camera center O as a vertex" shown in Fig. 16. The line of intersection of the edge of the right circular cone with the "unit sphere taking O as its center" forms a small circle. The small circle transformation described in 2. 2. 1 implies that the "direction $p_0$ of the point" is transformed to the small circle thus formed.

Incidentally, the equation (34b) can be expressed in the form of the equation (35) using the "normalization shortest distance $_nd_s$ of a plane" and the "normalization shortest distance $_nd_0$ of a point" defined by the equation (36).

$$R = \cos^{-1} (_nd_s/_nd_0) \tag{35}$$

$$_nd_0 = d_0/\Delta x \tag{36}$$

Further, the equation (34b) can be also expressed in the form of the following equation (37) through substituting the equation (6) for the equation (34a).

$$R = \cos^{-1} (_nd_s/ (p_{inf}p_0p_1)) \tag{37}$$

(2) Geometric meaning of the small circle transformation

From the above-mentioned consideration, it would be understood that the small circle transformation on the sphere in 2. 2. 1 is equivalent to the subsequent transformation in the three-dimensional space. In other words, it is equivalent to the transformation of the "point $P_0$ in the space (direction $p_0$, distance $d_0$)" to the circumference of the right circular cone shown in Fig. 16, that is, the normal vector group $\{n_s\}$ of the "whole plane passing through $P_0$ wherein the shortest distance from the camera center O is given by $d_s$". This is the geometric meaning of the small circle transformation.

2. 2. 3 Another method of measuring a normalization shortest distance $_nd_s$ up to a plane and a three-dimensional azimuth $n_s$ of a plane

There will be explained a method of measuring a normalization shortest distance $_nd_s$ up to a plane and a three-dimensional azimuth $n_s$ of a plane using the "small circle transformation" explained in 2. 2. 2. It is implemented in accordance with the following four steps.

(1) Set up arbitrarily a normalization shortest distance parameter $_nd_s$.
(2) With respect to the respective points of an image, determine the positions $p_0$, $p_1$ at the present time and the subsequent time from the image on a camera, respectively, and determine the position $p_{inf}$ after the infinite time elapses from the moving direction v, and compute the radius R of a small circle transformation in accordance with the equation (32).
(3) The respective points $p_0$ are subjected to the small circle transformation to draw on a sphere a small circle of the radius R taking $p_0$ as its center. Here there will be explained the meaning of drawing the small circle. If the normalization shortest distance parameter $_nd_s$ given in the step (1) is a true normalization shortest distance $_nd_{s0}$, it is possible to determine the normal vector $n_{s0}$ of a plane in the form of the cross point of the small circles. However, in the step (1), the parameter $_nd_s$ is arbitrarily set up and thus generally the small circles do not intersect with each other at one point. Therefore, the small circles drawn here mean determining candidates for the normal vector $n_s$ of a plane. Incidentally, intensity of the small circle corresponds to "brightness of position $p_0$ in an image", and in the place wherein a plurality of small circles intersect with each other, intensity of the small circles is added.
(4) The above-mentioned steps (1) to (3) are repeatedly carried out through changing the normalization shortest distance parameter $_nd_s$ to determine a parameter value $_nd_{s0}$ wherein a plurality of small circles drawn in the step (3) intersect with each other at one point. Thus, a "normalization shortest distance $_nd_{s0}$ from the camera center O to a plane" is obtained in the form of the parameter value. Further, the azimuth $n_{s0}$ of a plane is obtained in the form of coordinates of the above-mentioned cross point. It is acceptable that a point wherein intensity offers a peak is detected instead of detection of the above-mentioned cross point.

Here, there will be described the above-mentioned small circle transformation method on a geometric basis in reference to Fig. 17. With respect to the respective points of an image, determine the positions $p_0$, $p_1$ at the present time and the subsequent time from the image on a camera, respectively, and determine the position $p_{inf}$ after the infinite time elapses from the moving direction v, and give the normalization shortest distance parameter $_nd_s$ in the step (1). Those are substituted for the equation (32) to determine the radius R, so that the small circle transformation is performed as shown in Fig. 17(A). That is, the small circle of the radius R is drawn on the sphere taking $p_0$ as its center. Next, the sphere shown in Fig. 17(A) is projected onto a plane in a similar fashion to that of the step (4) in 1. 3. 3, so that an image on the sphere is transformed inside the "circle". The circles are accumulated taking the normalization shortest distance parameter $_nd_s$ as a vertical axis to form the "cylindrical arrangement" as shown in Fig. 17(B).

It means that the normalization shortest distance parameter $_nd_s$ arbitrarily given by the step (1) designates height coordinates of this cylinder, and in the steps (2) and (3) the sectional circle at that height, or one in which a spherical image is transformed inside the "circle", is drawn. In step (1), the parameter $_nd_s$ is arbitrarily given, and thus, as seen from Fig. 17(B), the small circles do not intersect with each other at one point. However, on the sectional circle, in which it's height is equivalent to the true normalization shortest distance $_nd_{s0}$, the small circles intersect with each other at one point. Thus, it is possible to obtain the normalization shortest distance $_nd_{s0}$ of a plane in the form of the "height coordinates" of the cylinder, and also to obtain the three-dimensional azimuth $n_s$ in the form of the "intersection coordinates inside a sectional circle".

Now, let us consider a range and properties of the parameter $_nd_s$ wherein the small circle transformation is formed. The small circle transformation is formed on the following condition. That is, in the equation (35), $|\cos(R)| \leqq 1$, that is,

$$|_nd_s| \leqq |_nd_0| \qquad\qquad (38)$$

In this range, the radius R varies in accordance with the parameter $_nd_s$ as follows. At $_nd_s = 0$, the radius R of the small circle is $\pi/2$ (large circle). As $|_nd_s|$ becomes larger, the radius R becomes smaller. At $|_nd_s| \leqq |_nd_0|$, the radius R becomes zero. "$_nd_s$ wherein the radius R becomes zero" corresponds to the "plane passing through the point $p_0$ and perpendicularly intersecting with the vector $0P_0$ " in Fig. 15.

In accordance with the above-mentioned consideration, there will be described as to how an arbitrary point $p_0$ in an image is subjected to the small circle transformation in a geometric figure in the cylindrical arrangement with reference to Fig. 17(C). The center of the small circle to be transformed is located at $p_0$ regardless of the height $_nd_s$, and the radius R varies as described above. Thus, the point $P_0$ is subjected to the small circle transformation onto a surface of the "solid like a spheroid". The vertex is denoted by $_nd_0$ , and the axis of rotation is denoted by $p_0$ . When a plurality of points exist in an image, "spheroid surfaces" wherein the plurality of points are subjected to the small circle transformation are intersect with each other at one point, so that the three-dimensional azimuth $n_{s0}$ of a plane and a normalization shortest distance $_nd_{s0}$ can be obtained in the form of coordinates of the cross point. Incidentally, in Fig. 17(C), the "spheroid", wherein $p_0$ is located at the center of the cylinder, is drawn. On the other hand, in the event that $P_0$ is located out of the center of the cylinder, the spheroid is out of the cylinder. It is acceptable that this portion can be omitted in drawing.

2. 3 A confirmation by a simulation

It will be shown by a computer simulation that the "algorithm of measuring three-dimensional geometric information of a plane" explained in 2. 2. 3 is correct (Fig. 18). The simulation was carried out in accordance with a flow of an embodiment A-3.

First, there will be described input data. There is a vertical plane right in front of a spherical camera (or an eyeball), and a distance up to the camera center O is 3m. The plane moves in a direction vertical to the plane (that is, a direction parallel with the normal vector $n_{s0}$ of the plane) toward the camera at the velocity 1m/second. There are eight points on the plane. The "positions $p_0$, $p_1$ on the sphere at the present time and the subsequent time" are observed in the form of input image data. A time difference $\Delta t$ between the present time and the subsequent time is 0.05 second. Therefore, a moving distance $\Delta x$ from the present time to the subsequent time is 0.05 x 1 = 0.05 m. The position $p_{inf}$ at the infinite time is equivalent to a moving direction v and is located at the center of the visual field. From the above, the normalization shortest distance $_nd_{s0}$ of the plane is 3/0.05 = 60. The normal vector $n_{s0}$ of the plane is located at the center of the visual field.

Fig. 18 is an illustration showing a result of a computer simulation in which three-dimensional geometric information of a plane ($_nd_{s0}$ and $n_{s0}$ ) is determined from the positions $p_0$ , $p_1$ at the present time and the subsequent time and the position $p_{inf}$ after the infinite time elapses in accordance with the small circle transformation algorithm described in 2. 2. 3. In Fig. 18, there are shown the "sectional circles of cylinders at the respective normalization shortest distance parameters $_nd_s$" explained in connection with Fig. 17(B). Each of the sectional circles is obtained through a projection of the sphere of Fig. 17(A) onto a plane passing through the sphere in accordance with the "equidistant projection (cf. the equation (107c) explained 1. 3. 3". The lower right is of the sectional circle at $_nd_s = 0$, and the respective sectional circles are. arranged in such an order that the parameter $_nd_s$ is incremented toward the upper left. Next, there will be explained the respective sectional circles. In each of the sectional circles, the position $p_0$ at the present time is drawn in the form of a dot. Eight "small circles each having the radius R computed in accordance with the equation (32)" are drawn in association with eight points on the plane taking $p_0$ as their centers.

On the first sectional circle (lower right, $_nd_s = 0$), those small circles are scattered. As the parameter $_nd_s$ is incremented, the small circles are converged, and on the sectional circle (the second circle from the upper of the right) wherein $_nd_s$ is 60, those small circles intersect with each other at one point. When the parameter $_nd_s$ is further incremented, those small circles are scattered again. In this manner, the small circles intersect with each other at one point only in the height $_nd_s = 60$. This height $_nd_s$ is equivalent to the value 60 of the above-mentioned "normalized time $_nd_{s0}$ up to going across a plane". The azimuth of intersecting with one point is in the center of the visual field, and is equivalent to the "normal vector $n_{s0}$ of the plane". From the above-mentioned simulation, it has been confirmed that the "small circle transformation algorithm" explained in 2. 2. 3 is correct. Incidentally, it has been confirmed through the simulation that the three-dimensional geometric information of a plane can be accurately determined in accordance with the method in 2. 1 too.

2. 4 A method in which it is acceptable that the moving direction v is unknown

In 2. 1 and 2. 2. 3, there is described a method of measuring the three-dimensional azimuth $n_s$ of a plane and the normalization shortest distance $_nd_s$, under the condition that the moving direction v is known. Here, there is provided a method capable of measuring the azimuth and the distance even if the moving direction v is unknown. This method is similar to that of 1. 6. According to this method, even if the moving direction on photography as to an image of an internet, a video, a movie, etc., for instance, is unknown, it is possible to measure the "azimuth and distance". Further, in the event that a plane moves, generally, the moving direction is unknown. However, even in such a case, it is possible to measure the "azimuth and distance" together with the moving direction v. The outline of the method will be described with respect to 2. 2. 3 (also 2. 1). Assuming that there is a possibility that the moving direction v takes any direction, "a small circle transformation" in 2. 2. 3 is performed for each of the moving directions to draw a small circle. When the moving direction, wherein the small circles intersect with each other at one point, is determined, it is a true moving direction $v_0$, and it is possible to determine a three-dimensional azimuth $n_s$ of a plane and a normalization shortest distance $_nd_s$ in the form of the coordinates of the cross point. This is carried out in the following steps.

(1) Set up arbitrarily a moving direction parameter v.
(2) Give a direction of the parameter v in the form of "position $P_{inf}$ after the infinite time elapses".
(3) Execute the steps (1) to (4) in 2. 2. 3 so that small circles for all the normalization shortest distance parameter $_nd_s$ are drawn inside the cylindrical arrangement (Fig. 17(B)).
(4) The above-mentioned steps (1) to (3) are repeatedly carried out through changing the moving direction parameter v to determine a parameter value $v_0$ wherein a plurality of small circles drawn in the step (3) intersect with each other at one point. This parameter value is a true moving direction $v_0$. Thus, an azimuth $n_{s0}$ of a plane and a normalization shortest distance $_nd_{s0}$ are obtained in the form of coordinates of the above-mentioned cross point. It is acceptable that a point wherein intensity offers a peak is detected instead of detection of the above-mentioned cross point.

Here, the explanation for the principles of the present invention is terminated, and hereinafter there will be described the various embodiments of the present invention. Incidentally, the various block diagrams, which will be explained hereinafter, may be understood as the functional blocks of the computer system 300 shown in Figs. 2 and 3, and also be understood as the various embodiments of an image measurement apparatus according to the present invention where the image measurement apparatus is constructed with the hardware. Further, the various flowcharts, which will be explained hereinafter, may be understood as the various embodiments of the image measurement programs referred to in the present invention, which are executed when they are installed in the computer system 300 shown in Figs. 2 and 3, and also be understood as the various embodiments of an image measurement method according to the present invention.

Embodiment E-1. (Normalized time)

Figs. 111(A) and 111(B) are block diagrams of an embodiment E-1 of the present invention. Figs. 112 and 113 are flowcharts of the embodiment E-1.

(α) Prepare an $_{ij}\tau$ table (Fig. 163), that is, a table for retrieving and outputting a motion parallax $_{ij}\tau$ from a pixel number i of an input image and an element number j of a cylindrical arrangement (cf. Fig. 111(A), Fig. 112).

(α1) Extract the moving direction v in a similar fashion to that of the step (1) in the embodiment A-1, and set up the "position $p_{inf}$ after the infinite time elapses", as being equal to the moving direction v, by a "$p_{inf}$ set unit 501" (E-1α-1).

(α2) Scan addresses i of the respective points $_ip_0$ on an image from the minimum value $i_{min}$ to the maximum value $i_{max}$ by a "scan unit 502 for pixel No. i" (E-1α-2, E-1α-3, E-1α-10).

(Scan i )

(α3) Scan addresses j of elements ($n_{sj}$, $_nt_{cj}$) on a cylindrical arrangement from the minimum value $j_{min}$ to the maximum value $j_{max}$ by a "scan unit 503 for element No. j" (E-1α-4, E-1α-5, E-1α-9).

(Scan j)

(α4) Output pixels $_ip_0$ on the image and the elements ($n_{sj}$, $_nt_{cj}$) on the cylindrical arrangement, which are associated with the addresses (i, j), by an "$_ip_0$ output unit 504", an "$n_{sj}$ output unit 505" and an "$_nt_{cj}$ output unit 506" (E-1α-6).

(α5) Feed four parameters $n_{sj}$, $_nt_{cj}$, $_ip_0$, $p_{inf}$ thus set up to an "$_{ij}\tau$ table producing unit 507" and compute the motion parallax $_{ij}\tau$ in accordance with a method shown in (A-1) of the appendix (E-1α-7).

For the purpose of avoiding troublesomeness, the following motion direction (a direction of motion from $_ip_0$ to $_ip_1$, that is, $_{ij}\phi$) and the like are omitted. First, there is a need that $_{ij}\phi$ is determined from $p_1$ computed in (A) of the appendix to form the content of an $_{ij}\tau$ table, and further there is a need to vote only when $_{ij}\phi$ is coincident with a direction t a $n^{-1}$ ($_{ij}\tau_y/_{ij}\tau_x$) of the motion vector ($_{ij}\tau_x$, $_{ij}\tau_y$) to be detected in the following step (β5). However, those are omitted. In this respect, it is the same also in the embodiments involving the similar processing, which will be described hereinafter.

It is acceptable that the motion parallax $_{ij}\tau$ is computed in accordance with any one of methods, not restricted to the method shown in (A-1) of the appendix. In this respect, it is the same also in all the embodiments in which a computation of motion parallax is performed in accordance with the method shown in (A-1) of the appendix.

Further, according to the present embodiment, the $_{ij}\tau$ table is prepared, and in the actual voting, $_{ij}\tau$ is derived from the $_{ij}\tau$ table thus prepared. However, there is no need to prepare the $_{ij}\tau$ table beforehand. it is acceptable that $_{ij}\tau$ is computed when an operation for the voting is carried out.

(α6) Store the motion parallax $_{ij}\tau$ in the form of the content associated with the addresses (i, j) of the $_{ij}\tau$ table (Fig. 163) (E-1α-8).

(Scan j (E-1α-9))

(Scan i (E-1α-10)

Thus, the $_{ij}\tau$ table (Fig. 163) is obtained.

(β) Using the $_{ij}\tau$ table thus prepared, detect the planar azimuth $n_{s0}$ and the normalized time $_nt_{c0}$ (cf. Fig. 111 (B) and Fig. 113)

(β1) Scan addresses i of the respective points $_ip_0$ on an image from the minimum value $i_{min}$ to the maximum value $i_{max}$ by a "scan unit 552 for pixel No. i" (E-1β-1, E-1β-2, E-1β-10).

(Scan i)

(β2) In a similar fashion to that of the step (3) of the embodiment D-1, cut and bring down images on local areas taking a "pixel $_ip_0$ associated with the address i" as the center from images at present time $t_0$ and the subsequent time $t_1$, which are obtained by a camera 11, as to the present time $t_0$ and the subsequent time $t_1$, respectively, by a "unit 554 for cutting and bringing down images on local areas taking $_ip_0$ as the center" (E-1β-3).

(β3) Scan addresses j of elements ($n_{sj}$, $_nt_{cj}$) on a cylindrical arrangement from the minimum value $j_{min}$ to the maximum value $j_{max}$ by a "scan unit 553 for element No. j" (E-1β-4, E-1β-5, E-1β-9).

(Scan j)

(β4) Feed those addresses (i, j) to an $_{ij}\tau$ table 555 (Fig. 163) and output the motion parallax $_{ij}\tau$ (E-1β-6)

(β5) In a similar fashion to that of the step (6) of the embodiment D-1, feed the "images on local areas at

present time $t_0$ and the subsequent time $t_1$ " and the "motion parallax $_k\tau$" to a "motion parallax detection unit 556" (cf. Fig. 159) to compute the response intensity in accordance with the following equation (E-1β-7).

$$\text{Response intensity} = \Sigma_x\Sigma_y \, _ia_0 \, (x, y) \, _ia_1 \, (x - \, _{ij}\tau_x, y - \, _{ij}\tau_y)$$

(β6) The response intensity is voted for elements ($n_{sj}$, $_nt_{cj}$) on a "cylindrical arrangement voting unit 557" (E-1β-8).

(Scan j (E-1β-9))

(Scan i (E-1β-10) )

(β7) Extract a "point wherein the voted intensity offers the maximum (peak)" in the cylindrical arrangement, by a "peak extraction unit 558". This maximum point is a "place wherein the large circles intersect with each other at one point". The "normalized time $_nt_{c0}$ up to going across the plane" is determined in the form of a "height coordinates" of the maximum point, and the "three-dimensional azimuth $n_{s0}$ of the plane" is determined in the form of a "sectional circle inside coordinates" (E-1β-11).

Embodiment E-2. (Normalized time + v unknown)

Figs. 114(A) and 114(B) are block diagrams of an embodiment E-2 of the present invention. Figs. 115 and 116 are flowcharts of the embodiment E-2.
(α) Prepare an $_{ij}\tau$ table (Fig. 164) for all the moving direction {v}, that is, a table for retrieving and outputting a motion parallax $_{ij}\tau$ from a pixel number i of an input image, an element number j of a cylindrical arrangement, and the moving direction v (cf. Fig. 114(A), Fig. 115).
The following step (α2) to (α6) are the same as the corresponding steps of the embodiment E-1(α).
(α0) Scan a "moving direction parameter v" over any possible directions (from the minimum value $v_{min}$ to the maximum value $v_{max}$ ) by a "scan unit for v parameter 508" (E-2α-1, E-2α-2, E-2α-13).

(Scan v )

(α1) Set up the "position $P_{inf}$ after the infinite time elapses", as being equal to the parameter v, by a "$P_{inf}$ set unit 501" (E-2α-3).
(α2) Scan addresses i of the respective points $_ip_0$ on an image from the minimum value $i_{min}$ to the maximum value $i_{max}$ by a "scan unit 502 for pixel No. i" (E-2α-4, E-2α-5, E-2α-12).

(Scan i)

(α3) Scan addresses j of elements ($n_{sj}$, $_nt_{cj}$) on a cylindrical arrangement from the minimum value $j_{min}$ to the maximum value $j_{max}$ by a "scan unit 503 for element No. j" (E-2α-6, E-2α-7, E-2α-11).

(Scan j)

(α4) Output pixels $_ip_0$ on the image and the elements ($n_{sj}$, $_nt_{cj}$) on the cylindrical arrangement, which are associated with the addresses (i, j), by an "$_ip_0$ output unit 504", an "$n_{sj}$ output unit 505" and an "$_nt_{cj}$ output unit 506" (E-2α-8).
(α-5) Feed four parameters $n_{sj}$, $_nt_{cj}$, $_ip_0$, $p_{inf}$ thus set up to an "$_{ij}\tau$ table producing unit 507" and compute the motion parallax $_{ij}\tau$ in accordance with a method shown in (A-1) of the appendix (E-2α-9).
(α-6) Store the motion parallax $_{ij}\tau$ in the form of the content associated with the addresses (i, j) of the $_{ij}\tau$ table (Fig. 164) (E-2α-10).

(Scan j (E-2α-11) )

(Scan i (E-2α-12) )

(α-7) In the processing up to here, there are obtained the $_{ij}\tau$ table for the respective moving directions v.
Thus, the $_{ij}\tau$ table (Fig. 164) for all the moving directions {v} is obtained.

(β) Using the $_{ij}\tau$ table thus prepared, detect the planar azimuth $n_{s0}$ and the normalized time $_nt_{c0}$ (cf. Fig. 114 (B) and Fig. 116)

The following step (β1) to (β6) are the same as the corresponding steps of the embodiment E-1.

(β0) Scan a "moving direction parameter v" over any possible directions (from the minimum value $v_{min}$ to the maximum value $v_{max}$ ) by a "scan unit for v parameter 559" (E-2β-1, E-2β-2, E-2β-13).

(Scan v)

(β1) Scan addresses i of the respective points $_ip_0$ on an image from the minimum value $i_{min}$ to the maximum value $i_{max}$ by a "scan unit 552 for pixel No. i" (E-2β-3, E-2β-4, E-2β-12).

(Scan i)

(β2) In a similar fashion to that of the step (3) of the embodiment D-1, cut and bring down images on local areas taking a "pixel $_ip_0$ associated with the address i" as the center from images at present time $t_0$ and the subsequent time $t_1$, which are obtained by a camera 11, as to the present time $t_0$ and the subsequent time $t_1$, respectively, by a "unit 554 for cutting and bringing down images on local areas taking $_ip_0$ as the center" (E-2β-5).

(β3) Scan addresses j of elements ($n_{sj}$, $_nt_{cj}$) on a cylindrical arrangement from the minimum value $j_{min}$ to the maximum value $j_{max}$ by a "scan unit 553 for element No. j" (E-2β-6, E-2β-7, E-2β-11).

(Scan j)

(β4) Feed those addresses (i, j) to an $_{ij}\tau$ table 555 (Fig. 164) and output the motion parallax $_{ij}\tau$ (E-2β-8).

(β5) In a similar fashion to that of the step (6) of the embodiment D-1, feed the "images on local areas at present time $t_0$ and the subsequent time $t_1$ " and the "motion parallax $_k\tau$" to a "motion parallax detection unit 556" (cf. Fig. 159) to compute the response intensity in accordance with the following equation (E-2β-9).

$$\text{Response intensity} = \Sigma_x \Sigma_y \, _ia_0 \, (x, y) \, _ia_1 \, (x-_{ij}\tau_x, y-_{ij}\tau_y)$$

(β6) The response intensity is voted for elements ($n_{sj}$, $_nt_{cj}$) on a "cylindrical arrangement voting unit 557" (E-2β-10).

(Scan j (E-2β-11))

(Scan i (E-2β-12))

(β7) In the processing up to here, the voting is performed for all the elements of the cylindrical arrangement.

(Scan v (E-2β-13))

(β8) In the processing up to here, the voting is performed for all the elements of the cylindrical arrangements for all the moving direction parameters v.

(β9) Extract a "specified cylindrical arrangement" wherein the intensity offers the maximum from among the cylindrical arrangements, by a "peak extraction unit 558". Thus, a true moving direction $v_0$ is determined in the form of the moving direction parameter for this arrangement. When a point, wherein the intensity offers the peak in the cylindrical arrangement, is extracted, the normalized time $_nt_{c0}$ up to going across the plane is determined in the form of a "height coordinates" of the maximum point, and the three-dimensional azimuth $n_{s0}$ of the plane is determined in the form of a "sectional circle inside coordinates" (E-2β-14).

Embodiment E-3. (Normalization shortest distance)

Figs. 117(A) and 117(B) are block diagrams of an embodiment E-3 of the present invention. Figs. 118 and 119 are flowcharts of the embodiment E-3.

(α) Prepare an $_{ij}\tau$ table (Fig. 163), that is, a table for retrieving and outputting a motion parallax $_{ij}\tau$ from a pixel number i of an input image and an element number j of a cylindrical arrangement (cf. Fig. 117(A), Fig. 118).

(α1) Extract the moving direction v in a similar fashion to that of the step (1) in the embodiment A-1, and set up the "position $P_{inf}$ after the infinite time elapses", as being equal to the moving direction v, by a "$P_{inf}$ set unit 501" (E-

$3\alpha$-1).

($\alpha$2) Scan addresses i of the respective points $_ip_0$ on an image from the minimum value $i_{min}$ to the maximum value $i_{max}$ by a "scan unit 502 for pixel No. i" (E-3$\alpha$-2, E-3$\alpha$-3, E-3$\alpha$-10).

(Scan i)

($\alpha$3) Scan addresses j of elements ($n_{sj}$, $_nt_{cj}$) on a cylindrical arrangement from the minimum value $j_{min}$ to the maximum value $j_{max}$ by a "scan unit 503 for element No. j" (E-3$\alpha$-4, E-3$\alpha$-5, E-3$\alpha$-9).

(Scan j )

($\alpha$4) Output pixels $_ip_0$ on the image and the elements ($n_{sj}$, $_nt_{cj}$) on the cylindrical arrangement, which are associated with the addresses (i, j), by an "$_ip_0$ output unit 504", an "$n_{sj}$ output unit 505" and an "$_nd_{sj}$ output unit 509" (E-3$\alpha$-6).

($\alpha$5) Feed four parameters $n_{sj}$, $_nd_{sj}$, $_ip_0$, $p_{inf}$ thus set up to an "$_{ij}\tau$ table producing unit 510" and compute the motion parallax $_{ij}\tau$ in accordance with a method shown in (A-2) of the appendix (E-3$\alpha$-7).

It is acceptable that the motion parallax $_{ij}\tau$ is computed in accordance with any one of methods, not restricted to the method shown in (A-2) of the appendix. In this respect, it is the same also in all the embodiments in which a computation of motion parallax is performed in accordance with the method shown in (A-2) of the appendix.

($\alpha$6) Store the motion parallax $_{ij}\tau$ in the form of the content associated with the addresses (i, j) of the $_{ij}\tau$ table (Fig. 163) (E-3$\alpha$-8).

(Scan j (E-3$\alpha$-9) )

(Scan i (E-3$\alpha$-10) )

Thus, the $_{ij}\tau$ table (Fig. 163) is obtained.

($\beta$) Using the $_{ij}\tau$ table thus prepared, detect the planar azimuth $n_{s0}$ and the normalization shortest distance $_nd_{s0}$ (cf. Fig. 117(B) and Fig. 119)

($\beta$1) Scan addresses i of the respective points $_ip_0$ on an image from the minimum value $i_{min}$ to the maximum value $i_{max}$ by a "scan unit 552 for pixel No. i" (E-3$\beta$-1, E-3$\beta$-2, E-3$\beta$-10).

(Scan i)

($\beta$2) In a similar fashion to that of the step (3) of the embodiment D-1, cut and bring down images on local areas taking a "pixel $_ip_0$ associated with the address i" as the center from images at present time $t_0$ and the subsequent time $t_1$, which are obtained by a camera 11, as to the present time $t_0$ and the subsequent time $t_1$, respectively, by a "unit 554 for cutting and bringing down images on local areas taking $_ip_0$ as the center" (E-3$\beta$-3). ($\beta$3) Scan addresses j of elements ($n_{sj}$, $_nd_{sj}$) on a cylindrical arrangement from the minimum value $j_{min}$ to the maximum value $j_{max}$ by a "scan unit 553 for element No. j" (E-3$\beta$-4, E-3$\beta$-5, E-3$\beta$-9).

(Scan j)

($\beta$4) Feed those addresses (i, j) to an $_{ij}\tau$ table 555 and output the motion parallax $_{ij}\tau$ (E-3$\beta$-6).

($\beta$5) In a similar fashion to that of the step (6) of the embodiment D-1, feed the "images on local areas at present time $t_0$ and the subsequent time $t_1$ " and the "motion parallax $_k\tau$" to a "motion parallax detection unit 556" (cf. Fig. 159) to compute the response intensity in accordance with the following equation (E-3$\beta$-7).

$$\text{Response intensity} = \Sigma_x \Sigma_y \, _ia_0 \, (x, y) \, _ia_1 \, (x - _{ij}\tau_x, y - _{ij}\tau_y)$$

($\beta$6) The response intensity is voted for elements ($n_{sj}$, $_nd_{sj}$) on a "cylindrical arrangement voting unit 557" (E-3$\beta$-8).

(Scan j (E-3β-9))

(Scan i (E-3β-10))

(β7) Extract a "point wherein the voted intensity offers the maximum (peak)" in the cylindrical arrangement, by a "peak extraction unit 558". This maximum point is a "place wherein the large circles intersect with each other at one point". The "normalization shortest distance $_nd_{s0}$ up to going across the plane" is determined in the form of a "height coordinates" of the maximum point, and the "three-dimensional azimuth $n_{s0}$ of the plane" is determined in the form of a "sectional circle inside coordinates" (E-3β-11).

Embodiment E-4. (Normalization shortest distance + v unknown)

Figs. 120(A) and 120(B) are block diagrams of an embodiment E-4 of the present invention. Figs. 121 and 122 are flowcharts of the embodiment E-4.

(α) Prepare an $_{ij}\tau$ table (Fig. 164) for all the moving direction {v}, that is, a table for retrieving and outputting a motion parallax $_{ij}\tau$ from a pixel number i of an input image, an element number j of a cylindrical arrangement, and the moving direction v (cf. Fig. 120(A), Fig. 121).

The following step (α2) to (α6) are the same as the corresponding steps of the embodiment E-3(α).

(α0) Scan a "moving direction parameter v" over any possible directions (from the minimum value $v_{min}$ to the maximum value $v_{max}$) by a "scan unit for v parameter 508" (E-4α-1, E-4α-2, E-4α-13).

(Scan v )

(α1) Set up the "position $P_{inf}$ after the infinite time elapses", as being equal to the parameter v, by a "$P_{inf}$ set unit 501" (E-4α-3).

(α2) Scan addresses i of the respective points $_ip_0$ on an image from the minimum value $i_{min}$ to the maximum value $i_{max}$ by a "scan unit 502 for pixel No. i" (E-4α-4, E-4α-5, E-4α-12).

(Scan i )

(α3) Scan addresses j of elements ($n_{sj}$, $_nt_{cj}$) on a cylindrical arrangement from the minimum value $j_{min}$ to the maximum value $j_{max}$ by a "scan unit 503 for element No. j" (E-4α-6, E-4α-7, E-4α-11).

(Scan j )

(α4) Output pixels $_ip_0$ on the image and the elements ($n_{sj}$, $_nd_{sj}$) on the cylindrical arrangement, which are associated with the addresses (i, j), by an "$_ip_0$ output unit 504", an "$n_{sj}$ output unit 505" and an "$_nd_{sj}$ output unit 509" (E-4α-8).

(α-5) Feed four parameters $n_{sj}$, $_nd_{sj}$, $_ip_0$, $p_{inf}$ thus set up to an "$_{ij}\tau$ table producing unit 510" and compute the motion parallax $_{ij}\tau$ in accordance with a method shown in (A-1) of the appendix (E-4α-9).

(α-6) Store the motion parallax $_{ij}\tau$ in the form of the content associated with the addresses (i, j) of the $_{ij}\tau$ table (Fig. 164) (E-4α-10).

(Scan j (E-4α-11) )

(Scan i (E-4α-12) )

(α-7) In the processing up to here, there are obtained the $_{ij}\tau$ table for the respective moving directions v.

Thus, the $_{ij}\tau$ table (Fig. 164) for all the moving directions {v} is obtained.

(β) Using the $_{ij}\tau$ table thus prepared, detect the planar azimuth $n_{s0}$ and the normalization shortest distance $_nd_{sj}$ (cf. Fig. 120(B) and Fig. 122)

The following step (β1) to (β6) are the same as the corresponding steps of the embodiment E-3.

(β0) Scan a "moving direction parameter v" over any possible directions (from the minimum value $v_{min}$ to the maximum value $v_{max}$) by a "scan unit for v parameter 559" (E-4β-1, E-4β-2, E-4β-13).

(Scan v)

(β1) Scan addresses i of the respective points $_ip_0$ on an image from the minimum value $i_{min}$ to the maximum

value $i_{max}$ by a "scan unit 552 for pixel No. i" (E-4β-3, E-4β-4, E-4β-12).

(Scan i)

(β2) In a similar fashion to that of the step (3) of the embodiment D-1, cut and bring down images on local areas taking a "pixel $_ip_0$ associated with the address i" as the center from images at present time $t_0$ and the subsequent time $t_1$, which are obtained by a camera 11, as to the present time $t_0$ and the subsequent time $t_1$, respectively, by a "unit 554 for cutting and bringing down images on local areas taking $_ip_0$ as the center" (E-4β-5).
(β3) Scan addresses j of elements $(n_{sj},\ _nd_{sj})$ on a cylindrical arrangement from the minimum value $j_{min}$ to the maximum value $j_{max}$ by a "scan unit 553 for element No. j" (E-4β-6, E-4β-7, E-4β-11).

(Scan j)

(β4) Feed those addresses (i, j) to an $_{ij}τ$ table 565 (Fig. 164) and output the motion parallax $_{ij}τ$ (E-4β-8).
(β5) In a similar fashion to that of the step (6) of the embodiment D-1, feed the "images on local areas at present time $t_0$ and the subsequent time $t_1$ " and the "motion parallax $_Kτ$ " to a "motion parallax detection unit 566" (cf. Fig. 159) to compute the response intensity in accordance with the following equation (E-4β-9).

$$\text{Response intensity} = Σ_xΣ_y\ _ia_0\ (x,\ y)\ _ia_l\ (x -\ _{ij}τ_x,\ y -\ _{ij}τ_y)$$

(β6) The response intensity is voted for elements $(n_{sj},\ _nd_{sj})$ on a "cylindrical arrangement voting unit 567" (E-4β-10).

(Scan j (E-4β-11) )

(Scan i (E-4β-12))

(β7) In the processing up to here, the voting is performed for all the elements of the cylindrical arrangement.

(Scan v (E-4β-13) )

(β8) In the processing up to here, the voting is performed for all the elements of the cylindrical arrangements for all the moving direction parameters v.
(β9) Extract a "specified cylindrical arrangement" wherein the intensity offers the maximum from among the cylindrical arrangements, by a "peak extraction unit 568". Thus, a true moving direction $v_0$ is determined in the form of the moving direction parameter for this arrangement. When a point, wherein the intensity offers the peak in the cylindrical arrangement, is extracted, the normalization shortest distance $_nd_{sj}$ up to going across the plane is determined in the form of a "height coordinates" of the maximum point, and the three-dimensional azimuth $n_{s0}$ of the plane is determined in the form of a "sectional circle inside coordinates" (E-4β-14).

Embodiment F-1. (Normalized time)

Figs. 135(A) and 135(B) are block diagrams of an embodiment F-1 of the present invention. Figs. 136 and 137 are flowcharts of the embodiment F-1.
(α) Transform the $_{ij}τ$ table (Fig. 163) of the embodiment E-1 to a $\{_{ik}j\}$ table (cf. Fig. 135(A), Fig. 136).
(α1) Prepare an $_{ij}τ$ table 555 (cf. Fig. 111(A), Fig. 163) in accordance with the processing (cf. Fig. 112) of the embodiment E-1α (F-1α-1), and replace the $_{ij}τ$ table (that is, the motion parallax τ) with a motion parallax number k in accordance with the association of Fig. 160 by a $\{_{ik}j\}$ table transformation unit 601 (F-1α-2). Thus, the $_{ij}τ$ table of Fig. 163 is rewritten into an "$_{ij}$k table (appearing at middle stage of Fig. 135(A))" wherein an address is (i, j) and the content is $_{ij}$k.
(α2) Next, rearrange the $_{ij}$k table by the $\{_{ik}j\}$ table transformation unit 601 so as to produce a table 602 wherein an address is (i, k) and the content is an "element number j of the cylindrical arrangement" (F-1α-3). As stated in connection with the embodiment A-6, an arbitrary address (i, k), that is, a pixel wherein a position is $_ip_0$, and a motion parallax $_Kτ$, is coupled with the "all the points on a large circle of a cylindrical arrangement" through the compound ratio transformation and the polar transformation. Thus, the above-mentioned element number j becomes a set and is expressed by an element number group $\{_{ik}j\}$ (cf. Fig. 165).
(α3) Thus, designation of an arbitrary address (i, k) produces the $\{_{ik}j\}$ table (Fig. 165) for outputting the element

number group $\{_{ik}j\}$ of the cylindrical arrangement.

(β) Using the $\{_{ik}j\}$ table thus prepared, detect the planar azimuth $_ns_0$ and the normalized time $_nt_{c0}$ (cf. Fig. 135 (B) and Fig. 137).

(β1) Scan addresses i of the respective points $_ip_0$ on an image from the minimum value $i_{min}$ to the maximum value $i_{max}$ by a "scan unit 652 for pixel No. i" (F-1β-1, F-1β-2, F-1β-12).

(Scan i)

(β2) In a similar fashion to that of the step (3) of the embodiment D-1, cut and bring down images on local areas taking a "pixel $_ip_0$ associated with the address i" as the center from images at present time $t_0$ and the subsequent time $t_1$, which are obtained by a camera 651, as to the present time $t_0$ and the subsequent time $t_1$, respectively, by a "unit 654 for cutting and bringing down images on local areas taking $_ip_0$ as the center" (F-1β-3).

(β3) Scan a motion parallax number k from the minimum value $k_{min}$ to the maximum value $k_{max}$ by a "scan unit 653 for motion parallax number k" (F-1β-4, F-1β-5, F-1β-11).

(Scan k)

(β4) Transform the number k, by a "transformation unit 655 for motion parallax $_K\tau$", to a motion parallax $_K\tau$ in a similar fashion to that of the step (5) of the embodiment D-1 (F-1β-6). In the event that the direction of the motion parallax $_k\tau$, that is, the motion vector $(_k\tau_x, _k\tau_y)$ is different from the "direction from $_ip_0$ to v (that is, $P_{inf}$)" in Fig. 10(A), it is the motion parallax which conflicts with this moving direction v. Thus, in this case, the process skips to the step (β7) (F-1β-7).

(β5) In a similar fashion to that of the step (6) of the embodiment D-1, feed the "images on local areas at present time $t_0$ and the subsequent time $t_1$" and the "motion parallax $_k\tau$" to a "motion parallax detection unit 656" (cf. Fig. 159) to compute the response intensity in accordance with the following equation (F-1β-8).

$$\text{Response intensity} = \Sigma_x \Sigma_y \, _ia_0\,(x,\,y)\, _ia_1\,(x{-}_k\,\tau_x,\,y{-}_k\tau_y)$$

(β6) Feed the addresses (i, k) to a $\{_{ik}j\}$ table 602 and output the element number group $\{_{ik}j\}$ of the cylindrical arrangement (F-1β-9).

(β7) The response intensity, which is computed in the step (β5), is voted for an element number group of a cylindrical arrangement associated with the element number group $\{_{ik}j\}$, of a "cylindrical arrangement voting unit 657" (F-1β-10).

(Scan k (F-1β-11)),

(Scan i (F-1β-12))

(β8) Extract a "point wherein the voted intensity offers the maximum (peak)" in the cylindrical arrangement, by a "peak extraction unit 658". This maximum point is a "place wherein the large circles intersect with each other at one point". The "normalized time $_nt_{c0}$ up to going across the plane" is determined in the form of a "height coordinates" of the maximum point, and the "three-dimensional azimuth $_ns_0$ of the plane" is determined in the form of a "sectional circle inside coordinates" (F-1β-13).

Embodiment F-2. (Normalized time + v unknown)

Figs. 138(A) and 138(B) are block diagrams of an embodiment F-2 of the present invention. Figs. 139 and 140 are flowcharts of the embodiment F-2.

(α) Prepare a $\{_{ik}j\}$ table (Fig. 166) for all the moving direction $\{v\}$ (cf. Fig. 138(A), Fig. 139).

(α1) Prepare an $_{ij}\tau$ table 555 (cf. Fig. 114(A), Fig. 164) in accordance with the processing (cf. Fig. 115) of the embodiment E-2α (F-2α-1), and replace the $_{ij}\tau$ table (that is, the motion parallax τ) with a motion parallax number k in accordance with the association of Fig. 160 by a $\{_{ik}j\}$ table transformation unit 601 (F-2α-2). Thus, the $_{ij}\tau$ table of Fig. 164 is rewritten into an "$_{ij}$k table (appearing at middle stage of Fig. 138(A))" wherein an address is (i, j) and the content is $_{ij}$k.

(α2) Next, rearrange the $_{ij}$k table by the $\{_{ik}j\}$ table transformation unit 601 so as to produce a table 602 wherein an address is (i, k) and the content is an "element number j of the cylindrical arrangement" (F-2α-3). As stated in connection with the embodiment A-6, an arbitrary address (i, k), that is, a pixel wherein a position is $_ip_0$, and a motion

parallax $_K\tau$, is coupled with the "all the points on a large circle of a cylindrical arrangement" through the compound ratio transformation and the polar transformation. Thus, the above-mentioned element number j becomes a set and is expressed by an element number group $\{_{ik}j\}$ (cf. Fig. 166).

($\alpha$3) Thus, designation of an arbitrary address (i, k) produces the $\{_{ik}j\}$ table (Fig. 166) for outputting the element number group $\{_{ik}j\}$ of the cylindrical arrangement.

($\beta$) Using the $\{_{ik}j\}$ table thus prepared, detect the planar azimuth $n_{s0}$ and the normalized time $_nt_{c0}$ (cf. Fig. 138 (B) and Fig. 140)

The following steps ($\beta$1) to ($\beta$7) are the same as the corresponding steps of the embodiment F-1.

($\beta$0) Scan a "moving direction parameter v" over any possible directions (from the minimum value $v_{min}$ to the maximum value $v_{max}$ ) by a "scan unit for v parameter 659" (F-2$\beta$-1, F-2$\beta$-2, F-2$\beta$-13).

(Scan v)

($\beta$1) Scan addresses i of the respective points $_ip_0$ on an image from the minimum value $i_{min}$ to the maximum value $i_{max}$ by a "scan unit 652 for pixel No. i" (F-2$\beta$-3, F-2$\beta$-4, F-2$\beta$-14).

(Scan i)

($\beta$2) In a similar fashion to that of the step (3) of the embodiment D-1, cut and bring down images on local areas taking a "pixel $_ip_0$ associated with the address i" as the center from images at present time $t_0$ and the subsequent time $t_1$, which are obtained by a camera 651, as to the present time $t_0$ and the subsequent time $t_1$, respectively, by a "unit 654 for cutting and bringing down images on local areas taking $_ip_0$ as the center" (F-2$\beta$-5).

($\beta$3) Scan a motion parallax number k from the minimum value $k_{min}$ to the maximum value $k_{max}$ by a "scan unit 653 for motion parallax number k" (F-2$\beta$-6, F-2$\beta$-7, F-2$\beta$-13).

(Scan k)

($\beta$4) Transform the number k, by a "transformation unit 655 for motion parallax $_K\tau$, to a motion parallax $_K\tau$ in a similar fashion to that of the step (5) of the embodiment D-1 (F-2$\beta$-8). In the event that the direction of the motion parallax $_K\tau$, that is, the motion vector $(_k\tau_x\ _k\tau_y)$ is different from the "direction from $_ip_0$ to v (that is, $p_{inf}$) in Fig. 10(A), it is the motion parallax which conflicts with this moving direction v. Thus, in this case, the process skips to the step ($\beta$7) (F-2$\beta$-9).

($\beta$5) In a similar fashion to that of the step (6) of the embodiment D-1, feed the "images on local areas at present time $t_0$ and the subsequent time $t_1$ " and the "motion parallax $_K\tau$" to a "motion parallax detection unit 656" (cf. Fig. 159) to compute the response intensity in accordance with the following equation (F-2$\beta$-10).

$$\text{Response intensity} = \Sigma_x\Sigma_y\ _ia_0\ (x, y)\ _ia_1\ (x-_k\tau_x, y-_k\tau_y)$$

($\beta$6) Feed the addresses (i, k) to a $\{_{ik}j\}$ table 602 and output the element number group $\{_{ik}j\}$ of the cylindrical arrangement (F-2$\beta$-11).

($\beta$7) The response intensity, which is computed in the step ($\beta$5), is voted for an element number group of a cylindrical arrangement associated with the element number group $\{_{ik}j\}$, of a "cylindrical arrangement voting unit 657" (F-2$\beta$-12).

(Scan k (F-2$\beta$-13))

(Scan i (F-2$\beta$-14))

($\beta$8) In the processing up to here, the voting is performed for all the elements of the cylindrical arrangement.

(Scan v (F-2$\beta$-15))

($\beta$9) In the processing up to here, the voting is performed for all the elements of the cylindrical arrangements for all the moving direction parameters v.

($\beta$10) Extract a "specified cylindrical arrangement" wherein the intensity offers the maximum from among the cylindrical arrangements, by a "peak extraction unit 658". Thus, a true moving direction $v_0$ is determined in the form of the moving direction parameter for this arrangement. When a point, wherein the intensity offers the peak in the cylindrical arrangement, is extracted, the normalized time $_nt_{c0}$ up to going across the plane is determined in the form of a "height coordinates" of the maximum point, and the three-dimensional azimuth $n_{s0}$ of the plane is determined in the form of a "sectional circle inside coordinates" (F-2β-16).

Embodiment F-3. (Normalization shortest distance)

Figs. 141(A) and 141(B) are block diagrams of an embodiment F-3 of the present invention. Figs. 142 and 143 are flowcharts of the embodiment F-3.

(α) Transform the $_{ij}τ$ table (Fig. 163) of the embodiment E-3 to a $\{_{ik}j\}$ table (cf. Fig. 141(A), Fig. 142).

(α1) Prepare an $_{ij}τ$ table 565 (cf. Fig. 117(A), Fig. 163) in accordance with the processing (cf. Fig. 118) of the embodiment E-3α (F-3α-1), and replace the $_{ij}τ$ table (that is, the motion parallax τ) with a motion parallax number k in accordance with the association of Fig. 160 by a $\{_{ik}j\}$ table transformation unit 611 (F-3α-2). Thus, the $_{ij}τ$ table of Fig. 163 is rewritten into an "$_{ij}k$ table (appearing at middle stage of Fig. 141(A))" wherein an address is (i, j) and the content is $_{ij}k$.

(α2) Next, rearrange the $_{ij}k$ table by the $\{_{ik}j\}$ table transformation unit 611 so as to produce a table 612 wherein an address is (i, k) and the content is an "element number j of the cylindrical arrangement" (F-3α-3). As stated in connection with the embodiment A-8, an arbitrary address (i, k), that is, a pixel wherein a position is $_ip_0$, and a motion parallax $_Kτ$, is coupled with the "all the points on a small circle of a cylindrical arrangement" through the small circle transformation. Thus, the above-mentioned element number j becomes a set and is expressed by an element number group $\{_{ik}j\}$ (cf. Fig. 165).

(α3) Thus, designation of an arbitrary address (i, k) produces the $\{_{ik}j\}$ table (Fig. 165) for outputting the element number group $\{_{ik}j\}$ of the cylindrical arrangement.

(β) Using the $\{_{ik}j\}$ table thus prepared, detect the planar azimuth $n_{s0}$ and the normalization shortest distance $_nd_{s0}$ (cf. Fig. 141(B) and Fig. 143).

(β1) Scan addresses i of the respective points $_ip_0$ on an image from the minimum value $i_{min}$ to the maximum-value $i_{max}$ by a "scan unit 652 for pixel No. i" (F-3β-1, F-3β-2, F-3β-12).

(Scan i)

(β2) In a similar fashion to that of the step (3) of the embodiment D-1, cut and bring down images on local areas taking a "pixel $_ip_0$ associated with the address i" as the center from images at present time $t_0$ and the subsequent time $t_1$, which are obtained by a camera 651, as to the present time $t_0$ and the subsequent time $t_1$, respectively, by a "unit 654 for cutting and bringing down images on local areas taking $_ip_0$ as the center" (F-3β-3).

(β3) Scan a motion parallax number k from the minimum value $k_{min}$ to the maximum value $k_{max}$ by a "scan unit 653 for motion parallax number k" (F-3β-4, F-3β-5, F-3β-11).

(Scan k)

(β4) Transform the number k, by a "transformation unit 665 for motion parallax $_Kτ$, to a motion parallax $_Kτ$ in a similar fashion to that of the step (5) of the embodiment D-1 (F-3β-6). In the event that the direction of the motion parallax $_Kτ$, that is, the motion vector ($_kτ_x$ $_kτ_y$) is different from the "direction from $_ip_0$ to v (that is, $p_{inf}$) in Fig. 10(A), it is the motion parallax which conflicts with this moving direction v. Thus, in this case, the process skips to the step (β7) (F-3β-7).

(β5) In a similar fashion to that of the step (6) of the embodiment D-1, feed the "images on local areas at present time $t_0$ and the subsequent time $t_1$ " and the "motion parallax $_Kτ$" to a "motion parallax detection unit 666" (cf. Fig. 159) to compute the response intensity in accordance with the following equation (F-3β-8).

$$\text{Response intensity} = \Sigma_x \Sigma_y {}_ia_0(x, y) \, {}_ia_1(x - {}_kτ_x, y - {}_kτ_y)$$

(β6) Feed the addresses (i, k) to a $\{_{ik}j\}$ table 612 and output the element number group $\{_{ik}j\}$ of the cylindrical arrangement (F-3β-9).

(β7) The response intensity, which is computed in the step (β5), is voted for an element number group of a cylindrical arrangement associated with the element number group $\{_{ik}j\}$, of a "cylindrical arrangement voting unit 667" (F-3β-10).

(Scan k (F-3β-11) )

(Scan i (F-3β-12) )

(β8) Extract a "point wherein the voted intensity offers the maximum (peak)" in the cylindrical arrangement, by a "peak extraction unit 668". This maximum point is a "place wherein the small circles intersect with each other at one point". The "normalization shortest distance $_nd_{s0}$ up to going across the plane" is determined in the form of a "height coordinates" of the maximum point, and the "three-dimensional azimuth $n_{s0}$ of the plane" is determined in the form of a "sectional circle inside coordinates" (F-3β-13).

Embodiment F-4. (Normalization shortest distance + v unknown)

Figs. 144(A) and 144(B) are block diagrams of an embodiment F-4 of the present invention. Figs. 145 and 146 are flowcharts of the embodiment F-4.

($\alpha$) Transform the $_{ij}\tau$ table (Fig. 164) of the embodiment E-4 to a $\{_{ik}j\}$ table (cf. Fig. 144(A), Fig. 145).

($\alpha$1) Prepare an $_{ij}\tau$ table 565 (cf. Fig. 144(A), Fig. 164) in accordance with the processing of the embodiment E-4$\alpha$ (F-4$\alpha$-1), and replace the $_{ij}\tau$ table (that is, the motion parallax $\tau$) with a motion parallax number k in accordance with the association of Fig. 160 by a $\{_{ik}j\}$ table transformation unit 611 (F-4$\alpha$-2). Thus, the $_{ij}\tau$ table of Fig. 164 is rewritten into an "$_{ij}k$ table (appearing at middle stage of Fig. 144(A))" wherein an address is (i, j) and the content is $_{ij}k$.

($\alpha$2) Next, rearrange the $_{ij}k$ table by the $\{_{ik}j\}$ table transformation unit 611 so as to produce a table 612 wherein an address is (i, k) and the content is an "element number j of the cylindrical arrangement" (F-4$\alpha$-3). As stated in connection with the embodiment A-8, an arbitrary address (i, k), that is, a pixel wherein a position is $_ip_0$, and a motion parallax $_K\tau$, is coupled with the "all the points on a large circle of a cylindrical arrangement" through the small circle transformation. Thus, the above-mentioned element number j becomes a set and is expressed by an element number group $\{_{ik}j\}$ (cf. Fig. 166).

($\alpha$3) Thus, designation of an arbitrary address (i, k) produces the $\{_{ik}j\}$ table (Fig. 166) for outputting the element number group $\{_{ik}j\}$ of the cylindrical arrangement.

($\beta$) Using the $\{_{ik}j\}$ table thus prepared, detect the planar azimuth $n_{s0}$ and the normalization shortest distance $_nd_{s0}$ (cf. Fig. 144(B) and Fig. 146)

The following steps ($\beta$1) to ($\beta$7) are the same as the corresponding steps of the embodiment F-3.

($\beta$0) Scan a "moving direction parameter v" over any possible directions (from the minimum value $v_{min}$ to the maximum value $v_{max}$ ) by a "scan unit for v parameter 659" (F-4$\beta$-1, F-4$\beta$-2, F-4$\beta$-15).

(Scan v)

($\beta$1) Scan addresses i of the respective points $_ip_0$ on an image from the minimum value $i_{min}$ to the maximum value $i_{max}$ by a "scan unit 652 for pixel No. i" (F-4$\beta$-1, F-4$\beta$-2, F-4$\beta$-14).

(Scan i)

($\beta$2) In a similar fashion to that of the step (3) of the embodiment D-1, cut and bring down images on local areas taking a "pixel $_ip_0$ associated with the address i" as the center from images at present time $t_0$ and the subsequent time $t_1$, which are obtained by a camera 651, as to the present time $t_0$ and the subsequent time $t_1$, respectively, by a "unit 654 for cutting and bringing down images on local areas taking $_ip_0$ as the center" (F-4$\beta$-5).

($\beta$3) Scan a motion parallax number k from the minimum value $k_{min}$ to the maximum value $k_{max}$ by a "scan unit 653 for motion parallax number k" (F-4$\beta$-6, F-4$\beta$-7, F-4$\beta$-13).

(Scan k)

($\beta$4) Transform the number k, by a "transformation unit 665 for motion parallax $_K\tau$, to a motion parallax $_K\tau$ in a similar fashion to that of the step (5) of the embodiment D-1 (F-4$\beta$-6). In the event that the direction of the motion parallax $_K\tau$, that is, the motion vector ($_k\tau_x$ $_k\tau_y$) is different from the "direction from $_ip_0$ to v (that is, $p_{inf}$) in Fig. 10(A), it is the motion parallax which conflicts with this moving direction v. Thus, in this case, the process skips to the step ($\beta$7) (F-4$\beta$-9).

($\beta$5) In a similar fashion to that of the step (6) of the embodiment D-1, feed the "images on local areas at present time $t_0$ and the subsequent time $t_1$ " and the "motion parallax $_K\tau$" to a "motion parallax detection unit 666" (cf. Fig. 159) to compute the response intensity in accordance with the following equation (F-4$\beta$-10).

$$\text{Response intensity} = \Sigma_x \Sigma_y \, _ia_0\,(x,\,y)\, _ia_1\,(x{-}_k\tau_x,\,y{-}_k\tau_y)$$

(β6) Feed the addresses (i, k) to a $\{_{ik}j\}$ table 612 and output the element number group $\{_{ik}j\}$ of the cylindrical arrangement (F-4β-11).

(β7) The response intensity, which is computed in the step (β5), is voted for an element number group of a cylindrical arrangement associated with the element number group $\{_{ik}j\}$, of a "cylindrical arrangement voting unit 667" (F-4β-12).

(Scan k (F-4β-13))

(Scan i (F-4β-14))

(β8) In the processing up to here, the voting is performed for all the elements of the cylindrical arrangement.

(Scan v (F-4β-15))

(β9) In the processing up to here, the voting is performed for all the elements of the cylindrical arrangements for all the moving direction parameters v.

(β10) Extract a "specified cylindrical arrangement" wherein the intensity offers the maximum from among the cylindrical arrangements, by a "peak extraction unit 668". Thus, a true moving direction $v_0$ is determined in the form of the moving direction parameter for this arrangement. When a point, wherein the intensity offers the peak in the cylindrical arrangement, is extracted, the normalization shortest distance $_nd_{s0}$ up to going across the plane is determined in the form of a "height coordinates" of the maximum point, and the three-dimensional azimuth $n_{s0}$ of the plane is determined in the form of a "sectional circle inside coordinates" (F-4β-16).

Appendix: Methods of computation for the motion parallax and the binocular parallax

(A) Motion parallax

(A-1) Hereinafter, there will be described two types of methods of computing a motion parallax $\tau$ from a normalized time $_nt_c$, a planar azimuth $n_s$, a present time position $p_0$ and an infinite time position $p_{inf}$ (a moving direction v).

(A-1-1) Method 1: A method according to the compound ratio and the polar transformation (Figs. 161(A) and 161(B))

Step 1: Set up a normalized time $_nt_c$, a planar azimuth $n_s$, a present time position $p_0$ and an infinite time position $p_{inf}$.
Step 2: Determination of $p_c$
$p_c$ is an intersection point of a "large circle passing through $p_0$ and $p_{inf}$ and a "polar line $n_s$"(Fig. 161 (A)), and thus is determined in accordance with the following equation. Incidentally, the "vector product with $n_s$" of the following equation is owing to the polar transformation of the above-mentioned paragraph 1. 3. 2.

$$p_c = [\,[p_0{\times}p_{inf}] \times n_s\,] / |\,[p_0{\times}p_{inf}] \times n_s\,| \qquad \text{(Appendix - 1a)}$$

Step 3: Determination of $\tau$ or $\cos^{-1}(p_0p_1)$
Among $_nt_c$, $p_{inf}$, $p_0$, $p_1$, and $p_c$, there is a relationship of a compound ratio as set forth below (cf. equation (12a)).

$$_nt_c = \{p_{inf}p_0p_1p_c\} \qquad \text{(Appendix - 2a)}$$

When $p_{inf}$, $p_0$, $p_1$, and $p_c$ are represented by the central angle (the above-mentioned paragraph 1. 3.

1, Fig. 161(B)) and are substituted for the equation (Appendix - 2a), the following equation is obtained (cf. equation (16a)).

$$_nt_c = (\sin(a + \tau) / \sin(\tau))$$

$$/ (\sin(x) / \sin(x-a)) \qquad \text{(Appendix - 2b)}$$

When this equation is solved as to $\tau$, the following equation is obtained.

$$\tau = \tan^{-1}(\sin a \sin(x - a)$$

$$/ (_nt_c \sin x - \cos a \sin(x - a)) \qquad \text{(Appendix - 3)}$$

Thus, the motion parallax $\tau$ is determined. Here, a and x are computed in accordance with the following equations.

$$a = \cos^{-1}(p_{inf}p_0) \qquad \text{(Appendix - 4a)}$$

$$x = \cos^{-1}(p_{inf}p_c) \qquad \text{(Appendix - 4b)}$$

In the even that it is desired that the subsequent time position $p_1$ is determined, it is possible to compute the subsequent time position $p_1$ in accordance with the following equation.

$$p_1 = \cos\tau\,\xi + \sin\tau\,\eta \qquad \text{(Appendix - 5a)}$$

$\xi$ and $\eta$ are given by the following equations.

$$\xi = p_0 \qquad \text{(Appendix - 5b)}$$

$$\eta = [[p_0 \times p_{inf}] \times p_0] / |[p_0 \times p_{inf}] \times p_0| \qquad \text{(Appendix - 5c)}$$

(A-1-2) Method 2: An alternative method
It is also possible to determine the motion parallax $\tau$ in accordance with the following method.

Step 1: Set up a normalized time $_nt_c$, a planar azimuth $n_s$, a present time position $p_0$ and an infinite time position $p_{inf}$.
Step 2: Set up arbitrarily a unit moving distance $\Delta x$ and compute a distance $d_c$ ($Vt_c$ in Fig. 12) from the camera center to a plane in accordance with the following equation.

$$d_c = _nt_c\Delta x \qquad \text{(Appendix - 6)}$$

Step 3: Determine a plane wherein an azimuth is $n_s$ and a distance is $d_c$. Compute a point $p_0$ intersecting with the plane through extension from the camera center to a direction of $p_0$.
Step 4: Compute a point $P_1$ wherein the point $P_0$ is moved by $\Delta x$ in a direction of $p_{inf}$.
Step 5: $p_1$, wherein the point $P_1$ is normalized in accordance with the following equation, is a position on a sphere as to the subsequent time.

$$p_1 = P_1/|P_1| \qquad \text{(Appendix - 7)}$$

Step 6: The motion parallax $\tau$ can be determined from this position $p_1$ and the present time position $p_0$ in accordance with the following equation. Incidentally, the motion parallax is independent of a variation of the unit moving distance $\Delta x$ arbitrarily set up in the step 2.

$$\tau = \cos^{-1}(p_0 p_1) \qquad \text{(Appendix - 8)}$$

(A-2) In case of a normalization shortest distance $_n d_s$

Hereinafter, there will be described two types of methods of computing a motion parallax $\tau$ from a normalization shortest distance $_n d_s$, a planar azimuth $n_s$, a present time position $p_0$ and an infinite time position $p_{inf}$ (a moving direction v).

(A-2-1) Method 1: A method according to the small circle transformation (Figs. 162(A) and 162(B))

Step 1: Set up a normalization shortest distance $_n d_s$, a planar azimuth $n_s$, a present time position $p_0$ and an infinite time position $p_{inf}$.
Step 2: Determine a radius R of a small circle transformation (the above-mentioned paragraph 2. 2, Fig. 162(A))

$$R = \cos^{-1}(p_0 n_s) \qquad \text{(Appendix - 11)}$$

Step 3: Determination of $\tau$ or $\cos^{-1}(p_0 p_1)$
As stated in the above-mentioned paragraph 2. 2, there is a relationship give by the following equation (Fig. 162(B)).

$$\cos R =\, _n d_s \diagup (p_{inf}\, p_0\, p_1)$$
$$=\, _n d_s\ \sin \tau \diagup \sin (a + \tau) \qquad \text{(Appendix - 12)}$$

When this equation is solved as to $\tau$, the following equation is obtained.

$$\tau = \tan^{-1}(\sin a \cos R /\,(_n d_s - \cos a \cos R)\,) \qquad \text{(Appendix - 13)}$$

Thus, the motion parallax $\tau$ is determined.
In the event that it is desired that the subsequent time position $p_1$ is determined, in a similar fashion to that of the equation (Appendix - 5a), it is possible to compute the subsequent time position $p_1$ in accordance with the following equation.

$$p_1 = \cos \tau\, \xi + \sin \tau\, \eta \qquad \text{(Appendix - 14)}$$

(A-2-2) Method 2: An alternative method
It is also possible to determine the motion parallax $\tau$ in accordance with the following method.

Step 1: Set up a normalization shortest distance $_n d_s$, a planar azimuth $n_s$, a present time position $p_0$ and an infinite time position $p_{inf}$ .
Step 2: Set up arbitrarily a unit moving distance $\Delta x$ and compute a shortest distance $d_s$ (Fig. 12) from the camera center to a plane in accordance with the following equation.

$$d_s =\, _n d_s \Delta x \qquad \text{(Appendix - 15)}$$

Step 3: Determine a plane wherein an azimuth is $n_s$ and a shortest distance is $d_s$ . Compute a point $P_0$

intersecting with the plane through extension from the camera center to a direction of $p_0$.

Step 4: Compute a point $P_1$ wherein the point $P_0$ is moved by $\Delta x$ in a direction of $p_{inf}$.

Step 5: $p_1$, wherein the point $P_1$ is normalized in accordance with the following equation, is a position on a sphere as to the subsequent time.

$$p_1 = P_1 / |P_1| \qquad \text{(Appendix - 16)}$$

Step 6: The motion parallax $\tau$ can be determined from this position $p_1$ and the present time position $p_0$ in accordance with the following equation. Incidentally, the motion parallax is independent of a variation of the unit moving distance $\Delta x$ arbitrarily set up in the step 2.

$$\tau = \cos^{-1}(p_0 p_1) \qquad \text{(Appendix - 17)}$$

Effect of the invention

1. Movement vision algorithm

(1) Effects of a method of determining a normalized time $_n t_c$

As stated in the paragraph 1. 3. 2, it is possible to determine a three-dimensional azimuth $n_s$ of a plane and a normalized time $_n t_c$ up to going across the plane through determination of the positions $p_0$, $p_1$ at the present time and the subsequent time, respectively, and determination of the position $p_{inf}$ after the infinite time elapses.

This method of determining a normalized time is very useful for a traveling of a robot, an automatic traveling of an automobile, an autoland of an airplane, etc. There will be described an example wherein a robot walks on a passage. When the robot moves obliquely with respect to the passage (that is, in a direction wherein the robot runs against a wall of the passage), a one point of the cylindrical arrangement of Fig. 10(B) is flashed, so that a "normalized time $_n t_c$ up to going across the wall (running against the wall)" and a "normal vector $n_s$ of the wall" are obtained in the form of the height coordinates and the sectional circle inside coordinates, respectively. When the normalized time $_n t_c$ is multiplied by a "time difference from the present time to the subsequent time (that is, a time difference between the image frames) $\Delta t$", it is transformed into a time $t_c$ up to running against the plane. In accordance with the time $t_c$ and the normal vector $n_s$, the robot can take an avoidance action as follows. That is, when the measured $t_c$ is less than a "limit of an avoidance time which is determined by velocity, inertia, driving torque, etc. of the robot", there is provided such a control that the robot turns to a direction not so as to run against the wall (that is, a direction perpendicular to the measured normal vector $n_s$). When the robot turns, the "time $t_c$ up to running against the wall" returns to a value exceeding the avoidance limit. Further, when the avoidance is advanced so that the robot begins to move in parallel to the wall, the time $t_c$ becomes infinity. Thus, it is possible to grasp that movement in such a direction may avoid a collision. In this manner, measurement of the three-dimensional azimuth $n_s$ of a plane and the time $t_c$ up to running against the wall makes it possible for the robot to move without a collision even if it is a meandering passage.

This method is characterized in the point that only determination of the positions $p_0$, $p_1$ and $p_{inf}$ at three times permits the prediction of the "time $t_c$ up to running against the wall", even if the moving velocity V is unknown. According to a scheme wherein a distance is measured by a ultrasound and the like, it is indispensable that the moving velocity V is measured to transform the measured distance to the "time up to running against the wall".

Further, according to the method described in paragraph 1. 6, it is possible to measure $n_s$ and $_n t_c$ only through determination of positions $p_0$ and $p_1$ at two times, even if $p_{inf}$ (a moving direction v) is unknown. According to this method, for example, in connection with an image on an internet, video and movie, even if the moving direction in photography is unknown, it is possible to measure a three-dimensional azimuth $n_s$ of a plane and a normalized time $_n t_c$ up to going across the plane. In the event that a plane is moved, generally, it is impossible to decide the moving direction. However, also in this case, according to the method described in paragraph 1. 6, it is possible to measure $n_s$ and $_n t_c$ together with the moving direction v.

The above-mentioned methods are not reported.

(2) Effects of a method of determining a normalization shortest distance $_n d_s$

As stated in the paragraphs 2. 1 and 2. 2. 3, it is possible to determine a three-dimensional azimuth $n_s$ of a

plane and a normalization shortest distance $_n d_s$ through determination of the positions $p_0$, $p_1$ at the present time and the subsequent time, respectively, and determination of the position $p_{inf}$ after the infinite time elapses.

This method of determining a normalization shortest distance is very useful for a "separation of a plurality of objects and environments which look like that they are superposed" (referred to as a depth separation). That is, a "relative depth" and a "gradient" of a plane constituting the objects and the environments can be measured in the form of the normalization shortest distance $_n d_s$ and the three-dimensional azimuth $n_s$. Thus, it is possible to separate and identify the objects and the environments even if they are superposed.

This depth separation is characterized in the point that only determination of the positions $p_0$, $p_1$ and $P_{inf}$ at three times permits the separation, even if the moving velocity V and "time difference $\Delta t$ between the present time and the subsequent time and the moving distance $\Delta x$" are unknown. In the event that a shortest distance $d_s$ to the plane is needed, it is possible to obtain the shortest distance $d_s$ by means of multiplying the "moving distance $\Delta x$ from the present time to the subsequent time" by the normalization shortest distance $_n d_s$.

Further, according to the method described in paragraph 2. 5, it is possible to measure the normalization shortest distance $_n d_s$ and the azimuth $n_s$ only through determination of positions $p_0$ and $p_1$ at two times, even if $p_{inf}$ (a moving direction v) is unknown. According to this method, for example, in connection with an image on an internet, video and movie, even if the moving direction in photography is unknown, it is possible to measure the "three-dimensional azimuth $n_s$ and the normalization shortest distance $_n d_s$", so that the depth separation can be performed. In the event that a plane is moved, generally, it is impossible to decide the moving direction. However, also in this case, according to the method described in paragraph 2. 5, it is possible to measure "$n_s$ and $_n d_s$" together with the moving direction v.

**Claims**

1.  An image measurement method comprising :

    a first step of setting up coordinates in a voting space in form of a parameter, said coordinates being defined by a physical quantity indexing a superposing time in which a measuring plane, including an arbitrary measuring point appearing on an image obtained through viewing a predetermined measurement space from a predetermined observation point inside the measurement space, is superposed on the observation point, and an azimuth $n_s$ of the measuring plane, in a moving continuous state wherein it is expected that a movement of the measuring point appearing on an image obtained through viewing the measurement space from the observation point inside the measurement space, said measuring point being relative with respect to the observation point, is continued in a direction identical to a moving direction relative with respect to the observation point between mutually different two measuring times on the measuring point and at a velocity identical to a moving velocity between said two measuring times;
    a second step of determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ of the measuring point after an infinite time elapses in the moving continuous state, and the coordinates in the voting space, which is set up in the first step;
    a third step of determining a response intensity associated with the motion parallax $\tau$ of the measuring point in accordance with two images obtained through viewing the measurement space from the observation point at the two measuring times; and
    a fourth step of voting the response intensity determined in the third step for the coordinates in the voting space, which is set up in the first step,

    wherein the second step to the fourth step, of the first to fourth steps, are effected by a plurality of number of times on a plurality of measuring points in the measurement space, while a value of the parameter is altered in the first step.

2.  An image measurement method comprising :

    a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second step of setting up coordinates in a voting space according to the first parameter in form of a second parameter, said coordinates being defined by a physical quantity indexing a superposing time in which a measuring plane including the measuring point is superposed on the observation point, and an azimuth $n_s$ of the measuring plane;

a third step of determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ set up in the first step, and the coordinates in the voting space, which is set up in the second step;

a fourth step of determining a response intensity associated with the motion parallax $\tau$ of the measuring point in accordance with two images obtained through viewing the measurement space from the observation point at the two measuring times; and

a fifth step of voting the response intensity determined in the fourth step for the coordinates in the voting space according to the first parameter, said coordinates being set up in the second step,

wherein the third step to the fifth step, of the first to fifth steps, are effected by a plurality of number of times on a plurality of measuring points in the measurement space, while values of the parameters are altered in the first step and the second step.

3.  An image measurement method comprising :

a first step of setting up coordinates in a voting space in form of a parameter, said coordinates being defined by a physical quantity indexing a shortest distance between a predetermined observation point inside a predetermined measurement space for observation of the measurement space and a measuring plane, including an arbitrary measuring point appearing on an image obtained through viewing the measurement space from the observation point inside the measurement space, at one measuring time of mutually different two measuring times, and an azimuth ns of the measuring plane;

a second step of determining a motion parallax $\tau$, which is a positional difference between two measuring positions $p_0$ and $p_1$ at the two measuring times on the measuring point, in accordance with a measuring position $p_0$ at one measuring time of the two measuring times on the measuring point, a position $p_{inf}$ of the measuring point after an infinite time elapses in a moving continuous state wherein it is expected that a movement of the measuring point is continued in a direction identical to a moving direction relative with respect to the observation point between mutually different two measuring times and at a velocity identical to a moving velocity between said two measuring times, and the coordinates in the voting space, which is set up in the first step;

a third step of determining a response intensity associated with the motion parallax $\tau$ of the measuring point in accordance with two images obtained through viewing the measurement space from the observation point at the two measuring times; and

a fourth step of voting the response intensity determined in the third step for the coordinates in the voting space, which is set up in the first step,

wherein the second step to the fourth step, of the first to fourth steps, are effected by a plurality of number of times on a plurality of measuring points in the measurement space, while a value of the parameter is altered in the first step.

4.  An image measurement method comprising :

a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction-v and at a velocity identical to a moving velocity between the two measuring times;

a second step of setting up coordinates in a voting space according to the first parameter in form of a second parameter, said coordinates being defined by a physical quantity indexing a shortest distance from the observation point to a measuring plane including the measuring point at one measuring time of the two measuring times, and an azimuth $n_s$ of the measuring plane;

a third step of determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ set up in the first step, and the coordinates in the voting space, which is set up in the second step;

a fourth step of determining a response intensity associated with the motion parallax $\tau$ of the measuring point in accordance with two images obtained through viewing the measurement space from the observation point at the two measuring times; and

a fifth step of voting the response intensity determined in the fourth step for the coordinates in the voting space according to the first parameter, said coordinates being set up in the second step,

wherein the third step to the fifth step, of the first to fifth steps, are effected by a plurality of number of times on a plurality of measuring points in the measurement space, while values of the parameters are altered in the first step and the second step.

**5.** An image measurement method comprising :

a first step of setting up in form of a parameter a motion parallax $\tau$, which is a positional difference between two measuring positions $p_0$ and $p_1$ at mutually different two measuring times, of an arbitrary measuring point appearing on an image obtained through viewing a predetermined measurement space from a predetermined observation point inside the measurement space;

a second step of determining coordinates in a voting space, said coordinates being defined by a physical quantity indexing a superposing time in which a measuring plane, including the measuring point, is superposed on the observation point, and an azimuth $n_s$ of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times, in accordance with a measuring position $p_0$ at one measuring time of said two measuring times on said measuring point, a position $p_{inf}$ of the measuring point after an infinite time elapses in the moving continuous state, and the motion parallax $\tau$ set up in the first step;

a third step of determining a response intensity associated with the motion parallax $\tau$ of the measuring point, which is set up in the first step, in accordance with two images obtained through viewing the measurement space from the observation point at the two measuring times; and

a fourth step of voting the response intensity determined in the third step for the coordinates in the voting space, said coordinates being set up in the second step,

wherein the second step to the fourth step, of the first to fourth steps, are effected by a plurality of number of times on a plurality of measuring points in the measurement space, while a value of the parameter is altered in the first step.

**6.** An image measurement method comprising :

a first step of setting up in form of a first parameter a moving direction $v$ of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction $v$ and at a velocity identical to a moving velocity between the two measuring times;

a second step of setting up in form of a second parameter a motion parallax $\tau$, which is a positional difference between two measuring positions $p_0$ and $p_1$ at the two measuring times on the measuring point;

a third step of determining coordinates in a voting space according to the first parameter, said coordinates being defined by a physical quantity indexing a superposing time in which a measuring plane, including the measuring point, is superposed on the observation point, and an azimuth $n_s$ of the measuring plane, in the moving continuous state, in accordance with a measuring position $p_0$ at one measuring time of said two measuring times on the measuring point, a position $p_{inf}$ set up in the first step, and the motion parallax $\tau$ set up in the second step;

a fourth step of determining a response intensity associated with the motion parallax $\tau$ of the measuring point, which is set up in the second step, in accordance with two images obtained through viewing the measurement space from the observation point at the two measuring times; and

a fifth step of voting the response intensity determined in the fourth step for the coordinates in the voting space according to the first parameter, said coordinates being set up in the third step,

wherein the third step to the fifth step, of the first to fifth steps, are effected by a plurality of number of times on a plurality of measuring points in the measurement space, while values of the parameters are altered in the first step and the second step.

**7.** An image measurement method comprising :

a first step of setting up in form of a parameter a motion parallax $\tau$, which is a positional difference between two measuring positions $p_0$ and $p_1$ at mutually different two measuring times on the measuring point, of an arbitrary measuring point appearing on an image obtained through viewing a predetermined measurement space from a predetermined observation point inside the measurement space;

a second step of determining coordinates in a voting space, said coordinates being defined by a physical quantity indexing a shortest distance from the observation point to a measuring plane including the measuring point at one measuring time of the two measuring times, and an azimuth $n_s$ of the measuring plane, in accordance with a measuring position $p_0$ at one measuring time of said two measuring times on said measuring point, a position $p_{inf}$ of the measuring point after an infinite time elapses in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times, and the motion parallax $\tau$ set up in the first step;

a third step of determining a response intensity associated with the motion parallax $\tau$ of the measuring point, which is set up in the first step, in accordance with two images obtained through viewing the measurement space from the observation point at the two measuring times; and

a fourth step of voting the response intensity determined in the third step for the coordinates in the voting space, said coordinates being set up in the second step,

wherein the second step to the fourth step, of the first to fourth steps, are effected by a plurality of number of times on a plurality of measuring points in the measurement space, while a value of the parameter is altered in the first step.

**8.** An image measurement method comprising :

a first step of setting up in form of a first parameter a moving direction $v$ of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction $v$ and at a velocity identical to a moving velocity between the two measuring times;

a second step of setting up in form of a second parameter a motion parallax $\tau$, which is a positional difference between two measuring positions $p_0$ and $p_1$ at the two measuring times on the measuring point;

a third step of determining coordinates in a voting space according to the first parameter, said coordinates being defined by a physical quantity indexing a shortest distance from the observation point to a measuring plane including the measuring point at one measuring time of the two measuring times, and an azimuth $n_s$ of the measuring plane, in the moving continuous state, in accordance with a measuring position $p_0$ at one measuring time of said two measuring times on the measuring point, a position $p_{inf}$ set up in the first step, and the motion parallax $\tau$ set up in the second step;

a fourth step of determining a response intensity associated with the motion parallax $\tau$ of the measuring point, which is set up in the second step, in accordance with two images obtained through viewing the measurement space from the observation point at the two measuring times; and

a fifth step of voting the response intensity determined in the fourth step for the coordinates in the voting space according to the first parameter, said coordinates being set up in the third step,

wherein the third step to the fifth step, of the first to fifth steps, are effected by a plurality of number of times on a plurality of measuring points in the measurement space, while values of the parameters are altered in the first step and the second step.

9. An image measurement method comprising :

a first step of determining a response intensity associated with a motion parallax, which is a positional difference between two measuring positions at mutually different two measuring times, of an arbitrary measuring point in a predetermined measurement space, in accordance with two images obtained through viewing the measurement space from a predetermined observation point at mutually different two measuring times; and

a second step of voting the response intensity determined in the first step for coordinates associated with the measuring point and the motion parallax in a voting space, said coordinates being defined by a physical quantity indexing a superposing time in which a measuring plane, including the measuring point, is superposed on the observation point, and an azimuth of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times;

wherein the first step and the second step are effected by a plurality of number of times on a plurality of measuring points in the measurement space.

10. An image measurement method according to claim 9, wherein said image measurement method further comprises a third step of determining an azimuth of a measuring plane including a plurality of measuring points joining a voting for a maximal point and/or a physical quantity indexing a superposing time in which the measuring plane is superposed on the observation point in such a manner that a maximal point wherein a value by said voting in the voting space offers a maximal value is determined.

11. An image measurement method comprising :

a first step of setting up in form of a parameter a moving direction of an arbitrary measuring point appearing on an image obtained through viewing a predetermined measurement space from a predetermined observation point inside the measurement space, said moving direction being relative with respect to the observation point between mutually different two measuring times;

a second step of determining a response intensity associated with a motion parallax, which is a positional difference between two measuring positions at the two measuring times on the measuring point, in accordance with two images obtained through viewing the measurement space from the observation point at the two measuring times; and

a third step of voting the response intensity determined in the second step for coordinates associated with the measuring point and the motion parallax in a voting space according to the parameter set up in the first step, said coordinates being defined by a physical quantity indexing a superposing time in which a measuring plane, including the measuring point, is superposed on the observation point, and an azimuth of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times;

wherein the second step and the third step, of the first to third steps, are effected by a plurality of number of times on a plurality of measuring points in the measurement space, while a value of the parameter is altered in the first step.

12. An image measurement method according to claim 11, wherein said image measurement method further comprises a fourth step of determining a true moving direction relative to the observation point on the measuring point, and of determining an azimuth of a measuring plane including a plurality of measuring points joining a voting for a maximal point determined on a voting space associated with the true moving direction, and/or a physical quantity indexing a superposing time in which the measuring plane is superposed on the observation point, in such a manner that a maximal point wherein a value by a voting is determined on each voting space, and the voting space associated with the true moving direction is selected in accordance with information as to the maximal value on the maximal point.

**13.** An image measurement method comprising:

a first step of determining a response intensity associated with a motion parallax, which is a positional difference between two measuring positions at mutually different two measuring times, of an arbitrary measuring point in a predetermined measurement space, in accordance with two images obtained through viewing the measurement space from a predetermined observation point at mutually different two measuring times; and a second step of voting the response intensity determined in the first step for coordinates associated with the measuring point and the motion parallax in a voting space, said coordinates being defined by a physical quantity indexing a shortest distance from the observation point to a measuring plane, including the measuring point, at one measuring time of the two measuring times, and an azimuth of the measuring plane;

wherein the first step and the second step are effected by a plurality of number of times on a plurality of measuring points in the. measurement space.

**14.** An image measurement method according to claim 13, wherein said image measurement method further comprises a third step of determining an azimuth of a measuring plane including a plurality of measuring points joining a voting for a maximal point and/or a physical quantity indexing a shortest distance from the observation point to the measuring plane at one measuring time of the two measuring times in such a manner that a maximal point wherein a value by said voting offers a maximal value is determined in the voting space.

**15.** An image measurement method comprising :

a first step of setting up in form of a parameter a moving direction of an arbitrary measuring point appearing on an image obtained through viewing a predetermined measurement space from a predetermined observation point inside the measurement space, said moving direction being relative with respect to the observation point between mutually different two measuring times; a second step of determining a response intensity associated with a motion parallax, which is a positional difference between two measuring positions at the two measuring times on the measuring point, in accordance with two images obtained through viewing the measurement space from the observation point at the two measuring times; and a third step of voting the response intensity determined in the second step for coordinates associated with the measuring point and the motion parallax in a voting space according to the parameter set up in the first step, said coordinates being defined by a physical quantity indexing a shortest distance from the observation point to the measuring plane at one measuring time of the two measuring times, including the measuring point, and an azimuth of the measuring plane;

wherein the second step and the third step, of the first to third steps, are effected by a plurality of number of times on a plurality of measuring points in the measurement space, while a value of the parameter is altered in the first step.

**16.** An image measurement method according to claim 15, wherein said image measurement method further comprises a fourth step of determining a true moving direction, and of determining an azimuth of a measuring plane including a plurality of measuring points joining a voting for a maximal point determined on a voting space associated with the true moving direction, and/or a shortest distance from the observation point to the measuring plane at one measuring time of the two measuring times, in such a manner that a maximal point wherein a value by said voting offers a maximal value is determined on each voting space, and a voting space associated with the true moving direction relative to the observation point on the measuring point is selected in accordance with information as to the maximal value on the maximal point.

**17.** An image measurement apparatus comprising :

a parameter setting unit for setting up coordinates in a voting space in form of a parameter, said coordinates being defined by a physical quantity indexing a superposing time in which a measuring plane, including an arbitrary measuring point appearing on an image obtained through viewing a predetermined measurement space from a predetermined observation point inside the measurement space, is superposed on the observation point, and an azimuth $n_s$ of the measuring plane, in a moving continuous state wherein it is expected that a movement of the measuring point appearing on an image obtained through viewing the measurement space from the observation point inside the measurement space, said measuring point being relative with respect to the observation point, is continued in a direction identical to a moving direction relative with respect to the observation point between mutually different two measuring times on the measuring point and at a velocity identical to a moving velocity between said two measuring times;

a motion parallax operating unit for determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ of the measuring point after an infinite time elapses in the moving continuous state, and the coordinates in the voting space, which is set up in said parameter setting unit;

a response intensity operating unit for determining a response intensity associated with the motion parallax $\tau$ of the measuring point in accordance with two images obtained through viewing the measurement space from the observation point at the two measuring times; and

a voting unit for voting the response intensity determined in said response intensity operating unit for the coordinates in the voting space, which is set up in said parameter setting unit,

wherein said motion parallax operating unit, said response intensity operating unit, and said voting unit perform operations by a plurality of number of times on a plurality of measuring points in the measurement space, while a value of the parameter is altered in said parameter setting unit.

**18.** An image measurement apparatus comprising :

a first parameter setting unit for setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second parameter setting unit for setting up coordinates in a voting space according to the first parameter in form of a second parameter, said coordinates being defined by a physical quantity indexing a superposing time in which a measuring plane including the measuring point is superposed on the observation point, and an azimuth $n_s$ of the measuring plane;

a motion parallax operating unit for determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ set up in said first parameter setting unit, and the coordinates in the voting space, which is set up in said second parameter setting unit;

a response intensity operating unit for determining a response intensity associated with the motion parallax $\tau$ of the measuring point in accordance with two images obtained through viewing the measurement space from the observation point at the two measuring times; and

a voting unit for voting the response intensity determined in said response intensity operating unit for the coordinates in the voting space according to the first parameter, said coordinates being set up in the second parameter setting unit,

wherein said motion parallax operating unit, said response intensity operating unit, and said voting unit perform operations by a plurality of number of times on a plurality of measuring points in the measurement space, while values of the parameters are altered in the first parameter setting unit and said second parameter setting unit.

**19.** An image measurement apparatus comprising :

a parameter setting unit for setting up coordinates in a voting space in form of a parameter, said coordinates being defined by a physical quantity indexing a shortest distance between a predetermined observation point inside a predetermined measurement space for observation of the measurement space and a measuring plane, including an arbitrary measuring point appearing on an image obtained through viewing the measurement space from the observation point inside the measurement space, at one measuring time of mutually different two measuring times, and an azimuth $n_s$ of the measuring plane;

a motion parallax operating unit for determining a motion parallax $\tau$, which is a positional difference between two measuring positions $p_0$ and $p_1$ at the two measuring times on the measuring point, in accordance with a measuring position $p_0$ at one measuring time of the two measuring times on the measuring point, a position

$p_{inf}$ of the measuring point after an infinite time elapses in a moving continuous state wherein it is expected that a movement of the measuring point is continued in a direction identical to a moving direction relative with respect to the observation point between mutually different two measuring times and at a velocity identical to a moving velocity between said two measuring times, and the coordinates in the voting space, which is set up in said parameter setting unit;;

a response intensity operating unit for determining a response intensity associated with the motion parallax $\tau$ of the measuring point in accordance with two images obtained through viewing the measurement space from the observation point at the two measuring times; and

a voting unit for voting the response intensity determined in said response intensity operating unit for the coordinates in the voting space, which is set up in said parameter setting unit;,

wherein said motion parallax operating unit, said response intensity operating unit, and said voting unit perform operations by a plurality of number of times on a plurality of measuring points in the measurement space, while a value of the parameter is altered in said parameter setting unit .

**20.** An image measurement apparatus comprising :

a first parameter setting unit for setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second parameter setting unit for setting up coordinates in a voting space according to the first parameter in form of a second parameter, said coordinates being defined by a physical quantity indexing a shortest distance from the observation point to a measuring plane including the measuring point at one measuring time of the two measuring times, and an azimuth $n_s$ of the measuring plane;

a motion parallax operating unit for determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ set up in said first parameter setting unit, and the coordinates in the voting space, which is set up in said second parameter setting unit;

a response intensity operating unit for determining a response intensity associated with the motion parallax $\tau$ of the measuring point in accordance with two images obtained through viewing the measurement space from the observation point at the two measuring times; and

a voting unit for voting the response intensity determined in said response intensity operating unit for the coordinates in the voting space according to the first parameter, said coordinates being set up in said second parameter setting unit,

wherein said motion parallax operating unit, said response intensity operating unit, and said voting unit perform operations by a plurality of number of times on a plurality of measuring points in the measurement space, while values of the parameters are altered in said first parameter setting unit and said second parameter setting unit.

**21.** An image measurement apparatus comprising :

a parameter setting unit for setting up in form of a parameter a motion parallax $\tau$, which is a positional difference between two measuring positions $p_0$ and $p_1$ at mutually different two measuring times, of an arbitrary measuring point appearing on an image obtained through viewing a predetermined measurement space from a predetermined observation point inside the measurement space;

a coordinates operating unit for determining coordinates in a voting space, said coordinates being defined by a physical quantity indexing a superposing time in which a measuring plane, including the measuring point, is superposed on the observation point, and an azimuth ns of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times, in accordance with a measuring position $p_0$ at one measuring time of said two measuring times on said measuring point, a position $p_{inf}$ of the measuring point after an infinite time elapses in the moving continuous state, and the motion parallax $\tau$ set up in said parameter setting unit;

a response intensity operating unit for determining a response intensity associated with the motion parallax $\tau$ of the measuring point, which is set up in said parameter setting unit;, in accordance with two images obtained through viewing the measurement space from the observation point at the two measuring times; and

a voting unit for voting the response intensity determined in said response intensity operating unit for the coordinates in the voting space, said coordinates being set up in said coordinates operating unit,

wherein said coordinates operating unit, said response intensity operating unit, and said voting unit perform operations by a plurality of number of times on a plurality of measuring points in the measurement space, while a value of the parameter is altered in said parameter setting unit.

**22.** An image measurement apparatus comprising :

a first parameter setting unit for setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second parameter setting unit for setting up in form of a second parameter a motion parallax $\tau$, which is a positional difference between two measuring positions $p_0$ and $p_1$ at the two measuring times on the measuring point;

a coordinates operating unit for determining coordinates in a voting space according to the first parameter, said coordinates being defined by a physical quantity indexing a superposing time in which a measuring plane, including the measuring point, is superposed on the observation point, and an azimuth $n_s$ of the measuring plane, in the moving continuous state, in accordance with a measuring position $p_0$ at one measuring time of said two measuring times on the measuring point, a position $p_{inf}$ set up in said first parameter setting unit, and the motion parallax $\tau$ set up in said second parameter setting unit;

a response intensity operating unit for determining a response intensity associated with the motion parallax $\tau$ of the measuring point, which is set up in said second parameter setting unit, in accordance with two images obtained through viewing the measurement space from the observation point at the two measuring times; and

a voting unit for voting the response intensity determined in said response intensity operating unit for the coordinates in the voting space according to the first parameter, said coordinates being set up in the coordinates operating unit,

wherein said coordinates operating unit, said response intensity operating unit, and said voting unit perform operations by a plurality of number of times on a plurality of measuring points in the measurement space, while values of the parameters are altered in the first parameter setting unit and said second parameter setting unit.

**23.** An image measurement apparatus comprising:

a parameter setting unit for setting up in form of a parameter a motion parallax $\tau$, which is a positional difference between two measuring positions $p_0$ and $p_1$ at mutually different two measuring times on the measuring point, of an arbitrary measuring point appearing on an image obtained through viewing a predetermined measurement space from a predetermined observation point inside the measurement space;

a coordinates operating unit for determining coordinates in a voting space, said coordinates being defined by a physical quantity indexing a shortest distance from the observation point to a measuring plane including the measuring point at one measuring time of the two measuring times, and an azimuth $n_s$ of the measuring plane, in accordance with a measuring position $p_0$ at one measuring time of said two measuring times on said measuring point, a position $p_{inf}$ of the measuring point after an infinite time elapses in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times, and the motion parallax $\tau$ set up in the first parameter setting unit;

a response intensity operating unit for determining a response intensity associated with the motion parallax $\tau$

of the measuring point, which is set up in said parameter setting unit, in accordance with two images obtained through viewing the measurement space from the observation point at the two measuring times; and
a voting unit for voting the response intensity determined in said response intensity operating unit for the coordinates in the voting space, said coordinates being set up in said coordinates operating unit,

wherein said coordinates parallax operating unit, said response intensity operating unit, and said voting unit perform operations by a plurality of number of times on a plurality of measuring points in the measurement space, while a value of the parameter is altered in said parameter setting unit .

**24.** An image measurement apparatus comprising :

a first parameter setting unit for setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;
a second parameter setting unit for setting up in form of a second parameter a motion parallax $\tau$, which is a positional difference between two measuring positions $p_0$ and $p_1$ at the two measuring times on the measuring point;
a coordinates operating unit for determining coordinates in a voting space according to the first parameter, said coordinates being defined by a physical quantity indexing a shortest distance from the observation point to a measuring plane including the measuring point at one measuring time of the two measuring times, and an azimuth $n_s$ of the measuring plane, in the moving continuous state, in accordance with a measuring position $p_0$ at one measuring time of said two measuring times on the measuring point, a position $p_{inf}$ set up in said first parameter setting unit, and the motion parallax $\tau$ set up in said second parameter setting unit;
a response intensity operating unit for determining a response intensity associated with the motion parallax $\tau$ of the measuring point, which is set up in said second parameter setting unit, in accordance with two images obtained through viewing the measurement space from the observation point at the two measuring times; and
a voting unit for voting the response intensity determined in said response intensity operating unit for the coordinates in the voting space according to the first parameter, said coordinates being set up in said coordinates operating unit,

wherein said coordinates operating unit, and said voting unit perform operations by a plurality of number of times on a plurality of measuring points in the measurement space, while values of the parameters are altered in the first parameter setting unit and said second parameter setting unit.

**25.** An image measurement apparatus comprising :

a response intensity operating unit for determining a response intensity associated with a motion parallax, which is a positional difference between two measuring positions at mutually different two measuring times, of an arbitrary measuring point in a predetermined measurement space, in accordance with two images obtained through viewing the measurement space from a predetermined observation point at mutually different two measuring times; and
a voting unit for of voting the response intensity determined in said response intensity operating unit for coordinates associated with the measuring point and the motion parallax in a voting space, said coordinates being defined by a physical quantity indexing a superposing time in which a measuring plane, including the measuring point, is superposed on the observation point, and an azimuth of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times;

wherein said response intensity operating unit and said voting unit perform operation by a plurality of number of times on a plurality of measuring points in the measurement space.

**26.** An image measurement apparatus according to claim 25, wherein said image measurement apparatus further comprises a detection unit for determining an azimuth of a measuring plane including a plurality of measuring points joining a voting for a maximal point and/or a physical quantity indexing a superposing time in which the measuring plane is superposed on the observation point in such a manner that a maximal point wherein a value by said voting in the voting space offers a maximal value is determined.

27. An image measurement apparatus comprising :

a parameter setting unit for setting up in form of a parameter a moving direction of an arbitrary measuring point appearing on an image obtained through viewing a predetermined measurement space from a predetermined observation point inside the measurement space, said moving direction being relative with respect to the observation point between mutually different two measuring times;
a response intensity operating unit for determining a response intensity associated with a motion parallax, which is a positional difference between two measuring positions at the two measuring times on the measuring point, in accordance with two images obtained through viewing the measurement space from the observation point at the two measuring times; and
a voting unit of voting the response intensity determined in said response intensity operating unit for coordinates associated with the measuring point and the motion parallax in a voting space according to the parameter set up in the parameter setting unit, said coordinates being defined by a physical quantity indexing a superposing time in which a measuring plane, including the measuring point, is superposed on the observation point, and an azimuth of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times;

wherein said response intensity operating unit and said voting unit perform operations by a plurality of number of times on a plurality of measuring points in the measurement space, while a value of the parameter is altered in said parameter setting unit.

28. An image measurement apparatus according to claim 27, wherein said image measurement apparatus further comprises a detection unit of determining a true moving direction relative to the observation point on the measuring point, and of determining an azimuth of a measuring plane including a plurality of measuring points joining a voting for a maximal point determined on a voting space associated with the true moving direction, and/or a physical quantity indexing a superposing time in which the measuring plane is superposed on the observation point, in such a manner that a maximal point wherein a value by a voting is determined on each voting space, and the voting space associated with the true moving direction is selected in accordance with information as to the maximal value on the maximal point.

29. An image measurement apparatus comprising:

a response intensity operating unit for determining a response intensity associated with a motion parallax, which is a positional difference between two measuring positions at mutually different two measuring times, of an arbitrary measuring point in a predetermined measurement space, in accordance with two images obtained through viewing the measurement space from a predetermined observation point at mutually different two measuring times; and
a voting unit for voting the response intensity determined in said response intensity operating unit for coordinates associated with the measuring point and the motion parallax in a voting space, said coordinates being defined by a physical quantity indexing a shortest distance from the observation point to a measuring plane, including the measuring point, at one measuring time of the two measuring times, and an azimuth of the measuring plane;

wherein said response intensity operating unit and said voting unit perform operations by a plurality of number of times on a plurality of measuring points in the measurement space.

30. An image measurement apparatus according to claim 29, wherein said measurement apparatus further comprises a detection unit for determining an azimuth of a measuring plane including a plurality of measuring points joining a voting for a maximal point and/or a physical quantity indexing a shortest distance from the observation point to the measuring plane at one measuring time of the two measuring times in such a manner that a maximal point wherein a value by said voting offers a maximal value is determined in the voting space.

31. An image measurement apparatus comprising :

a parameter setting-unit for setting up in form of a parameter a moving direction of an arbitrary measuring point appearing on an image obtained through viewing a predetermined measurement space from a predetermined observation point inside the measurement space, said moving direction being relative with respect to the observation point between mutually different two measuring times;

a response intensity operating unit for determining a response intensity associated with a motion parallax, which is a positional difference between two measuring positions at the two measuring times on the measuring point, in accordance with two images obtained through viewing the measurement space from the observation point at the two measuring times; and

a voting unit for voting the response intensity determined in said response intensity operating unit for coordinates associated with the measuring point and the motion parallax in a voting space according to the parameter set up in said parameter setting unit, said coordinates being defined by a physical quantity indexing a shortest distance from the observation point to the measuring plane at one measuring time of the two measuring times, including the measuring point, and an azimuth of the measuring plane;

wherein said response intensity operating unit and said voting unit perform operations by a plurality of number of times on a plurality of measuring points in the measurement space, while a value of the parameter is altered in said parameter setting unit .

32. An image measurement apparatus according to claim 31, wherein said image measurement apparatus further comprises a detection unit for determining a true moving direction, and determining an azimuth of a measuring plane including a plurality of measuring points joining a voting for a maximal point determined on a voting space associated with the true moving direction, and/or a shortest distance from the observation point to the measuring plane at one measuring time of the two measuring times, in such a manner that a maximal point wherein a value by said voting offers a maximal value is determined on each voting space, and a voting space associated with the true moving direction relative to the observation point on the measuring point is selected in accordance with information as to the maximal value on the maximal point.

33. An image measurement program storage medium storing an image measurement program comprising:

a first step of setting up coordinates in a voting space in form of a parameter, said coordinates being defined by a physical quantity indexing a superposing time in which a measuring plane, including an arbitrary measuring point appearing on an image obtained through viewing a predetermined measurement space from a predetermined observation point inside the measurement space, is superposed on the observation point, and an azimuth $n_s$ of the measuring plane, in a moving continuous state wherein it is expected that a movement of the measuring point appearing on an image obtained through viewing the measurement space from the observation point inside the measurement space, said measuring point being relative with respect to the observation point, is continued in a direction identical to a moving direction relative with respect to the observation point between mutually different two measuring times on the measuring point and at a velocity identical to a moving velocity between said two measuring times;

a second step of determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ of the measuring point after an infinite time elapses in the moving continuous state, and the coordinates in the voting space, which is set up in the first step;

a third step of determining a response intensity associated with the motion parallax $\tau$ of the measuring point in accordance with two images obtained through viewing the measurement space from the observation point at the two measuring times; and

a fourth step of voting the response intensity determined in the third step for the coordinates in the voting space, which is set up in the first step,

wherein the second step to the fourth step, of the first to fourth steps, are effected by a plurality of number of times on a plurality of measuring points in the measurement space, while a value of the parameter is altered in the first step.

**34.** An image measurement program storage medium storing an image measurement program comprising:

a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second step of setting up coordinates in a voting space according to the first parameter in form of a second parameter, said coordinates being defined by a physical quantity indexing a superposing time in which a measuring plane including the measuring point is superposed on the observation point, and an azimuth $n_s$ of the measuring plane;

a third step of determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ set up in the first step, and the coordinates in the voting space, which is set up in the second step;

a fourth step of determining a response intensity associated with the motion parallax $\tau$ of the measuring point in accordance with two images obtained through viewing the measurement space from the observation point at the two measuring times; and

a fifth step of voting the response intensity determined in the fourth step for the coordinates in the voting space according to the first parameter, said coordinates being set up in the second step,

wherein the third step to the fifth step, of the first to fifth steps, are effected by a plurality of number of times on a plurality of measuring points in the measurement space, while values of the parameters are altered in the first step and the second step.

**35.** An image measurement program storage medium storing an image measurement program comprising:

a first step of setting up coordinates in a voting space in form of a parameter, said coordinates being defined by a physical quantity indexing a shortest distance between a predetermined observation point inside a predetermined measurement space for observation of the measurement space and a measuring plane, including an arbitrary measuring point appearing on an image obtained through viewing the measurement space from the observation point inside the measurement space, at one measuring time of mutually different two measuring times, and an azimuth $n_s$ of the measuring plane;

a second step of determining a motion parallax $\tau$, which is a positional difference between two measuring positions $p_0$ and $p_1$ at the two measuring times on the measuring point, in accordance with a measuring position $p_0$ at one measuring time of the two measuring times on the measuring point, a position $p_{inf}$ of the measuring point after an infinite time elapses in a moving continuous state wherein it is expected that a movement of the measuring point is continued in a direction identical to a moving direction relative with respect to the observation point between mutually different two measuring times and at a velocity identical to a moving velocity between said two measuring times, and the coordinates in the voting space, which is set up in the first step;

a third step of determining a response intensity associated with the motion parallax $\tau$ of the measuring point in accordance with two images obtained through viewing the measurement space from the observation point at the two measuring times; and

a fourth step of voting the response intensity determined in the third step for the coordinates in the voting space, which is set up in the first step,

wherein the second step to the fourth step, of the first to fourth steps, are effected by a plurality of number of times on a plurality of measuring points in the measurement space, while a value of the parameter is altered in the first step.

**36.** An image measurement program storage medium storing an image measurement program comprising:

a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second step of setting up coordinates in a voting space according to the first parameter in form of a second parameter, said coordinates being defined by a physical quantity indexing a shortest distance from the observation point to a measuring plane including the measuring point at one measuring time of the two measuring times, and an azimuth $n_s$ of the measuring plane;

a third step of determining a motion parallax $\tau$, which is a positional difference between two measuring positions $p_0$ and $p_1$ at the two measuring times on the measuring point, in accordance with a measuring position $p_0$ at one measuring time of said two measuring times on said measuring point, a position $p_{inf}$ set up in the first step, and the coordinates in the voting space, which is set up in the second step;

a fourth step of determining a response intensity associated with the motion parallax $\tau$ of the measuring point in accordance with two images obtained through viewing the measurement space from the observation point at the two measuring times; and

a fifth step of voting the response intensity determined in the fourth step for the coordinates in the voting space according to the first parameter, said coordinates being set up in the second step,

wherein the third step to the fifth step, of the first to fifth steps, are effected by a plurality of number of times on a plurality of measuring points in the measurement space, while values of the parameters are altered in the first step and the second step.

**37.** An image measurement program storage medium storing an image measurement program comprising:

a first step of setting up in form of a parameter a motion parallax $\tau$, which is a positional difference between two measuring positions $p_0$ and $p_1$ at mutually different two measuring times, of an arbitrary measuring point appearing on an image obtained through viewing a predetermined measurement space from a predetermined observation point inside the measurement space;

a second step of determining coordinates in a voting space, said coordinates being defined by a physical quantity indexing a superposing time in which a measuring plane, including the measuring point, is superposed on the observation point, and an azimuth $n_s$ of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times, in accordance with a measuring position $p_0$ at one measuring time of said two measuring times on said measuring point, a position $p_{inf}$ of the measuring point after an infinite time elapses in the moving continuous state, and the motion parallax $\tau$ set up in the first step;

a third step of determining a response intensity associated with the motion parallax $\tau$ of the measuring point, which is set up in the first step, in accordance with two images obtained through viewing the measurement space from the observation point at the two measuring times; and

a fourth step of voting the response intensity determined in the third step for the coordinates in the voting space, said coordinates being set up in the second step,

wherein the second step to the fourth step, of the first to fourth steps, are effected by a plurality of number of times on a plurality of measuring points in the measurement space, while a value of the parameter is altered in the first step.

**38.** An image measurement program storage medium storing an image measurement program comprising:

a first step of setting up in form of a first parameter a moving direction v of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction v and at a velocity identical to a moving velocity between the two measuring times;

a second step of setting up in form of a second parameter a motion parallax $\tau$, which is a positional difference between two measuring positions $p_0$ and $p_1$ at the two measuring times on the measuring point;

a third step of determining coordinates in a voting space according to the first parameter, said coordinates being defined by a physical quantity indexing a superposing time in which a measuring plane, including the measuring point, is superposed on the observation point, and an azimuth $n_s$ of the measuring plane, in the moving continuous state, in accordance with a measuring position $p_0$ at one measuring time of said two measuring times on the measuring point, a position $p_{inf}$ set up in the first step, and the motion parallax $\tau$ set up in the second step;

a fourth step of determining a response intensity associated with the motion parallax $\tau$ of the measuring point, which is set up in the second step, in accordance with two images obtained through viewing the measurement space from the observation point at the two measuring times; and

a fifth step of voting the response intensity determined in the fourth step for the coordinates in the voting space according to the first parameter, said coordinates being set up in the third step,

wherein the third step to the fifth step, of the first to fifth steps, are effected by a plurality of number of times on a plurality of measuring points in the measurement space, while values of the parameters are altered in the first step and the second step.

**39.** An image measurement program storage medium storing an image measurement program comprising:

a first step of setting up in form of a parameter a motion parallax $\tau$, which is a positional difference between two measuring positions $p_0$ and $p_1$ at mutually different two measuring times on the measuring point, of an arbitrary measuring point appearing on an image obtained through viewing a predetermined measurement space from a predetermined observation point inside the measurement space;

a second step of determining coordinates in a voting space, said coordinates being defined by a physical quantity indexing a shortest distance from the observation point to a measuring plane including the measuring point at one measuring time of the two measuring times, and an azimuth $n_s$ of the measuring plane, in accordance with a measuring position $p_0$ at one measuring time of said two measuring times on said measuring point, a position $p_{inf}$ of the measuring point after an infinite time elapses in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times, and the motion parallax $\tau$ set up in the first step;

a third step of determining a response intensity associated with the motion parallax $\tau$ of the measuring point, which is set up in the first step, in accordance with two images obtained through viewing the measurement space from the observation point at the two measuring times; and

a fourth step of voting the response intensity determined in the third step for the coordinates in the voting space, said coordinates being set up in the second step,

wherein the second step to the fourth step, of the first to fourth steps, are effected by a plurality of number of times on a plurality of measuring points in the measurement space, while a value of the parameter is altered in the first step.

**40.** An image measurement program storage medium storing an image measurement program comprising:

a first step of setting up in form of a first parameter a moving direction $v$ of an arbitrary measuring point appearing on an image obtained through viewing a predetermined measurement space from a predetermined observation point inside the measurement space, said moving direction being relative with respect to the observation point between mutually different two measuring times, and setting up a position $p_{inf}$ of the measuring point after an infinite time elapses in a moving continuous state wherein it is expected that a movement of the measuring point is continued in a direction identical to the moving direction $v$ and at a velocity identical to a moving velocity between the two measuring times;

a second step of setting up in form of a second parameter a motion parallax $\tau$, which is a positional difference between two measuring positions $p_0$ and $p_1$ at the two measuring times on the measuring point;

a third step of determining coordinates in a voting space according to the first parameter, said coordinates being defined by a physical quantity indexing a shortest distance from the observation point to a measuring plane including the measuring point at one measuring time of the two measuring times, and an azimuth $n_s$ of the measuring plane, in the moving continuous state, in accordance with a measuring position $p_0$ at one measuring time of said two measuring times on the measuring point, a position $p_{inf}$ set up in the first step, and the motion parallax $\tau$ set up in the second step;

a fourth step of determining a response intensity associated with the motion parallax $\tau$ of the measuring point, which is set up in the second step, in accordance with two images obtained through viewing the measurement space from the observation point at the two measuring times; and

a fifth step of voting the response intensity determined in the fourth step for the coordinates in the voting space according to the first parameter, said coordinates being set up in the third step,

wherein the third step to the fifth step, of the first to fifth steps, are effected by a plurality of number of times on a plurality of measuring points in the measurement space, while values of the parameters are altered in the first step and the second step.

**41.** An image measurement program storage medium storing an image measurement program comprising:

a first step of determining a response intensity associated with a motion parallax, which is a positional difference between two measuring positions at mutually different two measuring times, of an arbitrary measuring point in a predetermined measurement space, in accordance with two images obtained through viewing the measurement space from a predetermined observation point at mutually different two measuring times; and

a second step of voting the response intensity determined in the first step for coordinates associated with the measuring point and the motion parallax in a voting space, said coordinates being defined by a physical quantity indexing a superposing time in which a measuring plane, including the measuring point, is superposed on the observation point, and an azimuth of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times;

wherein the first step and the second step are effected by a plurality of number of times on a plurality of measuring points in the measurement space.

**42.** An image measurement program storage medium according to claim 41, wherein said image measurement program further comprises a third step of determining an azimuth of a measuring plane including a plurality of measuring points joining a voting for a maximal point and/or a physical quantity indexing a superposing time in which the measuring plane is superposed on the observation point in such a manner that a maximal point wherein a value by said voting in the voting space offers a maximal value is determined.

**43.** An image measurement program storage medium storing an image measurement program comprising:

a first step of setting up in form of a parameter a moving direction of an arbitrary measuring point appearing on an image obtained through viewing a predetermined measurement space from a predetermined observation point inside the measurement space, said moving direction being relative with respect to the observation point between mutually different two measuring times;

a second step of determining a response intensity associated with a motion parallax, which is a positional difference between two measuring positions at the two measuring times on the measuring point, in accordance with two images obtained through viewing the measurement space from the observation point at the two measuring times; and

a third step of voting the response intensity determined in the second step for coordinates associated with the measuring point and the motion parallax in a voting space according to the parameter set up in the first step, said coordinates being defined by a physical quantity indexing a superposing time in which a measuring plane, including the measuring point, is superposed on the observation point, and an azimuth of the measuring plane, in a moving continuous state wherein it is expected that a movement of the measuring point, said measuring point being relative with respect to the observation point, is continued in a direction identical to a moving direction relative with respect to the observation point between the two measuring times on the measuring point and at a velocity identical to a moving velocity between the two measuring times;

wherein the second step and the third step, of the first to third steps, are effected by a plurality of number of times on a plurality of measuring points in the measurement space, while a value of the parameter is altered in the first step.

**44.** An image measurement program storage medium according to claim 43, wherein said image measurement program further comprises a fourth step of determining a true moving direction relative to the observation point on the measuring point, and of determining an azimuth of a measuring plane including a plurality of measuring points joining a voting for a maximal point determined on a voting space associated with the true moving direction, and/ or a physical quantity indexing a superposing time in which the measuring plane is superposed on the observation point, in such a manner that a maximal point wherein a value by a voting is determined on each voting space, and the voting space associated with the true moving direction is selected in accordance with information as to the maximal value on the maximal point.

**45.** An image measurement program storage medium storing an image measurement program comprising:

a first step of determining a response intensity associated with a motion parallax, which is a positional difference between two measuring positions at mutually different two measuring times, of an arbitrary measuring point in a predetermined measurement space, in accordance with two images obtained through viewing the measurement space from a predetermined observation point at mutually different two measuring times; and
a second step of voting the response intensity determined in the first step for coordinates associated with the measuring point and the motion parallax in a voting space, said coordinates being defined by a physical quantity indexing a shortest distance from the observation point to a measuring plane, including the measuring point, at one measuring time of the two measuring times, and an azimuth of the measuring plane;

wherein the first step and the second step are effected by a plurality of number of times on a plurality of measuring points in the measurement space.

**46.** An image measurement program storage medium according to claim 45, wherein said image measurement program further comprises a third step of determining an azimuth of a measuring plane including a plurality of measuring points joining a voting for a maximal point and/or a physical quantity indexing a shortest distance from the observation point to the measuring plane at one measuring time of the two measuring times in such a manner that a maximal point wherein a value by said voting offers a maximal value is determined in the voting space.

**47.** An image measurement program storage medium storing an image measurement program comprising:

a first step of setting up in form of a parameter a moving direction of an arbitrary measuring point appearing on an image obtained through viewing a predetermined measurement space from a predetermined observation point inside the measurement space, said moving direction being relative with respect to the observation point between mutually different two measuring times;
a second step of determining a response intensity associated with a motion parallax, which is a positional difference between two measuring positions at the two measuring times on the measuring point, in accordance with two images obtained through viewing the measurement space from the observation point at the two measuring times; and
a third step of voting the response intensity determined in the second step for coordinates associated with the measuring point and the motion parallax in a voting space according to the parameter set up in the first step, said coordinates being defined by a physical quantity indexing a shortest distance from the observation point to the measuring plane at one measuring time of the two measuring times, including the measuring point, and an azimuth of the measuring plane;

wherein the second step and the third step, of the first to third steps, are effected by a plurality of number of times on a plurality of measuring points in the measurement space, while a value of the parameter is altered in the first step.

**48.** An image measurement program storage medium according to claim 47, wherein said image measurement program further comprises a fourth step of determining a true moving direction, and of determining an azimuth of a measuring plane including a plurality of measuring points joining a voting for a maximal point determined on a voting space associated with the true moving direction, and/or a shortest distance from the observation point to the measuring plane at one measuring time of the two measuring times, in such a manner that a maximal point wherein a value by said voting offers a maximal value is determined on each voting space, and a voting space associated with the true moving direction relative to the observation point on the measuring point is selected in accordance with information as to the maximal value on the maximal point.

# Fig. 1

LOCAL MOTION

EP 1 178 436 A2

# Fig. 2

300

302

301a

301b

303

301

304

# Fig. 3

311 310 313 321

CPU | MAGNETIC DISK CONTROLLER

312 314 322

RAM | FLOPPY DISK DRIVER

315 323

MO DRIVER

316 304

MOUSE CONTROLLER

317 303

KEYBOARD CONTROLLER

318 302

DISPLAY CONTROLLER

319 400

COMMUNICATION BOARD

320 11

IMAGE INPUT BOARD | CAMERA

## Fig. 4

EP 1 178 436 A2

# Fig. 5

# Fig. 6

# Fig. 7

# Fig. 8

# Fig. 9

Fig. 10(A)

Fig. 10(B)

EP 1 178 436 A2

# Fig. 11

CYLINDRICAL
ARRANGEMENT

# Fig. 12

# Fig. 13

# Fig. 14

Fig. 15

# Fig. 16

## Fig. 17(A)            Fig. 17(B)            Fig. 17(C)

CANDIDATES OF PLANAR AZIMUTH ($n_s$)

$p_0$

$\tau$

$p_1$

$p_{Inf} = v$

SMALL CIRCLE TRANSFORMATION

$n d_s$

$n d_{s0}$

$n_{s0}$

$n d_s$

$n d_s$

$0$

$n d_s$

$p_0$

$R$

$n d_0$

EP 1 178 436 A2

# Fig. 18

$_n d_s$

UPPER LIMIT ←

CYLINDRICAL ARRANGEMENT

$_n d_s$

$_n d_{s0}$

$n_{s0}$

EP 1 178 436 A2

95

# Fig.111(A)

501 — $P_{inf}$ SET UNIT ($P_{inf}=v$)

502 — SCAN UNIT FOR PIXEL No.i

503 — SCAN UNIT FOR ELEMENT No.j

504 — $_iP_0$ OUTPUT UNIT

506 — $n^t_{cj}$ OUTPUT UNIT

505 — $n_{sj}$ OUTPUT UNIT

507 — $_{ij}^t$ TABLE PRODUCING UNIT

$P_{inf}$

$_iP_0$

$n^t_{cj}$

$n_{sj}$

# Fig.111(B)

551 — CAMERA

552 — SCAN UNIT FOR PIXEL No.i

553 — SCAN UNIT FOR ELEMENT No.j

554 — UNIT FOR CUTTING AND BRINGING DOWN IMAGE ON LOCAL AREA TAKING $_iP_0$ AS CENTER

IMAGE ON LOCAL AREA AT TIME $t_0$

IMAGE ON LOCAL AREA AT TIME $t_1$

555 — $_{ij}^t$ TABLE

556 — MOTION PARALLAX DETECTION UNIT

557 — CYLINDRICAL ARRANGEMENT VOTING UNIT

558 — PEAK EXTRACTION UNIT

$_{ij}^t$

INTENSITY

VOTING

$n^t_c$

$n^t_{cj}$

$n_{sj}$

$n_{s0}$

$n^t_{c0}$

# Fig.112

```
                    ( START )
                        │
          ┌─────────────────────────┐
          │       SET UP P_inf       │   (E-1α-1)
          └─────────────────────────┘
                        │
          ┌─────────────────────────┐
          │         i_min-1          │   (E-1α-2)
          └─────────────────────────┘
                        │
          ┌─────────────────────────┐
          │       INCREMENT i        │   (E-1α-3)
          └─────────────────────────┘
                        │
          ┌─────────────────────────┐
          │         j_min-1          │   (E-1α-4)
          └─────────────────────────┘
                        │
          ┌─────────────────────────┐
          │       INCREMENT j        │   (E-1α-5)
          └─────────────────────────┘
                        │
          ┌─────────────────────────┐
          │  OUTPUT iP_0 ,(n_sj,nt_cj)│  (E-1α-6)
          └─────────────────────────┘
                        │
          ┌─────────────────────────┐
          │      COMPUTE ij τ        │   (E-1α-7)
          └─────────────────────────┘
                        │
          ┌─────────────────────────┐
          │       STORE ij τ         │   (E-1α-8)
          └─────────────────────────┘
                        │
    NO  ◇─────────────────────────◇     (E-1α-9)
         │        j_max?          │
         ◇──────────┬────────────◇
                    │ YES
    NO  ◇─────────────────────────◇     (E-1α-10)
         │        i_max?          │
         ◇──────────┬────────────◇
                    │ YES
                ( END )
```

# Fig.113

START

| | |
|---|---|
| $i_{min}$-1 | (E-1 $\beta$-1) |
| INCREMENT $i$ | (E-1 $\beta$-2) |
| CUT AND BRING DOWN IMAGE ON LOCAL AREA | (E-1 $\beta$-3) |
| $j_{min}$-1 | (E-1 $\beta$-4) |
| INCREMENT $j$ | (E-1 $\beta$-5) |
| OUTPUT $_{ij}\mathcal{T}$ | (E-1 $\beta$-6) |
| COMPUTE RESPONSE INTENSITY | (E-1 $\beta$-7) |
| VOTING | (E-1 $\beta$-8) |

NO ← $j_{max}$? (E-1 $\beta$-9)

YES

NO ← $i_{max}$? (E-1 $\beta$-10)

YES

| | |
|---|---|
| EXTRACT PEAK | (E-1 $\beta$-11) |

END

# Fig.114(A)

| SCAN UNIT FOR PIXEL No.i | ~502 | SCAN UNIT FOR ELEMENT No.j | ~503 |

508 — SCAN UNIT FOR v PARAMETER

501 — $P_{inf}$ SET UNIT ($P_{inf}=v$)

504 — $iP_0$ OUTPUT UNIT → $iP_0$

506 — $nt_{cj}$ OUTPUT UNIT → $nt_{cj}$

505 — $n_{sj}$ OUTPUT UNIT → $n_{sj}$

507 — $ij^\tau$ TABLE PRODUCING UNIT

# Fig.114(B)

552 — SCAN UNIT FOR PIXEL No.i

559 — SCAN UNIT FOR v PARAMETER

553 — SCAN UNIT FOR ELEMENT No.j

557 — CYLINDRICAL ARRANGEMENT VOTING UNIT

558 — PEAK EXTRACTION UNIT

554 — UNIT FOR CUTTING AND BRINGING DOWN IMAGE ON LOCAL AREA TAKING $iP_0$ AS CENTER

- IMAGE ON LOCAL AREA AT TIME $t_0$
- IMAGE ON LOCAL AREA AT TIME $t_1$

551 — CAMERA

555 — $ij^\tau$ TABLE → $ij^\tau$

556 — MOTION PARALLAX DETECTION UNIT → INTENSITY

VOTING — $nt_c$, $nt_{cj}$, $n_{sj}$

PEAK EXTRACTION UNIT → $n_0$, $n_{s0}$, $nt_{c0}$

EP 1 178 436 A2

# Fig.115

```
              ( START )
    ┌──────────────────────────┐
    │         v_min-1          │   (E-2α-1)
    └──────────────────────────┘
    ┌──────────────────────────┐
    │       INCREMENT v        │   (E-2α-2)
    └──────────────────────────┘
    ┌──────────────────────────┐
    │       SET UP P_inf       │   (E-2α-3)
    └──────────────────────────┘
    ┌──────────────────────────┐
    │         i_min-1          │   (E-2α-4)
    └──────────────────────────┘
    ┌──────────────────────────┐
    │       INCREMENT i        │   (E-2α-5)
    └──────────────────────────┘
    ┌──────────────────────────┐
    │         j_min-1          │   (E-2α-6)
    └──────────────────────────┘
    ┌──────────────────────────┐
    │       INCREMENT j        │   (E-2α-7)
    └──────────────────────────┘
    ┌──────────────────────────┐
    │  OUTPUT iP_0 ,(n_sj,n^t_cj) │   (E-2α-8)
    └──────────────────────────┘
    ┌──────────────────────────┐
    │      COMPUTE _ij τ       │   (E-2α-9)
    └──────────────────────────┘
    ┌──────────────────────────┐
    │       STORE _ij τ        │   (E-2α-10)
    └──────────────────────────┘
  NO  <        j_max?        >     (E-2α-11)
              │ YES
  NO  <        i_max?        >     (E-2α-12)
              │ YES
  NO  <        v_max?        >     (E-2α-13)
              │ YES
            (  END  )
```

# Fig.116

START

| $v_{min}-1$ | $(E-2\beta-1)$ |

| INCREMENT v | $(E-2\beta-2)$ |

| $i_{min}-1$ | $(E-2\beta-3)$ |

| INCREMENT i | $(E-2\beta-4)$ |

| CUT AND BRING DOWN IMAGE ON LOCAL AREA | $(E-2\beta-5)$ |

| $j_{min}-1$ | $(E-2\beta-6)$ |

| INCREMENT j | $(E-2\beta-7)$ |

| OUTPUT$_{ij}\tau$ | $(E-2\beta-8)$ |

| COMPUTE RESPONSE INTENSITY | $(E-2\beta-9)$ |

| VOTING | $(E-2\beta-10)$ |

NO ← $j_{max}$? $(E-2\beta-11)$
YES

NO ← $i_{max}$? $(E-2\beta-12)$
YES

NO ← $v_{max}$? $(E-2\beta-13)$
YES

| EXTRACT PEAK | $(E-2\beta-14)$ |

END

# Fig.117(A)

SCAN UNIT FOR PIXEL No.i ~502

SCAN UNIT FOR ELEMENT No.j ~503

504~ $iP_0$ OUTPUT UNIT

509~ ${}_nd_{sj}$ OUTPUT UNIT

$n_{sj}$ OUTPUT UNIT ~505

501 $P_{inf}$ SET UNIT $(P_{inf}=v)$

$P_{inf}$

$iP_0$

${}_nd_{cj}$

$n_{sj}$

${}_{ij}\tau$ TABLE PRODUCING UNIT ~510

# Fig.117(B)

552 SCAN UNIT FOR PIXEL No.i

553 SCAN UNIT FOR ELEMENT No.j

567 CYLINDRICAL ARRANGEMENT VOTING UNIT

568

554 i   i   565 j

j

551 CAMERA

UNIT FOR CUTTING AND BRINGING DOWN IMAGE ON LOCAL AREA TAKING $iP_0$ AS CENTER

IMAGE ON LOCAL AREA AT TIME $t_0$

IMAGE ON LOCAL AREA AT TIME $t_1$

${}_{ij}\tau$ TABLE

${}_{ij}\tau$   566

MOTION PARALLAX DETECTION UNIT

INTENSITY

VOTING

${}_nd_s$

${}_nd_{sj}$

$n_{sj}$

PEAK EXTRACTION UNIT

$n_{s0}$

${}_nd_{s0}$

# Fig.118

```
                    ( START )

        |  SET UP P_inf  |        (E-3α-1)

        |    i_min-1     |        (E-3α-2)

        |  INCREMENT i   |        (E-3α-3)

        |    j_min-1     |        (E-3α-4)

        |  INCREMENT j   |        (E-3α-5)

   | OUTPUT iP_0 ,(n_sj,n d_sj) |  (E-3α-6)

        | COMPUTE _ij τ |        (E-3α-7)

        |  STORE _ij τ  |        (E-3α-8)

 NO  <    j_max?   >              (E-3α-9)
              YES
 NO  <    i_max?   >              (E-3α-10)
              YES
           ( END )
```

# Fig.119

```
                    ( START )
                         |
         ┌──────────────────────────────┐
         │          i_min-1             │        (E-3 β -1)
         └──────────────────────────────┘
                         |
   ┌──────>┌──────────────────────────────┐
   │       │         INCREMENT i          │        (E-3 β -2)
   │       └──────────────────────────────┘
   │                     |
   │       ┌──────────────────────────────┐
   │       │  CUT AND BRING DOWN          │        (E-3 β -3)
   │       │  IMAGE ON LOCAL AREA         │
   │       └──────────────────────────────┘
   │                     |
   │       ┌──────────────────────────────┐
   │       │         j_min-1              │        (E-3 β -4)
   │       └──────────────────────────────┘
   │                     |
   │ ┌────>┌──────────────────────────────┐
   │ │     │         INCREMENT j          │        (E-3 β -5)
   │ │     └──────────────────────────────┘
   │ │                   |
   │ │     ┌──────────────────────────────┐
   │ │     │        OUTPUT_ij^τ            │        (E-3 β -6)
   │ │     └──────────────────────────────┘
   │ │                   |
   │ │     ┌──────────────────────────────┐
   │ │     │  COMPUTE RESPONSE            │        (E-3 β -7)
   │ │     │  INTENSITY                   │
   │ │     └──────────────────────────────┘
   │ │                   |
   │ │     ┌──────────────────────────────┐
   │ │     │          VOTING              │        (E-3 β -8)
   │ │     └──────────────────────────────┘
   │ │                   |
   │ │  NO      ╱────────────────╲
   │ └───────<    j_max?           >        (E-3 β -9)
   │           ╲────────────────╱
   │                   | YES
   │  NO      ╱────────────────╲
   └────────<    i_max?           >        (E-3 β -10)
              ╲────────────────╱
                      | YES
          ┌──────────────────────────────┐
          │        EXTRACT PEAK          │        (E-3 β -11)
          └──────────────────────────────┘
                      |
                  ( END )
```

## Fig.120(A)

| | |
|---|---|
| SCAN UNIT FOR PIXEL No.i  ~502 | SCAN UNIT FOR ELEMENT No.j  ~503 |

504 ~ $_iP_0$ OUTPUT UNIT     509 ~ $_nd_{sj}$ OUTPUT UNIT     $n_{sj}$ OUTPUT UNIT  ~505

508     501

SCAN UNIT FOR v PARAMETER — v → $P_{inf}$ SET UNIT ($P_{inf}$=v) — $P_{inf}$ →     $_{ij}\tau$ TABLE PRODUCING UNIT  ~510

## Fig.120(B)

552     559     553     567     568

SCAN UNIT FOR PIXEL No.i     SCAN UNIT FOR v PARAMETER     SCAN UNIT FOR ELEMENT No.j

554     565

UNIT FOR CUTTING AND BRINGING DOWN IMAGE ON LOCAL AREA TAKING $_iP_0$ AS CENTER

$_{ij}\tau$ TABLE

CYLINDRICAL ARRANGEMENT VOTING UNIT

551

IMAGE ON LOCAL AREA AT TIME $t_0$

566

CAMERA

IMAGE ON LOCAL AREA AT TIME $t_1$

MOTION PARALLAX DETECTION UNIT     INTENSITY     VOTING     $_nd_s$     $_nd_{sj}$     $_in_{sj}$

PEAK EXTRACTION UNIT     $n_0$     $n_{s0}$     $_nd_{s0}$

EP 1 178 436 A2

# Fig.121

START

| $v_{min}-1$ | $(E\text{-}4\alpha\text{-}1)$ |

| INCREMENT v | $(E\text{-}4\alpha\text{-}2)$ |

| SET UP $P_{inf}$ | $(E\text{-}4\alpha\text{-}3)$ |

| $i_{min}-1$ | $(E\text{-}4\alpha\text{-}4)$ |

| INCREMENT i | $(E\text{-}4\alpha\text{-}5)$ |

| $j_{min}-1$ | $(E\text{-}4\alpha\text{-}6)$ |

| INCREMENT j | $(E\text{-}4\alpha\text{-}7)$ |

| OUTPUT $_iP_0$ , $(n_{sj}, _nd_{sj})$ | $(E\text{-}4\alpha\text{-}8)$ |

| COMPUTE $_{ij}\tau$ | $(E\text{-}4\alpha\text{-}9)$ |

| STORE $_{ij}\tau$ | $(E\text{-}4\alpha\text{-}10)$ |

NO — $j_{max}$? $(E\text{-}4\alpha\text{-}11)$

YES

NO — $i_{max}$? $(E\text{-}4\alpha\text{-}12)$

YES

NO — $v_{max}$? $(E\text{-}4\alpha\text{-}13)$

YES

END

# Fig.122

START

| | |
|---|---|
| $v_{min}-1$ | (E-4 $\beta$-1) |
| INCREMENT v | (E-4 $\beta$-2) |
| $i_{min}-1$ | (E-4 $\beta$-3) |
| INCREMENT i | (E-4 $\beta$-4) |
| CUT AND BRING DOWN IMAGE ON LOCAL AREA | (E-4 $\beta$-5) |
| $j_{min}-1$ | (E-4 $\beta$-6) |
| INCREMENT j | (E-4 $\beta$-7) |
| OUTPUT$_{ij}{}^{\tau}$ | (E-4 $\beta$-8) |
| COMPUTE RESPONSE INTENSITY | (E-4 $\beta$-9) |
| VOTING | (E-4 $\beta$-10) |

NO — $j_{max}$? (E-4 $\beta$-11)

YES

NO — $i_{max}$? (E-4 $\beta$-12)

YES

NO — $v_{max}$? (E-4 $\beta$-13)

YES

| EXTRACT PEAK | (E-4 $\beta$-14) |

END

EP 1 178 436 A2

## Fig.135(A)

$_{ij}{}^{\mathcal{T}}$ TABLE — 555

{ik$^j$} TABLE TRANSFORMATION UNIT

REWRITING WITH MOTION PARALLAX No.k

$_{ij}{}^k$ TABLE — 601

REARRANGEMENT OF $_{ij}{}^k$ TABLE

{ik$^j$} TABLE — 602

## Fig.135(B)

SCAN UNIT FOR MOTION PARALLAX No.k — 653

SCAN UNIT FOR PIXEL No.i — 652

k

{ik$^j$} TABLE — 602

i

{ik$^j$}

CYLINDRICAL ARRANGEMENT VOTING UNIT — 657

UNIT FOR CUTTING AND BRINGING DOWN IMAGE ON LOCAL AREA TAKING $_iP_0$ AS CENTER — 654

TRANSFORMATION UNIT FOR MOTION PARALLAX $_k\mathcal{T}$ — 655

VOTING

$n^{t}{}_{c}$

PEAK EXTRACTION UNIT — 658

$n_{s0}$

CAMERA — 651

IMAGE ON LOCAL AREA AT TIME $t_0$

IMAGE ON LOCAL AREA AT TIME $t_1$

$_k\mathcal{T}$

MOTION PARALLAX DETECTION UNIT — 656

INTENSITY

$n^{t}{}_{c0}$

# Fig.136

```
            ┌─────────────┐
            │    START    │
            └──────┬──────┘
                   │
      ┌────────────┴────────────┐
      │          E-1α           │      (F-1α-1)
      └────────────┬────────────┘
                   │
      ┌────────────┴────────────┐
      │ REWRITING ON ijk TABLE  │      (F-1α-2)
      └────────────┬────────────┘
                   │
      ┌────────────┴────────────┐
      │     REARRANGEMENT       │      (F-1α-3)
      │      ON {ikj}           │
      └────────────┬────────────┘
                   │
            ┌──────┴──────┐
            │     END     │
            └─────────────┘
```

# Fig.137

```
                    ( START )
                        |
        +------------------------------+
        |           i_min-1            |        (F-1 β-1)
        +------------------------------+
                        |
  +--->                 |
  |     +------------------------------+
  |     |        INCREMENT i           |        (F-1 β-2)
  |     +------------------------------+
  |                     |
  |     +------------------------------+
  |     |    CUT AND BRING DOWN        |        (F-1 β-3)
  |     |    IMAGE ON LOCAL AREA       |
  |     +------------------------------+
  |                     |
  |     +------------------------------+
  |     |           k_min-1           |        (F-1 β-4)
  |     +------------------------------+
  |                     |
  | +-->                |
  | |   +------------------------------+
  | |   |        INCREMENT k           |        (F-1 β-5)
  | |   +------------------------------+
  | |                   |
  | |   +------------------------------+
  | |   |     TRANSFORMATION           |        (F-1 β-6)
  | |   |       ONTO k τ               |
  | |   +------------------------------+
  | |                   |
  | |        NO    < COINCIDENCE? >             (F-1 β-7)
  | |                   | YES
  | |   +------------------------------+
  | |   |   COMPUTE RESPONSE           |        (F-1 β-8)
  | |   |   INTENSITY                  |
  | |   +------------------------------+
  | |                   |
  | |   +------------------------------+
  | |   |       OUTPUT {ik j}          |        (F-1 β-9)
  | |   +------------------------------+
  | |                   |
  | |   +------------------------------+
  | |   |        VOTING                |        (F-1 β-10)
  | |   +------------------------------+
  | |                   |
  | +---- NO   <  k_max?  >                      (F-1 β-11)
  |                     | YES
  +----- NO   <  i_max?  >                       (F-1 β-12)
                        | YES
        +------------------------------+
        |       EXTRACT PEAK           |        (F-1 β-13)
        +------------------------------+
                        |
                    (  END  )
```

EP 1 178 436 A2

# Fig.138(A)

$_{ij}\tau$ TABLE ~555

{$_{ik}$j} TABLE TRANSFORMATION UNIT

REWRITING WITH MOTION PARALLAX No.k

$_{ij}$k TABLE

~601

REARRANGEMENT OF $_{ij}$k TABLE

{$_{ik}$j} TABLE ~602

# Fig.138(B)

652

SCAN UNIT FOR PIXEL No.i

653

SCAN UNIT FOR MOTION PARALLAX No.k

659

SCAN UNIT FOR v PARAMETER

602

{$_{ik}$j} TABLE

657

CYLINDRICAL ARRANGEMENT VOTING UNIT

VOTING

658

PEAK EXTRACTION UNIT

$v_0$

$n_{s0}$

$n_{tc0}$

654

UNIT FOR CUTTING AND BRINGING DOWN IMAGE ON LOCAL AREA TAKING $_i$P$_0$ AS CENTER

TRANSFORMATION UNIT FOR MOTION PARALLAX $_k\tau$ ~655

656

651

CAMERA

IMAGE ON LOCAL AREA AT TIME $t_0$

IMAGE ON LOCAL AREA AT TIME $t_1$

MOTION PARALLAX DETECTION UNIT

INTENSITY

# Fig.139

```
        ┌─────────────┐
        (    START    )
        └──────┬──────┘
               │
   ┌───────────────────────┐
   │         E-2α           │   (F-2α-1)
   └───────────┬───────────┘
               │
   ┌───────────────────────┐
   │ REWRITING ON ijk TABLE │   (F-2α-2)
   └───────────┬───────────┘
               │
   ┌───────────────────────┐
   │   REARRANGEMENT        │   (F-2α-3)
   │   ON {ikj}             │
   └───────────┬───────────┘
               │
        ┌──────┴──────┐
        (     END     )
        └─────────────┘
```

# Fig.140

```
                    ( START )
                        │
        ┌───────────────┴───────────────┐
        │          v_min-1              │ ── (F-2 β -1)
        └───────────────┬───────────────┘
  ┌──────────────►      │
  │     ┌───────────────┴───────────────┐
  │     │         INCREMENT v            │ ── (F-2 β -2)
  │     └───────────────┬───────────────┘
  │     ┌───────────────┴───────────────┐
  │     │          i_min-1              │ ── (F-2 β -3)
  │     └───────────────┬───────────────┘
  │ ┌─────────────►     │
  │ │   ┌───────────────┴───────────────┐
  │ │   │         INCREMENT i            │ ── (F-2 β -4)
  │ │   └───────────────┬───────────────┘
  │ │   ┌───────────────┴───────────────┐
  │ │   │    CUT AND BRING DOWN          │ ── (F-2 β -5)
  │ │   │    IMAGE ON LOCAL AREA         │
  │ │   └───────────────┬───────────────┘
  │ │   ┌───────────────┴───────────────┐
  │ │   │          k_min-1              │ ── (F-2 β -6)
  │ │   └───────────────┬───────────────┘
  │ │ ┌──────────►      │
  │ │ │ ┌─────────────┴───────────────┐
  │ │ │ │         INCREMENT j          │ ── (F-2 β -7)
  │ │ │ └─────────────┬───────────────┘
  │ │ │ ┌─────────────┴───────────────┐
  │ │ │ │     TRANSFORMATION           │ ── (F-2 β -8)
  │ │ │ │     ONTO _k τ                │
  │ │ │ └─────────────┬───────────────┘
  │ │ │ NO  ◇ COINCIDENCE? ◇           ── (F-2 β -9)
  │ │ │            │ YES
  │ │ │ ┌─────────────┴───────────────┐
  │ │ │ │   COMPUTE RESPONSE           │ ── (F-2 β -10)
  │ │ │ │   INTENSITY                  │
  │ │ │ └─────────────┬───────────────┘
  │ │ │ ┌─────────────┴───────────────┐
  │ │ │ │       OUTPUT {ikj}           │ ── (F-2 β -11)
  │ │ │ └─────────────┬───────────────┘
  │ │ │ ┌─────────────┴───────────────┐
  │ │ │ │         VOTING               │ ── (F-2 β -12)
  │ │ │ └─────────────┬───────────────┘
  │ │ └──────────►    │
  │ │  NO   ◇    k_max?   ◇           ── (F-2 β -13)
  │ │            │ YES
  │ │  NO   ◇    i_max?   ◇           ── (F-2 β -14)
  │ │            │ YES
  │    NO   ◇    v_max?   ◇           ── (F-2 β -15)
  │            │ YES
  │     ┌───────────────┴───────────────┐
  │     │       EXTRACT PEAK            │ ── (F-2 β -16)
        └───────────────┬───────────────┘
                    ( END )
```

## Fig.141(A)

$_{ij}\tau$ TABLE — 565

{$_{ik}$j} TABLE TRANSFORMATION UNIT

REWRITING WITH MOTION PARALLAX No.k

$_{ij}$k TABLE

REARRANGEMENT OF $_{ij}$k TABLE

— 611

{$_{ik}$j} TABLE — 612

## Fig.141(B)

653 — SCAN UNIT FOR MOTION PARALLAX No.k

652 — SCAN UNIT FOR PIXEL No.i

i

k

612 — {$_{ik}$j} TABLE

{$_{ik}$j}

667 — CYLINDRICAL ARRANGEMENT VOTING UNIT

VOTING

$_n d_s$

668 — PEAK EXTRACTION UNIT

$_n s_0$

$_n d_{s0}$

654 — UNIT FOR CUTTING AND BRINGING DOWN IMAGE ON LOCAL AREA TAKING iP0 AS CENTER

665 — TRANSFORMATION UNIT FOR MOTION PARALLAX $_k\tau$

666 — $_k\tau$

651 — CAMERA

IMAGE ON LOCAL AREA AT TIME $t_0$

IMAGE ON LOCAL AREA AT TIME $t_1$

MOTION PARALLAX DETECTION UNIT

INTENSITY

# Fig.142

```
                 ┌─────────────┐
                 │    START    │
                 └─────────────┘
                        │
        ┌───────────────────────────────┐
        │            E-3α               │      (F-3α-1)
        └───────────────────────────────┘
                        │
        ┌───────────────────────────────┐
        │   REWRITING ON ijk TABLE      │      (F-3α-2)
        └───────────────────────────────┘
                        │
        ┌───────────────────────────────┐
        │       REARRANGEMENT           │      (F-3α-3)
        │         ON {ikj}              │
        └───────────────────────────────┘
                        │
                 ┌─────────────┐
                 │     END     │
                 └─────────────┘
```

# Fig.143

```
                    ( START )

              ┌──────────────────────┐
              │      i_min-1          │   (F-3 β -1)
              └──────────────────────┘

              ┌──────────────────────┐
              │     INCREMENT i       │   (F-3 β -2)
              └──────────────────────┘

              ┌──────────────────────┐
              │  CUT AND BRING DOWN   │   (F-3 β -3)
              │  IMAGE ON LOCAL AREA  │
              └──────────────────────┘

              ┌──────────────────────┐
              │      k_min-1          │   (F-3 β -4)
              └──────────────────────┘

              ┌──────────────────────┐
              │     INCREMENT k       │   (F-3 β -5)
              └──────────────────────┘

              ┌──────────────────────┐
              │   TRANSFORMATION      │   (F-3 β -6)
              │   ONTO _k τ           │
              └──────────────────────┘

        NO    ◇──────────────────────◇
        ◄─────│    COINCIDENCE?       │   (F-3 β -7)
              ◇──────────────────────◇
                      YES
              ┌──────────────────────┐
              │  COMPUTE RESPONSE     │   (F-3 β -8)
              │  INTENSITY            │
              └──────────────────────┘

              ┌──────────────────────┐
              │   OUTPUT {ikj}        │   (F-3 β -9)
              └──────────────────────┘

              ┌──────────────────────┐
              │      VOTING           │   (F-3 β -10)
              └──────────────────────┘

        NO    ◇──────────────────────◇
        ◄─────│       k_max?          │   (F-3 β -11)
              ◇──────────────────────◇
                      YES
        NO    ◇──────────────────────◇
        ◄─────│       i_max?          │   (F-3 β -12)
              ◇──────────────────────◇
                      YES
              ┌──────────────────────┐
              │    EXTRACT PEAK       │   (F-3 β -13)
              └──────────────────────┘

                    ( END )
```

EP 1 178 436 A2

## Fig.144(A)

$_{ij}{}^{\tau}$ TABLE ~565

{$_{ik}{}^{j}$} TABLE TRANSFORMATION UNIT

REWRITING WITH MOTION PARALLAX No.k

$_{ij}{}^{k}$ TABLE ~611

REARRANGEMENT OF $_{ij}{}^{k}$ TABLE

{$_{ik}{}^{j}$} TABLE ~612

## Fig.144(B)

652 — SCAN UNIT FOR PIXEL No.i

653 — SCAN UNIT FOR MOTION PARALLAX No.k

659 — SCAN UNIT FOR v PARAMETER

667

668

i

k

v

612 — {$_{ik}{}^{j}$} TABLE

{$_{ik}{}^{j}$}

CYLINDRICAL ARRANGEMENT VOTING UNIT

PEAK EXTRACTION UNIT

$v_0$

$n_{s0}$

$n d_{s0}$

654 — UNIT FOR CUTTING AND BRINGING DOWN IMAGE ON LOCAL AREA TAKING $_{i}P_0$ AS CENTER

TRANSFORMATION UNIT FOR MOTION PARALLAX $_{k}{}^{\tau}$ ~665

666

$_{k}{}^{\tau}$

$n d_s$

VOTING

651 — CAMERA

IMAGE ON LOCAL AREA AT TIME $t_0$

IMAGE ON LOCAL AREA AT TIME $t_1$

MOTION PARALLAX DETECTION UNIT

INTENSITY

# Fig.145

```
                ( START )
                    |
        +-----------------------+
        |        E-4α           |   (F-4α-1)
        +-----------------------+
                    |
        +-----------------------+
        | REWRITING ON ijk TABLE|   (F-4α-2)
        +-----------------------+
                    |
        +-----------------------+
        |    REARRANGEMENT      |   (F-4α-3)
        |    ON {ikj}          |
        +-----------------------+
                    |
                ( END )
```

# Fig.146

START

| | |
|---|---|
| $v_{min}$-1 | (F-4 $\beta$ -1) |
| INCREMENT v | (F-4 $\beta$ -2) |
| $i_{min}$-1 | (F-4 $\beta$ -3) |
| INCREMENT i | (F-4 $\beta$ -4) |
| CUT AND BRING DOWN IMAGE ON LOCAL AREA | (F-4 $\beta$ -5) |
| $k_{min}$-1 | (F-4 $\beta$ -6) |
| INCREMENT k | (F-4 $\beta$ -7) |
| TRANSFORMATION ONTO $_k\tau$ | (F-4 $\beta$ -8) |

NO ← COINCIDENCE? (F-4 $\beta$ -9)

YES

| | |
|---|---|
| COMPUTE RESPONSE INTENSITY | (F-4 $\beta$ -10) |
| OUTPUT $\{_{ik}j\}$ | (F-4 $\beta$ -11) |
| VOTING | (F-4 $\beta$ -12) |

NO ← $k_{max}$? (F-4 $\beta$ -13)

YES

NO ← $i_{max}$? (F-4 $\beta$ -14)

YES

NO ← $v_{max}$? (F-4 $\beta$ -15)

YES

| | |
|---|---|
| EXTRACT PEAK | (F-4 $\beta$ -16) |

END

# Fig.159

IMAGE ON LOCAL AREA
AT TIME $t_0$

$_ia_0(x,y)$

$_iP_0$

$\{_ia_0(x,y)\}$

MOTION PARALLAX $_k\tau$

MOTION PARALLAX DETECTION UNIT

$$RESPONSE = \sum_x \sum_y {}_ia_0(x,y)\, {}_ia_1(x-{}_k\tau_x, y-{}_k\tau_y)$$

RESPONSE

IMAGE ON LOCAL AREA
AT TIME $t_1$

$_ia_1(x,y)$

$_iP_0$

$\{_ia_1(x,y)\}$

EP 1 178 436 A2

# Fig. 160

$$_k\tau = \left(_k\tau_x, \; _k\tau_y\right)$$

Fig. 161(A)

Fig.161(B)

EP 1 178 436 A2

Fig. 162(A)

Fig. 162(B)

# Fig.163

| ADDRESS (i,j) | | CONTENTS $_{ij}\tau$ |
|:---:|:---:|:---:|
| 1 | 1 | $_{11}\tau$ |
| 1 | 2 | $_{12}\tau$ |
| 1 | . . . | . . . |
| 1 | j | $_{1j}\tau$ |
| 1 | . . . | . . . |
| 2 | 1 | $_{21}\tau$ |
| 2 | 2 | $_{22}\tau$ |
| 2 | . . . | . . . |
| 2 | j | $_{2j}\tau$ |
| 2 | . . . | . . . |
| . . . | . . . | . . . |
| . . . | . . . | . . . |
| i | 1 | $_{i1}\tau$ |
| i | 2 | $_{i2}\tau$ |
| i | . . . | . . . |
| i | j | $_{ij}\tau$ |
| i | . . . | . . . |
| . . . | . . . | . . . |
| . . . | . . . | . . . |

# Fig.164

V ↗

| ADDRESS (i,j) | | CONTENTS $\{_{ij}\tau\}$ |
|---|---|---|
| 1 | 1 | $_{11}\tau$ |
| 1 | 2 | $_{12}\tau$ |
| 1 | . . . | . . . |
| 1 | j | $_{1j}\tau$ |
| 1 | . . . | . . . |
| 2 | 1 | $_{21}\tau$ |
| 2 | 2 | $_{22}\tau$ |
| 2 | . . . | . . . |
| 2 | j | $_{2j}\tau$ |
| 2 | . . . | . . . |
| . . . | . . . | . . . |
| . . . | . . . | . . . |
| i | 1 | $_{i1}\tau$ |
| i | 2 | $_{i2}\tau$ |
| i | . . . | . . . |
| i | j | $_{ij}\tau$ |
| i | . . . | . . . |
| . . . | . . . | . . . |
| . . . | . . . | . . . |

# Fig.165

| ADDRESS (i,k) | | CONTENTS $\{ik^j\}$ |
|---|---|---|
| 1 | 1 | $\{11^j\}$ |
| 1 | 2 | $\{12^j\}$ |
| 1 | . . . | . . . |
| 1 | k | $\{1k^j\}$ |
| 1 | . . . | . . . |
| 2 | 1 | $\{21^j\}$ |
| 2 | 2 | $\{22^j\}$ |
| 2 | . . . | . . . |
| 2 | k | $\{2k^j\}$ |
| 2 | . . . | . . . |
| . . . | . . . | . . . |
| . . . | . . . | . . . |
| i | 1 | $\{i1^j\}$ |
| i | 2 | $\{i2^j\}$ |
| i | . . . | . . . |
| i | k | $\{ik^j\}$ |
| i | . . . | . . . |
| . . . | . . . | . . . |
| . . . | . . . | . . . |

# Fig.166

| ADDRESS (i,k) | | CONTENTS $\{ik^j\}$ |
|---|---|---|
| 1 | 1 | $\{11^j\}$ |
| 1 | 2 | $\{12^j\}$ |
| 1 | . . . | . . . |
| 1 | k | $\{1K^j\}$ |
| 1 | . . . | . . . |
| 2 | 1 | $\{21^j\}$ |
| 2 | 2 | $\{22^j\}$ |
| 2 | . . . | . . . |
| 2 | k | $\{2K^j\}$ |
| 2 | . . . | . . . |
| . . . | . . . | . . . |
| . . . | . . . | . . . |
| i | 1 | $\{i1^j\}$ |
| i | 2 | $\{i2^j\}$ |
| i | . . . | . . . |
| i | k | $\{ik^j\}$ |
| i | . . . | . . . |
| . . . | . . . | . . . |
| . . . | . . . | . . . |